(19) Europäisches Patentamt
European Patent Office
Office européen des brevets

(11) EP 2 852 646 B1

(12) **EUROPEAN PATENT SPECIFICATION**

(45) Date of publication and mention of the grant of the patent:
**12.07.2017 Bulletin 2017/28**

(21) Application number: **13723791.3**

(22) Date of filing: **20.05.2013**

(51) Int Cl.:
***C09J 4/00*** (2006.01) ***C09J 7/00*** (2006.01)
***C09J 7/02*** (2006.01)

(86) International application number:
**PCT/EP2013/060340**

(87) International publication number:
**WO 2013/174776 (28.11.2013 Gazette 2013/48)**

(54) **AN ARTICLE COMPRISING A FILM ON A CARRIER OR RELEASE SUBSTRATE**

GEGENSTAND ENTHALTEND EINEN FILM AUF EINEM TRÄGER ODER TRENNSUBSTRAT

ARTICLE CONTENANT UN FILM SUR UN SUPPORT OU SUBSTRAT DE DÉCOLLEMENT

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **23.05.2012 PCT/EP2012/059630**

(43) Date of publication of application:
**01.04.2015 Bulletin 2015/14**

(73) Proprietors:
- **Henkel IP & Holding GmbH**
  **40589 Düsseldorf (DE)**
- **Lohmann GmbH & Co. KG**
  **56567 Neuwied (DE)**
- **Henkel AG & Co. KGaA**
  **40589 Düsseldorf (DE)**

(72) Inventors:
- **MCARDLE, Ciaran**
  **Dublin 18 (IE)**
- **XIAO, Edward Schude**
  **Pudong**
  **Shanghai 200129 (CN)**
- **VAN WIJK, Kerstin**
  **40211 Düsseldorf (DE)**
- **ZHAO, Ligang**
  **40593 Düsseldorf (DE)**
- **SCHNEIDER, Anja**
  **40547 Düsseldorf (DE)**
- **HANSJOERG, Ander**
  **56170 Bendorf (DE)**
- **PETRICK, Patricia**
  **56355 Oberbacheim (DE)**
- **DOMANSKI, Reinhold**
  **56566 Neuwied (DE)**
- **SCHAFER, Vesna**
  **41470 Neuss (DE)**
- **SCHAFER, Sascha Wilhelm**
  **41470 Neuss (DE)**

(56) References cited:
**EP-A2- 2 154 214** **US-A- 5 677 376**
**US-A- 5 902 443** **US-B1- 6 294 629**
**US-B1- 6 475 331**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 2 852 646 B1

## Description

### Field of the Invention

The present invention relates to an article comprising a curable film on a carrier substrate and/or release substrate wherein the film comprises at least one specific cyanoacrylate monomer and at least one film forming (co)polymer.

### Background to the Invention

Adhesive tapes and labels are attractive products from a consumer compliance perspective in that they are easily manipulated and stored, and they find utility in a wide range of bonding and masking applications, including bonding electrical, electronic, aerospace, and audio/video components.

Pressure sensitive adhesives are common components of adhesive tapes. Pressure sensitive adhesives are viscoelastic materials and can be provided carrierless in the form of transfer tapes or carrier-based as single- or double-sided tapes. They remain permanently tacky for a long period of time, and need only minimum pressure to stick to a surface, even to difficult to bond surfaces like polyethylene or polypropylene. Normally, they can be removed without leaving any adhesive residues, and without destroying the joined parts.

Applications of prior art pressure sensitive adhesives are generally limited to operations in which the requirements in relation to bond strength and/or heat resistance are not exacting. Thus, there is a need for a heat resistant adhesive tape combining high initial tack and high structural bonding strength and exhibiting good adhesion to a broad variety of different substrates.

For example, U.S. Patent Publication No. 2012/0082818 to Nitto Denko Corporation discloses pressure sensitive adhesive tapes. In particular, the pressure sensitive adhesive tapes disclosed in U.S. 2012/0082818 comprise a silicone based release layer on to which is coated a water-dispersed pressure sensitive adhesive layer. The water-dispersed pressure sensitive adhesive layer contains an acrylic polymer and a tackifier resin dispersed in the water. The Pressure sensitive adhesive tapes disclosed in U.S. 2012/0082818 are free from any aromatic hydrocarbon based solvents, such as toluene. Consequently, volatile organic carbon (VOC) emissions from the tapes are minimised.

Prior art pressure sensitive adhesive tapes can be single- or double-sided. Double-sided pressure sensitive adhesive tapes, for example, are reported in U.S. Patent Publication No. US2012/0115405 to Nitto Denko Corporation. In this patent application the double sided tape consists of a substrate coated on a first side with a rubber based pressure sensitive adhesive and on a second side with an acrylic based pressure sensitive adhesive.

International Patent Publication No. WO2010/069800 to Tesa Se et al. describes a pressure sensitive adhesive consisting of a homogeneous mixture of at least one natural rubber component and at least one polyacrylate component in order to achieve improved properties in cohesion, aging and also in weathering resistance. The pressure sensitive adhesive may be utilised in a tape.

European Patent No. EP2283100 B1 to Tesa Se discloses a pressure sensitive adhesive mass comprising among others a mixture of a polymer blend of thermoplastic and/or non-thermoplastic elastomers with vinyl aromatic block copolymer and adhesive resin. The pressure sensitive adhesive may be utilised in a tape.

International Patent Publication No. WO2010/023229 to Loctite (R&D) Limited and Henkel AG & Co. KGaA discloses curable cyanoacrylate based films dispensable from a release substrate. One particular film disclosed consists of a combination of a neopentyl cyanoacrylate and a rubber component. The production process associated with this particular film is expensive due to the vapour pressure of neopentyl cyanoacrylate.

Guseva et al. (Russian Chemical Bulletin Volume 43, Issue 4, pp 595-598) describe conditions for the synthesis of functionalized 2-cyanoacrylates. Khrustalev et al (Russian Chemical Bulletin Volume 45, Issue 9, pp 2172-2176) disclose the synthesis of, and performed an X-ray structural study of, 1-adamantylmethyl 2-cyanoacrylate and 1,10-decanediol bis-2-cyanoacrylate.

In EP0470722 an instantaneous adhesive comprising neopentyl alpha-cyanoacrylate is described with favourable adhesive properties at high temperatures and also with whitening-preventing properties.

Notwithstanding the state of the art there remains a need for alternative adhesive tape formulations that exhibit improved coating properties on carrier and release substrates, exhibit high initial tack, and which show improved bonding strength. Accordingly, it would be desirable to provide an article, such as a (transfer) tape that has good storage stability, exhibits good adhesion to a wide variety of substrates, which is easy and cheap to manufacture, and which exhibits a combination of high initial tack and strong bond strengths.

Adhesive articles such as adhesive tapes, transfer tapes, labels and laminates, which have high flexibility and high bond strength, would be particularly advantageous for certain applications such as in the electronics industry for bonding components or in the textile industry for example as an alternative to stitching. In particular it is desirable to provide robust textile assemblies with durable joints, affording flexibility in design and aesthetics.

Adhesive articles such as adhesive tapes, transfer tapes, labels and laminates, which can be easily applied and cut by die cutting are highly desirable, for example in use in automated production processes. Adhesive articles such as adhesive tapes, transfer tapes, labels and laminates which are effective at bonding substrates such as textiles, are capable of withstanding high moisture environments, such as during washing, high temperatures, and physical strains such as those experienced in wash and drying cycles are highly desirable, for example in the manufacture of clothing.

Adhesive articles such as adhesive tapes, transfer tapes, labels and laminates find utility in a wide range of applications including bonding and masking applications, particularly in the building industry. However, exposure to moisture such as occurs in high humidity conditions and/or exposure to harsh environmental conditions often diminishes their applicability.

Adhesive articles such as adhesive tapes, transfer tapes, labels and laminates which are resilient in high moisture for example humid environments would be highly advantageous, as often in such environments, including bathrooms, the article may form a bond with a compromised bond strength, or the strength of that bond may deteriorate to an unsatisfactory extent over time.

Adhesive articles such as adhesive tapes, transfer tapes, labels and laminates which are effective at bonding ceramics, steel, wood, glass, rubber, and plastics etc. are highly desirable as often at least some of these substrates are difficult to bond with a strong and/or durable bond. This is especially the case when the environment may also compromise initial or aged bond strength, such as for example in environments where there are harsh conditions and/or exposure to moisture etc.

## Summary of the Invention

The present invention provides for adhesive articles such as adhesive tapes, transfer tapes, labels, laminates and the like.

In a first aspect the present invention provides for an article comprising a curable film on a release substrate and/or carrier substrate, wherein the film comprises:

(a) at least one cyanoacrylate monomer selected from compounds of formula (I)

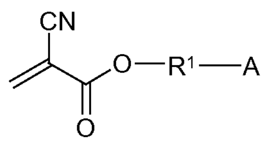

(I)

wherein $R^1$ is a divalent linking group comprising 1 to 10 carbon atoms, and A represents an $C_5$-$C_{50}$ aryl residue or a $C_2$-$C_{50}$ heteroaryl residue; and

(b) at least one film forming (co)polymer.

As used herein, the term aryl residue refers to an aromatic carbocyclic structure which is monocyclic or polycyclic (unfused or fused). Similarly, the term heteroaryl refers to an aromatic heterocyclic structure having as ring members atoms of at least two different elements. The heteroaryl residue may be monocyclic or polycyclic (unfused or fused). The carbon atoms of the aryl or heteroaryl residue may optionally be substituted one or more times, for example, with at least one of a cyano group, a nitro group, a halogen, $C_1$-$C_{10}$ alkyl, a $C_1$-$C_{10}$ ether, a $C_1$-$C_{10}$ thioether, a $C_1$-$C_{10}$ ester, $C_1$-$C_{10}$ ketone, $C_1$-$C_{10}$ ketimine, $C_1$-$C_{10}$ sulfone, $C_1$-$C_{10}$ sulfoxide, a $C_1$-$C_{10}$ primary amide or a $C_1$-$C_{20}$ secondary amide.

As used herein, the term release substrate refers to a material, which acts as protective covering for the curable film and prevents unwanted adhesion and contamination of the adhesive surface during shipping and handling. The release substrate may be coated on one or two sides with a release agent, and can be removed to release tacky materials such as pressure sensitive adhesives without deleteriously affecting the integrity of the curable film.

With reference to the article of the present invention, the release substrate may be paper, or plastic based (*e.g.* PET, PE, HDPE, PP) materials, which are optionally coated with a release agent.

Release agents allow the adhesive films of the article of the present invention to be easily transferred from the release substrate to the article of interest. The release agent may be selected from the group consisting of polyvinyl alcohol, clays, siloxanes, and combinations thereof. Suitable release agents, in particular siloxane-based release agents, are available under the trade name SILCOLEASE®.

As used herein, the term carrier substrate refers to a material onto which the curable film can be coated so as to stabilize the adhesive. The carrier substrate can add thickness to the article so as to improve handling. The carrier substrate differs from the release substrate in that it cannot be removed from the curable film without deleteriously

effecting the integrity of the curable film.

The carrier substrate may be flexible, for example a flexible sheet. The carrier substrate may be selected from polymeric films, metal foils, foams, cloths, and combinations thereof. For example, the carrier substrate may be selected from the group consisting of polyester, polypropylene, polyethylene, foam and paper.

Within the context of this specification the term (co)polymer refers to either a polymer derived from a single monomeric species or a polymer derived from two (or more) monomeric species.

The term film forming (co)polymer refers to a (co)polymer material which when formulated with the cyanoacrylate monomer of formula (I) provides a curable film.

The film-forming component may assist to solidify any liquid component of the composition. This increases the overall viscosity of the combined materials, which allows the combined materials to be retained on the transfer substrate. The film-forming component may comprise a film-forming agent which may be at least one elastomeric additive component. When solid cyanoacrylates are used there is usually less need to add film forming agent since the curable component will sit on the substrate after it is applied. Where compositions comprising mixtures of solid and liquid cyanoacrylates are used, a suitable amount of a film-forming component may be added to the composition as a compensation for the level of liquid curable component present. In particular for solid monomeric materials that may form non-coherent films for example due to crystalline nature on application, the film-forming components provide a suitable structure or scaffold to provide a coherent film. The coherent film may be achieved by a combination of film-forming components and co-curatives.

Advantageously, the curable films of the articles of the present invention exhibit pressure sensitive adhesion properties at 23 °C. Subsequent cure of the films can be initiated as appropriate. For example, an external stimulus such as heat or radiation (e.g. UV cure) may be applied to induce cure of the curable films when desired to do so.

As used herein, the term "pressure sensitive adhesion properties" refers to materials and formulations that are permanently tacky and adhere under finger pressure. More particularly said term is used for materials or formulations having a glass transition temperature ($T_g$) of less than 25 °C and a storage modulus G' of $3.3 \times 10^5$ Pa or less at 23 °C, wherein the glass transition temperature (Tg) is determined by Differential Scanning Calorimetry (DSC) and the storage modulus G' is determined by Dynamic Mechanical Analysis (DMA) at 1 Hz, and at 23 °C.

Many materials with high bond strength used in packaging and encapsulant technology (for example, epoxy and silicon based materials) are rigid. Lack of flexibility often precludes these materials from application in flexible optical devices. The application of liquid adhesives involves the formation of small droplets, which make an exact, thin distribution on a substrate difficult. The articles of the invention are typically highly flexible and the amount of adhesive applied to a substrate can be determined with high accuracy by the amount of the article of the invention utilized. This means the articles of the invention are particularly useful in applications where flexibility across the bond line is required.

Thin layer adhesives of high flexibility, high bond strength and a high refractive index are desired for flexible encapsulation, packaging and fixation of optical devices (sensors, diodes, fibers, lenses etc.), flexible (touch-) screens (LCDs, plasma screens etc.), in photovoltaic industry and chip bonding etc. and this can be achieved with the articles of the present invention, for example with tapes of the present invention.

The term divalent linking group refers to a moiety, which links the unsaturated oxygen of the ester functional group to the aryl residue.

With reference to the cyanoacrylate monomer of the article of the present invention the variable A may be $C_5$-$C_{50}$ aryl residue.

For example, the cyanoacrylate monomer may be selected from compounds of formula (II),

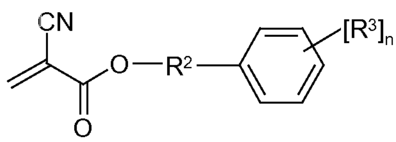

formula (II)

wherein n is 0 to 5, $R^2$ is a $C_{1-5}$ alkylene group, and each $R^3$, if present, is independently selected from $C_1$-$C_{10}$ alkyl, $C_1$-$C_{10}$ alkoxy, fluorine, chlorine, bromine, cyano and nitro.

As used herein, the term "$C_x$-$C_y$ alkyl" embraces $C_x$-$C_y$ unbranched alkyl, $C_x$-$C_y$ branched alkyl and combinations thereof. The term "$C_x$-$C_y$ alkylene group" should be construed as "$C_x$-$C_y$ alkyl".

The cyanoacrylate monomer may have a melting point at 1013.25 mbar of more than 25 °C.

With reference to the compounds of formula (II), n may be 0 to 2, $R^2$ may be a $C_{1-3}$ alkylene group, and each $R^3$, if present, is independently selected from $C_1$-$C_{10}$ alkyl, $C_1$-$C_{10}$ alkoxy, fluorine, chlorine, bromine, cyano and nitro. For example, n may be 0 to 2, $R^2$ may be a $C_{1-3}$ alkylene group, and each $R^3$, if present, may be independently selected from fluorine, chlorine, bromine, cyano and nitro. In another embodiment, n may be 0, and $R^2$ may be a $C_{1-5}$ alkylene group. For example, n may be 0, and $R^2$ may be a $C_{1-3}$ alkylene group

The cyanoacrylate monomer may be (2-phenylethyl) 2-cyanoacrylate, *i.e.* in formula (II) $R^2$ is $C_2H_4$, and n is 0.

The cyanoacrylate monomer of the general formula (I) may be present in an amount of at least 15 wt.%, based on the total weight of the film. For example, the cyanoacrylate monomer may be present in an amount from 20 wt.% to 80 wt.%, based on the total weight of the curable film.

The cyanoacrylate monomer of the general formula (I) may also be present in an amount of at least 10 wt.%, based on the total weight of the film. For example, the cyanoacrylate monomer may be present in an amount from 10 wt.% to 90 wt.%, based on the total weight of the curable film.

The film forming (co)polymer may be present in an amount from 20 wt.% to 85 wt.%, based on the total weight of the film.

The film forming (co)polymer may be present in an amount from 10 wt.% to 90 wt.%, based on the total weight of the film.

The film forming (co)polymer may be selected from the group consisting of poly(meth)acrylates, polyvinyl ethers, natural rubbers, polyisoprenes, polybutadienes, polyisobutylenes, polychloroprenes, butadieneacrylonitrile polymers, thermoplastic elastomers, styrene-isoprenes, styreneisoprene-styrene block copolymers, ethylene-propylene-diene polymers, styrene-butadiene polymers, poly-alpha-olefins, silicones, ethylene-containing copolymers, ethylene vinyl acetates, and combinations thereof. Preferably, the film forming (co)polymer may comprise poly(meth)acrylates and/or ethylene vinyl acetates.

The film forming (co)polymer may have a glass transition temperature (Tg), as determined by Differential Scanning Calorimetry (DSC), of less than 30 °C.

The film forming (co)polymer may be a (co)polymer having pressure sensitive adhesion properties at 23 °C.

The film forming (co)polymer may be a (co)opolymer of (meth)acrylic acid, (meth)acrylic acid esters and optionally other comonomers.

The film forming (co)polymer may have an acid number from about 0 to about 30. Preferably, the film forming (co)polymer has an acid number below 15. The acid number is the weight in milligrams of KOH required to neutralize the pendant carboxylate groups in one gram of the (co)polymer. The method of determining the acid number of the (co)polymer is described in the experimental section, *vide infra.*

The film forming (co)polymer may be an ethylene vinyl acetate copolymer. The ethylene vinyl acetate copolymer may have a vinyl acetate content of 50 wt.% to 98 wt.%, based on the total weight of the ethylene vinyl acetate copolymer.

The curable films of the articles of the present invention exhibit pressure sensitive adhesion properties at 23 °C. The curable film of the article of the present invention may have a storage modulus G', measured with Dynamic Mechanic Analysis (DMA) at 1 Hz and 23 °C, of about $3.3 \times 10^5$ Pa or less.

The curable film of the article of the present invention may return a tack value of at least 3 N in the standard loop tack test as measured by DIN EN 1719.

The curable film of the article of the present invention may have a glass transition temperature (Tg) of less than 10 °C as determined by Differential Scanning Calorimetry (DSC). For example, the curable film may have a glass transition temperature as determined by DSC ranging from -60 to +10 °C.

The curable film of the article of the present invention may have a 180° peel strength of 3 N/25mm to 50 N/25mm after 10 min as measured by DIN EN 1939 (Afera 5001) on steel substrate at 23 °C.

The curable film utilised in the present invention may have, in its uncured state, a modulus G' at room temperature of about $3.3 \times 10^5$ Pa or less, measured with DMA at 1 Hz, and may return a tack value of at least 3 N, preferably of at least 5 N, in the standard loop tack test as measured by DIN EN 1719.

The curable film utilised in the article of the present invention may have, in its uncured state, a modulus G' at room temperature of about $3.3 \times 10^5$ Pa or less, measured with DMA at 1 Hz, and may have a glass transition temperature (Tg) of less than 10 °C, for example from -60 to +10 °C as determined by Differential Scanning Calorimetry (DSC).

The curable film utilised in the article of the present invention may have, in its uncured state, a glass transition temperature (Tg) of less than 10 °C, for example from -60 to +10 °C as determined by Differential Scanning Calorimetry (DSC), and may return a tack value of at least 3 N, preferably of at least 5 N, in the standard loop tack test as measured by DIN EN 1719.

The curable film utilised in the article of the present invention may have, in its uncured state, a modulus G' at room temperature of about $3.3 \times 10^5$ Pa or less, measured with DMA at 1 Hz, a glass transition temperature (Tg) of less than 10 °C, for example from -60 to +10 °C as determined by Differential Scanning Calorimetry (DSC), and may return a tack value of at least 3 N, preferably of at least 5 N, in the standard loop tack test as measured by DIN EN 1719.

The curable film utilised in the article of the present invention may comprise, in addition to the solid cyanoacrylate of formula (I) a film forming (co)polymer matrix substance selected from the group consisting of poly(meth)acrylates, polyvinyl ethers, natural rubbers, polyisoprenes, polybutadienes, polyisobutylenes, polychloroprenes, butadieneacrylonitrile polymers, thermoplastic elastomers, styrene-isoprenes, styreneisoprene-styrene block copolymers, ethylene-propylene-diene polymers, styrene-butadiene polymers, poly-alpha-olefins, silicones, ethylene-containing copolymers, ethylene vinyl acetates, and combinations thereof. Preferably, the film forming (co)polymer matrix substance may comprise

poly(meth)acrylates and/or ethylene vinyl acetates.

With reference to the article of the present invention, the film may comprise, based on the total weight of the film:

(a) from 15 to 80 wt.% of one or more cyanoacrylate monomers selected from compounds of formula (I);
(b) from 20 to 85 wt.% of one or more film forming (co)polymers; and
(c) from 0 to 65 wt.% of one or more additives.

For example, the film may comprise, based on the total weight of the film:

(a) from 40 to 60 wt.% of one or more cyanoacrylate monomers selected from compounds of formula (I);
(b) from 40 to 60 wt.% of one or more film forming (co)polymers; and
(c) from 0 to 20 wt.% of one or more additives.

With reference to the article of the present invention, the film may comprise, based on the total weight of the film:

(a) from 10 to 90 wt.% of one or more cyanoacrylate monomers selected from compounds of formula (I);
(b) from 10 to 90 wt.% of one or more film forming (co)polymers; and
(c) from 0 to 65 wt.% of one or more additives.

The film of the article of the present invention may further comprise one or more additives selected from cyanoacrylate polymers, tackifiers, plasticizers, toughening agents, antioxidants, stabilizers, dyes, water absorbing agents and/or combinations thereof.

Suitable dyes include but are not limited to Naphthol Green, Coumarin, Carotene, m-Cresol purple, Cu(II)phthalocyanine, phenol, anthraquinone, benzodifuranone, polymethine, styryl, carbonium, triphenylmethane, diphenylmethane, triphendioxazine, phthalocyanine quinophthalone, naphthol, stilbene, formazan, xanthene, triarylmethane, carotenoid, flavonol, flavone, chroman, caramel poly(hydroxyethyl methacrylate) copolymers, riboflavin, and derivatives and mixtures thereof.

Examples of filler components include but are not limited to, for example, silicas, quartz, alumina, calcium, clays, talcs and other inorganic filler materials such as polycarbonates and other polymer powders, along with certain acrylate components.

Examples of stabiliser components, which may be suitably used in the adhesive film of the present invention include hydroquinone, pyrocatechol, resorcinol or derivatives thereof, phenols, sulfur dioxide, sulfuric acid, alkyl sulfonic acids, aromatic sulfonic acids, boranes and combinations thereof. For example, the stabiliser may be selected from methanesulfonic acid (MSA), $BF_3$, $SO_2$ and combinations thereof. Suitably, the stabiliser may be selected from camphor sulfonic acid (CSA) or hydroquinone and combinations thereof.

Preferable examples of dyes which may be suitably used in the adhesive film of the present invention include carotene Naphtol Green, Coumarin, m-Cresol purple, Cu(II)phthalocyanine.

Cyanoacrylate compositions are typically relatively sensitive to certain materials for example nucleophiles as these tend to react with the cyanoacrylate component. However, the curable film of the present invention is quite robust and not as sensitive to nucleophiles as might be expected.

This unexpected result may be used in many ways. One of many ways is the optical component industry. Many colour-imparting components (often referred to as colourants, dyes and pigments) used for example in electronic or optical components or devices, such as LEDs, handheld devices and LCDs contain nucleophilic groups like -OH, -NH etc. The curable film of the invention can thus surprisingly include components that comprise nucleophilic groups such as colour-imparting components without deleteriously affecting initial or aged bond performance. This means that the invention can be utilised in applications where a colour-imparting component having one or more nucleophilic groups is part of the curable film and thus the articles of the invention are easily used in a range of applications including in optical devices.

In one embodiment of the invention the article of the invention is at least translucent and is desirably transparent. Transparent materials such as transparent tapes used in optoelectronics and optical packaging (lenses, encapsulants etc.) should provide a maximum in refractive index. The articles of the invention can outperform existing high refractive index tapes (for example some current commercially available products have a refractive index value of 1.47). Desirable refractive index values for the cured form of the curable film are in the range from about 1.45 to about 1.6. Preferable refractive index values for the cured form of the curable film are in the range from about 1.47 to about 1.55. The refractive index can be even further increased by admixing other polymers or exchanging the film-forming polymer.

Liquid adhesives as such form droplets. The size of these droplets may vary and with it the amount of adhesive that is applied. To apply exactly required amounts of an adhesive which is in liquid form can be difficult, and a further challenge is even spreading on the applied adhesive surface which can be impossible. The layer of adhesive is often

thick, not flexible enough, even brittle and this results in lesser bond strengths. The advantage of a liquid adhesive lies in its bond strength.

Articles of the present invention, which comprise a curable film, can be manufactured to be thin and flexible, they are regular in shape and for example may have an even surface, can be repositioned and cut in any shape or form required (for example using die-cutting). For such reasons adhesive articles of the present invention such as tapes are preferred for some applications.

The development of articles such as tapes, which provide optical clarity, flexibility and high bond strength simultaneously, remains a challenge. Consequently, liquid adhesives, which provide high bond strength, are often used, for example in electronic devices such as mobile phones that are exposed to mechanical stress, impact or heat. Desirably, the article of the present invention, for example in the form of a tape, is thin. An article of the invention can demonstrate high bond strength, flexibility, optical clarity, refractive index and can be die-cut.

Indeed, not only can the articles of the invention be utilised in the applications above but also they have been found to be suitable for a whole range of substrates such as glass and other substrates including anodized aluminium, PC/ABS and others that are frequently used in devices such as optical components. The bond provided by the present invention is typically better than that of pre-existing tapes.

The article of the invention for example a tape is not only thin but also provides a strong bond at the same time while maintaining its flexibility.

This combination of features makes it highly applicable in applications where flexibility is required for example when bonding flexible substrates such as in laminates and in the textile manufacturing industry. Sometimes it is desirable to avoid the use of stitches and seams for aesthetic or other reasons (for example stitch free seams in sports clothing, and footwear such as running and hiking shoes).

A tape spreads the mechanical stress over a larger surface, no weaknesses due to puncturing with a thread are found. Examples where function is the primary criterion, are high performance textiles/laminates used for applications such as parachutes, military clothing, bullet proof vests, sports clothing and sports equipment, automotive and agricultural textiles.

Many hotmelts used in lamination processes suffer from several drawbacks. They need to be applied hot (>100°C), once applied, repositioning is not possible any more and some polyurethane based hotmelts tend to have an unpleasant odour. Hotmelts are liquids, and as described above, the provision of alternative adhesive articles such as tapes is desirable.

In contrast to these disadvantages the articles of the present invention such as tapes, have a regular thickness, before lamination and further processing at a later point is possible without loss of performance. Furthermore, high temperatures during the application process are not needed and an unpleasant odour during the manufacturing process is avoided.

Time consuming manufacturing processes can be avoided by activation of the article of the invention such as a tape after relatively short exposure to temperature and pressure (hot press). Tests showed that under the right conditions, impulse times in the range of seconds give extremely narrow, strong bonds.

Still today the most common way to fix articles such as appliances to a mounting surface, for example in bathrooms and kitchens is to drill holes in a mounting surface such as walls, ceilings and tiles for a fastener such as screws.

In contrast to many commercially available adhesives, high humidity environments accelerate the curing process of adhesive articles of the present invention on many different substrates (metal, glass, ceramic, aluminium etc.). This is ideal for bathroom, kitchen, swimming pool, outdoor applications etc.

On ceramic and metal surfaces at different temperatures and relative humidities a tape according to the present invention outperformed commercially available adhesive products in tensile strength tests. Desirably, many articles of the present invention were found to increase in bond strength under conditions of high temperature and humidity.

Other disadvantages of liquid formulations can include the requirement of an additional dispensing aid such as a dispensing container, nozzle or adapter. The amount of adhesive used when applying liquid formulations exceeds by far the amount needed using a tape of the invention. Finally, the curing time of liquid adhesives is quite long.

Advantageously adhesive articles of the present invention avoid waste, only a minimum reactive material is used, and pre-cutting such as die-cutting allows the required shape to be cut from a length of tape. Residues of the tape can be easily removed from walls and tiles by cleaning them with ethyl acetate. These features make products of the invention very versatile and desirable.

With reference to the article of the present invention, the weight ratio of cyanoacrylate monomers of the formula (I) to film forming (co)polymers in the film may be from 1:8 to 8:1. Suitably, the weight ratio of cyanoacrylate monomers of the formula (I) to film forming (co)polymers in the film may be from 1:4 to 4:1.

With reference to the article of the present invention the curable film may comprise, based on the total weight of the curable film:

(a) from 10 to 90, for example 15 to 80 wt.% of one or more cyanoacrylate monomers selected from compounds of

formula (I);
(b) from 10 to 90, for example 20 to 85 wt.% of one or more film forming (co)polymers, wherein said film forming copolymer has pressure sensitive adhesion properties at 23 °C; and
(c) from 0 to 65 wt.% of one or more additives.

With reference to the article of the present invention the curable film may comprise, based on the total weight of the curable film:

(a) from 10 to 90, for example 15 to 80 wt % of (2-phenylethyl) 2-cyanoacrylate;
(b) from 10 to 90, for example 20 to 85 wt% of one or more film forming (co)polymers; and
(c) from 0 to 65 wt.% of one or more additives.

With reference to the article of the present invention the curable film may comprise, based on the total weight of the curable film:

(a) from 10 to 90, for example 15 to 80 wt % of (2-phenylethyl) 2-cyanoacrylate;
(b) from 10 to 90, for example 20 to 85 wt % of one or more film forming (co)polymers, wherein said film forming copolymer has pressure sensitive adhesion properties at 23 °C; and
(c) from 0 to 65 wt.% of one or more additives.

With reference to the article of the present invention, the film may comprise, based on the total weight of the film:

(a) from 10 to 90, for example 15 to 80 wt.% of one or more cyanoacrylate monomers selected from compounds of formula (I);
(b) from 10 to 90 for example 20 to 85 wt.% of one or more film forming (co)polymers of (meth)acrylic acid, (meth)acrylic acid esters and optionally other (co)monomers; and
(c) from 0 to 65 wt.% of one or more additives.

With reference to the article of the present invention, the film may comprise, based on the total weight of the film:

(a) from 10 to 90, for example 15 to 80 wt.% of one or more cyanoacrylate monomers selected from compounds of formula (I);
(b) from 10 to 90, for example 20 to 85 wt.% of one or more (co)polymers of (meth)acrylic acid, (meth)acrylic acid esters and optionally other comonomers, wherein said (co)polymer has pressure sensitive adhesion properties at 23 °C; and
(c) from 0 to 65 wt.% of one or more additives.

With reference to the article of the present invention the curable film may comprise, based on the total weight of the curable film:

(a) from 10 to 90, for example from 15 to 80 wt % of one or more cyanoacrylate monomers selected from compounds of formula (I);
(b) from 10 to 90, for example from 20 to 85 wt% of one or more film forming ethylene vinylacetate copolymers; and
(c) from 0 to 65 wt.% of one or more additives.

With reference to the article of the present invention the curable film may comprise, based on the total weight of the curable film:

(a) from 10 to 90, for example from 15 to 80 wt % of (2-phenylethyl) 2-cyanoacrylate;
(b) from 10 to 90, for example from 20 to 85 wt% of one or more film forming ethylene vinylacetate copolymers; and
(c) from 0 to 65 wt.% of one or more additives.

With reference to the article of the present invention the curable film may comprise, based on the total weight of the curable film:

(a) from 10 to 90, for example 15 to 80 wt % of (2-phenylethyl) 2-cyanoacrylate;
(b) from 10 to 90, for example 20 to 85 wt% of one or more film forming (co)polymers of (meth)acrylic acid, (meth)acrylic acid esters and optionally other (co)monomers; and

(c) from 0 to 65 wt.% of one or more additives.

Alternatively, the curable film may comprise, based on the total weight of the curable film:

(a) from 10 to 90, for example 15 to 80 wt % of (2-phenylethyl) 2-cyanoacrylate;
(b) from 10 to 90, for example 20 to 85 wt% of one or more (co)polymers of (meth)acrylic acid, (meth)acrylic acid esters and optionally other (co)monomers, wherein said (co)polymer has pressure sensitive adhesion properties at 23 °C; and
(c) from 0 to 65 wt.% of one or more additives.

Suitable poly(meth)acrylate (co)polymers include DuroTAK® 2123. Suitable ethylene vinylacetate coplymers include Levamelt® 900.

Suitable additives may be selected from cyanoacrylate polymers, tackifiers, plasticizers, toughening agents, antioxidants, stabilizers, water absorbing agents and/or combinations thereof.

Suitable tackifiers are known to persons skilled in the art. Sources of tackifiers can be found in standard publications on pressure sensitive adhesives, for example, the "Handbook of Pressure Sensitive Adhesive Technology" from Donata Satas (van Notstrand, New York, 1989).

The article of the present invention may take the form of an adhesive transfer tape comprising:

a curable film according the present invention located on a release substrate, the curable film defining two adhesive surfaces, and optionally
a second release substrate on top of the curable film (the covering substrate), the release substrate(s) having a release function relative to the film.

The first and second release substrates may be a paper, cloth or plastic based material or a combination thereof, which are optionally coated with a release agent. Release agents allow the adhesive films of the article of the present invention to be easily transferred from the release substrate to the article of interest. The release agent may be selected from the group consisting of polyvinyl alcohol, clays, siloxanes, and combinations thereof. Suitable release agents, in particular siloxane-based release agents, are available under the trade name SILCOLEASE®.

Advantageously, an adhesive transfer film with first and second release substrates allows easy handling of the film and safe protection of the film between the two release layers.

When using first and second release substrates it is desirable that they should have different release properties relative to the film, such that it is clear which release layer should be removed first.

When using only a first release substrate and no second or covering release substrate the first release substrate should preferably have release properties on both sides. Preferably the release properties are different between the two sides. When winding the product (substrate and film) into a roll, there will be a clear differentiation between the release effects of the two sides. Consequently, the film will preferentially adhere to one side during unwinding of the roll.

The article of the present invention may also take the form of a single-sided adhesive tape comprising:

a curable film according the present invention located on a carrier substrate, and optionally
a release substrate on the curable film, the release substrate having a release function relative to the film.

The carrier substrate, which stabilizes the film, may be selected from paper, polymeric film, metal foil, foam, cloth, and combinations thereof. It may comprise several layers, for example a primer layer versus the film in order to bind the film to the carrier substrate or a release layer on the opposite side of the film.

The article of the present invention may take the form of a double-sided adhesive tape comprising:

a first curable film according the present invention located on a first side of a carrier substrate,
a second curable film according the present invention located on a second side of the carrier substrate, such that the carrier substrate is disposed between the first film and the second film, and optionally
a first release substrate on the first curable film, and/or
a second release substrate on the second curable film,

the release substrate(s) having a release function relative to the film(s).

The first and second curable films may be the same of different, *i.e.* they may comprise the same or different combinations of one or more cyanoacrylates of the formula (I) and film forming (co)polymers. The first and second release substrates may have different release properties relative to the first and second curable films. The first and second curable films may be the same of different, *i.e.* they may comprise the same or different combinations of one or

more cyanoacrylates of the formula (I) and film forming (co)polymers and the first and second release substrates may have different release properties relative to the first and second curable films.

The carrier substrate in between the two film layers may be selected from paper, polymeric film, metal foil, foam, cloth, viscoelastic materials and combinations thereof. Examples of viscoelastic materials are poly(meth)acrylates, polyvinyl ethers, natural rubbers, polyisoprenes, polybutadienes, polyisobutylenes, polychloroprenes, butadiene acrylonitrile polymers, thermoplastic elastomers, styrene-isoprenes, styrene-isoprene-styrene block copolymers, ethylene-propylene-diene polymers, styrene-butadiene polymers, poly-alpha-olefins, silicones, ethylene-containing copolymers, ethylene vinyl acetates and/or combinations thereof. The carrier substrate may comprise tackifiers, plasticizers, toughening agents, antioxidants, stabilizers, water absorbing agents and/or combinations thereof. The carrier substrate may be a foamed form of these materials.

The first and second release substrates may be a paper, cloth or plastic based material or a combination thereof, which is optionally coated with a release agent. Release agents allow the adhesive films of the article of the present invention to be easily transferred from the release substrate and to rewind the article as a roll. The release agent may be selected from the group consisting of polyvinyl alcohol, clays, siloxanes, and combinations thereof. Suitable release agents, in particular siloxane based release agents, are available under the trade name SILCOLEASE®.

The articles of the present invention, such as transfer films, single-sided tapes, double-sided tapes or labels may be protected from ambient conditions such as light, heat or moisture so as to prolong the shelf life thereof.

Articles according to the present invention may be produced by coating the curable film on a carrier substrate or release substrate and subsequently laminating it to further release substrates or carrier substrates. The coating process may be a hotmelt-process, a solid-based process (*i.e.,* solvent-free), a solvent-based process or a dispersion process.

In a hotmelt process the components of the film of the present invention are intermingled with a suitable mixing device, e.g. an extruder, the mixture is melted through the suitable device, e.g. an extruder, and the mixture is formed into a film and coated on substrates through the suitable device, e.g. an extruder, and a die to form the film in a suitable thickness. Such hotmelt mixing and coating processes are well-known in adhesive and tape industry.

In a solid-based process (*i.e.,* solvent-free) the curable film contains only solids, i.e. the film is 100% solid. In a dispersion process the components of the curable film are mixed in a liquid phase, for example, an aqueous liquid phase. The aqueous liquid phase may be water.

In a solvent process the components of the films of the present invention are mixed in one or more solvents, e.g. benzene, toluene, acetone, ethylacetate and other organic solvents or combinations thereof. After solving/dispersing and mixing the components together the mixture is coated to a release substrate or carrier substrate, the solvent is removed by drying and the film is wound into a roll. Such solvent mixing, coating and drying processes are well-known in adhesive and tape industry.

Desirably, the film of the present invention is produced in a solvent process. Preferably the solvent is ethylacetate.

Articles of the present invention may exhibit pressure sensitive adhesion properties at 23 °C such that they can initially be tacked to or attached to a target surface. Desirably, other stimuli are used to promote cure of the adhesive film, for example heat and/or radiation (e.g. UV radiation). Where radiation is utilised to initiate or promote further cure masking may be employed to selectively induce cure.

In a further aspect, the present invention provides for a method of attaching a curable film to a surface, comprising the steps of:

(a) providing an article according to the present invention;
(b) attaching the curable film of the article to at least one surface to form an assembly,
(c) exposing the assembly to conditions sufficient to cure the curable film of the article,

wherein the release substrate(s) of the article, if present, are removed before and/or after step (b).

The article of the present invention may be a transfer tape, a single-sided adhesive tape, or a double-sided adhesive tape. Articles of the present invention may exhibit pressure sensitive adhesion properties at 23 °C, thus attaching the curable film of the article to at least one surface may be achieved through the application of pressure to the curable film on the surface.

The articles of the present invention, such as transfer films, single-sided tapes, double-sided tapes or labels may find utility in bonding a plurality of substrates and or surfaces, including, but not limited to metals, metal alloys, glasses, enamels, wood, natural or synthetic fabrics and fibres, leather, stone, ceramic, plastics, paper or card, plastics, composite materials, and living tissues and organs.

Conditions sufficient to cure the curable film of the article of the present invention may include heat and/or radiation (e.g. UV radiation).

In a further aspect, the present invention provides for a method of adhering components together, said method comprising:

(i) providing an article according to the present invention;
(ii) attaching the curable film of the article to at least one of the components;
(iii) mating the components; and
(iv) curing the adhesive film between the components to be adhered together,

wherein the release substrate of the article, if present, is removed before and/or after step (ii).

Articles of the present invention may exhibit pressure sensitive adhesion properties at 23 °C, thus attaching the curable film of the article to at least one component may be achieved through the application of pressure to the curable film on the component.

Conditions sufficient to cure the curable film of the article of the present invention may include heat and/or radiation (e.g. UV radiation).

For example, the method of the present invention may comprise adhering components together using a transfer tape according to the present invention, said method comprising:

(i) providing a transfer tape according to the present invention;
(ii) attaching the curable film of the transfer tape to at least one of the components;
(iii) mating the components; and
(iv) curing the adhesive film between the components to be adhered together,

wherein the release substrate(s) of the transfer tape, if present, are removed before and/or after step (ii).

The substrates being bonded by the article of the present invention may include at least one flexible substrate, for example, at least one substrate may be a textile or flexible laminate material.

Conditions sufficient to cure the curable film of the article of the present invention may include heat, humidity and/or radiation (e.g. UV radiation).

Conditions sufficient to cure the curable film of the article of the present invention when bonding textiles may suitably include the application of a short heat exposure for example a short heat burst such as a heat shock.

Transfer tapes may comprise one or two release substrates as illustrated in Figures 3 and 4, *vide infra.* As used herein, the term transfer tape refers to an article in which a release substrate can be utilised to transfer the curable film to a target substrate or surface.

Advantageously, the method of using an article of the present invention such as a transfer tape as described above can be used as an alternative to stitching. Such a method can be described as seams without stitches.

Desirably the method of using an article of the present invention such as a transfer tape for bonding textiles, provides joinings which are fully flexible but at the same time very strong.

In comparison to liquid adhesives, the method of using an article of the present invention such as a transfer tape, does not lead to the penetration of liquid adhesives into the textile and does not leave stains or marks when applied.

Advantageously, the method of using an article of the present invention, such as a transfer tape, results in the formation of textile assemblies which have excellent solvent resistance and can endure hot washing and hot drying processes. The method of using an article of the present invention, such as a transfer tape, is especially suitable for use in the manufacture of high-performance technical textiles, where function is the primary criterion, for example in protective clothing, in agro-textiles, in automotive textiles etc.

Advantageously, the above method for adhering components together in high humidity environments using an article of the present invention, such as a transfer tape, provides an alternative to drilling holes through tiles, thereby eliminating the possibility of damaging concealed pipes or the integrity of ornate tiles.

Another aspect of the present invention comprises a method of adhering at least one electronic component to a substrate, for example bonding two electronic components to each other in the following way:

(i) providing an article according to the present invention;
(ii) attaching the curable film of the article to at least one of the components;
(iii) mating the components; and
(iv) curing the adhesive film between the components to be adhered together, the release substrate of the article, if present, being removed before and/or after step (ii).

Other components that may be bonded using articles according to the present invention include components in optical devices and optoelectronics.

In a further aspect of the present invention the adhesive articles, such as transfer tapes, described in the present invention, may be used for the encapsulation and/or packaging of components for example in electronic chip bonding, in the housing or manufacture of sensors, diodes, fibres, lenses, LCDs, plasma screens etc.

Thin layer adhesives of high flexibility, high bond strength and with a high refractive index are well suited for

flexible encapsulation, packaging and fixation of optical devices such as sensors, diodes, fibers, lenses, photodiodes, phototransistors, photomultipliers, integrated optical circuit elements, photoresistors, photoconductive camera tubes, charge-coupled imaging devices, laser diodes, quantum cascade lasers, light-emitting diodes etc.), flexible (touch-) screens (LCDs, plasma screens etc.), in photovoltaic industry and in chip bonding etc.

In a further embodiment, the method of the present invention may comprise adhering components together using a single-sided adhesive tape according to the present invention, wherein the single sided adhesive comprises one of the components, said method comprising:

(i) providing a single-sided adhesive tape according to the present invention;
(ii) attaching the curable film of the single-sided adhesive tape to the component; and
(iii) curing the adhesive film,

wherein the release substrate of the single-sided adhesive tape, if present, is removed before step (ii).

Normally, single-sided adhesive tapes are either absent a release substrate or have a single release substrate as illustrated in Figures 1 and 2, *vide infra.*

In yet a further embodiment, the method of the present invention may comprise adhering components together using a double-sided adhesive tape according to the present invention, said method comprising:

(i) providing a double-sided adhesive tape according to the present invention;
(ii) attaching a first curable film of the double-sided adhesive tape to at least one of the components;
(iii) attaching a second curable film of the double-sided adhesive tape to the other component; and
(iv) curing the curable films between the components so as to adhere the components together,

wherein the release substrate(s) of the double-sided adhesive tape, if present, are removed before and/or after step (ii).

Double-sided adhesive tapes may comprise one or two release substrates as illustrated in Figures 5 and 6, *vide infra.*

The articles of the present invention may more specifically find industrial applicability across a wide range of applications such as, but not limited to lamination, bookbinding, shoe assembly, assembly of parts of motor vehicles, of air conditioning systems, components of an electric or electronic device or other consumer durables, components used in building industries [for example, in insulation (thermal and acoustic)], packaging, die attachment applications, wound closure, surgical closures, medical device applications and all sorts of labelling. The components may be the ends of longitudinal materials that are adhered together, for example splicing two material rolls together.

The article of the present invention may be utilised to laminate or mask a substrate, to cover part or all of the substrate, to bind two sides of a gap together, to wrap the substrate or bundle parts together and/or combinations of thereof. In industrial processes, the articles of the present invention, such as transfer films, single-sided tapes, double-sided tapes or labels may be employed in a continuous supply process. For example, the carrier or release substrate may be continuously fed into a device that transfers the adhesive film on to the carrier or release substrate, whereupon the article thus formed can be contacted with (component) parts for bonding thereof.

All numerical ranges and ratios disclosed herein are inclusive of the indicated end points.

Where suitable, it will be appreciated that all optional and/or preferred features of one embodiment of the invention may be combined with optional and/or preferred features of another/other embodiment(s) of the invention.

## Brief Description of the Drawings

Additional features and advantages of the present invention are described in, and will be apparent from, the detailed description of the invention and from the drawings in which:

**Figure 1** illustrates a single-sided tape absent a release substrate according to the present invention;
**Figure 2** illustrates an embodiment of the article of the present invention that may correspond to a single-sided tape or a label with a release substrate;
**Figure 3** illustrates a transfer tape with one release substrate according to the present invention;
**Figure 4** illustrates a transfer tape with two release substrates according to the present invention;
**Figure 5** illustrates a double-sided tape with one release substrate according to the present invention; and
**Figure 6** illustrates a double-sided tape with two release substrates according to the present invention.
**Figure 7** illustrates refractive index values for different curable films.

## Detailed Description of the Invention

It should be readily apparent to one of ordinary skill in the art that the examples disclosed herein below represent generalised examples only, and that other arrangements and methods capable of reproducing the invention are possible and are embraced by the present invention.

In **Figure 1** a single sided tape 101 is shown. The single sided tape 101 consists of a carrier substrate 102 and a curable film 103, the curable film 103 comprising one or more cyanoacrylates of the formula (I) and a film forming (co)polymer (*supra*). The surface of the carrier substrate opposite the curable film may be a special release-treated surface.

The embodiment of the invention depicted in **Figure 2** could be either a single sided tape or a label 201. The single sided tape or label 201 consists of a carrier substrate 102 and a curable film 103; the curable film 103 comprising one or more cyanoacrylates of the formula (I) and a film forming (co)polymer. The curable film 103 is covered with a release substrate 104 to protect the curable film and prevent unwanted adhesion of the curable film 103.

**Figures 3 & 4** depict transfer tapes according to the present invention. Transfer tapes are particularly useful for transferring the curable film from a release substrate to a target surface. In **Figure 3,** the transfer tape 301 consists of a release substrate 104 coated with a curable film 103. The curable film 103 comprises one or more cyanoacrylates of the formula (I) and a film forming (co)polymer. The release substrate 104 should preferably have release properties on both sides. Preferably the release properties are different between the two sides. Thus, when winding and unwinding the transfer tape 301 into a roll, there will be a differentiation between the release effects on the two sides of the release substrate 104.

In **Figure 4** the transfer tape 401 consists of a curable film 103, comprising one or more cyanoacrylates of the formula (I) and a film forming (co)polymer, sandwiched between first and second release substrates 104 and 105. The first and second release substrates 104 and 105 may have different release properties relative to the curable film. This allows the first and second release substrates 104 and 105 to be removed independently of one another.

A double-sided adhesive tape 501 is shown in **Figure 5.** The tape 501 consists of a carrier substrate 102 having a first curable film 103 on a first side of the carrier substrate 102 and a second curable film 106 on a second side of the carrier substrate 102. The first and second curable films 103 and 106 may be the same of different, *i.e.* they may comprise the same or different combinations of one or more cyanoacrylates of the formula (I) and film forming (co)polymers. A release substrate 104 covers and protects the second curable film 106. The release substrate 104 should preferably have release properties on both sides. Preferably the release properties are different between the two sides. Thus, when winding and unwinding the double-sided tape 501 into a roll, there will be a differentiation between the release effects on the two sides of the release substrate 104.

A second embodiment of a double-sided adhesive tape 601 is provided in **Figure 6.** The tape 601 consists of a carrier substrate 102 having a first curable film 103 on a first side of the carrier substrate 102 and a second curable film 106 on a second side of the carrier substrate 102. The first and second curable films 103 and 106 may be the same of different, *i.e.* they may comprise the same or different combinations of one or more cyanoacrylates of the formula (I) and film forming (co)polymers. A first release substrate 104 covers and protects the first curable film 103. A second release substrate 105 covers and protects the second curable film 106. The first and second release substrates 104 and 105 may have different release properties relative to the curable films 103 and 106.

**Figure 7** shows several refractive indices of some tapes resulting from different formulations. Levamelt (bar 1 of the bar chart) refers to the curable film obtained from tape 1, bars 2 to 4 represent a tape obtained by admixing a styrene- PheCA co-polymer, bars 5 to 7 represent a tape obtained by replacing Levamelt by Vinnol type polymers and finally the last bar represents tapes obtained by adding dyes/colourants or pigments such as Naphthol Green, Coumarin, Carotene, m-Cresol purple, Cu(II)phthalocyanine and others to the adhesive mass.

## Examples

### Materials

Levamelt® 900 is a film forming ethylene vinylacetate copolymer with a vinylacetate content of about 90 wt %, commercially available from Lanxess AG, Leverkusen, Germany.

Durotak® 2123 is a solution of a film forming (meth)acrylic acid ester copolymer in ethyl acetate, commercially available from Henkel AG & Co. KGaA, Düsseldorf, Germany

Neopentyl 2-cyanoacrylate (NCA) is a solid cyanoacrylate (melting point 41°C) and can be synthesized according to WO2010/023229.

(2-Phenylethyl) 2-cyanoacrylate (PheCA) is a solid cyanoacrylate (melting point 30-32°C) and can be synthesized according to the Knoevenagel method using 2-Phenycyanacetate, Formaldehyde and a catalyst in a solvent followed by a cracking process. Suitable syntheses can be found in Sato, Mitsuyoshi, Okuyama and Toshio, *Jpn. Kokai*

*Tokkyo Koho* (1994), and JP 06192202A.

Release substrate 1 (RS 1) is polyester film, thickness 50 μm, covered on both sides with a silicone coating.

Release substrate 2 (RS 2) is a polyethylene film, thickness 50 μm, covered on both sides with a silicone coating.

Super glue is a representative for a general cyanoacrylate adhesive. It is commercially available as Loctite 4062 from Henkel AG & Co. KGaA, Düsseldorf, Germany.

**Tape preparation**

Different curable film formulations were prepared in HDPE bottles in accordance with the following procedure: The film forming (co)polymer was solved in ethyl acetate to give a 50 wt.% solution. The cyanoacrylate monomer and additional ethyl acetate were added to give a 50 wt.% (cyanoacrylate monomer + film forming (co)polymer) solution in ethyl acetate. All formulations were stable in the presence of sulfonic acids, $BF_3$ or $SO_2$ as stabilizers.

To produce a tape, the curable film formulation was coated on a release substrate using a draw-down coater with blade. The wet curable film was left at 22°C for 10 min. The release liner and the curable film were further dried in an oven with air-flow for 5 min at 90 °C or as otherwise indicated to remove the ethyl acetate to a level of less than 1 wt.% residual solvent. The following tapes were prepared:

**Tape 1 (PheCA + Levamelt® 900)**

| | |
|---|---|
| Curable film formulation: | 25 wt % PheCA, 25 wt % Levamelt® 900, 49.957 wt.% ethyl acetate, 0.04 wt.% hydroquinone, 0.003% camphor-10-sulfonic acid; |
| Substrates: | RS 1 and RS 2; |
| Grammage of curable film: | 40 g/$m^2$ |

**Tape 2 (PheCA + Durotak® 2123)**

| | |
|---|---|
| Curable film formulation: | 35 wt % PheCA, 15 wt % Durotak 2123 (polymer), 49.957 wt.% ethyl acetate, 0.04 wt.% hydroquinone, 0.003 wt.% camphor-10-sulfonic acid; |
| Substrates: | RS 1 and RS 2; |
| Grammage of curable film: | 40 g/$m^2$ |

**Comparative Tape 1 (NCA + Levamelt® 900)**

| | |
|---|---|
| Curable film formulation: | 25 wt % NCA, 25 wt % Levamelt® 900, 49,957 % Ethyl acetate, 0.04% Hydroquinone, 0.003% Camphor-10-sulfonic acid. |
| Substrates: | RS 1 and RS 2 |
| Grammage of curable film: | 40 g/$m^2$ |

**Comparative Tape 2 (Durotak® 2123)**

| | |
|---|---|
| Curable film formulation: | Durotak® 2123 (68.7 wt.% Durotak 2123 polymer in 31.3 wt.% ethyl acetate); |
| Substrates: | RS 1 and RS 2; |
| Grammage of curable film: | 40 g/$m^2$ |

The properties of the different tapes were evaluated by using the following test methods.

**Test methods**

**Loop tack**

The loop tack is determined in accordance with DIN EN 1719: The curable film is laminated on aluminium and cut into strips with a width of about 25mm and a length of about 300 mm. The strips are immediately measured in a "Zwick" tensile testing machine Z010 with a velocity of 100 mm/min.

To determine the loop tack after curing a specimen is prepared as described above. Before the specimen is placed in a "Zwick" tensile testing machine Z010 the curable film is cured under the described conditions, wherein the loop tack is determined as described above.

**Shear resistance**

The film is laminated on a polyester film and cut into strips with a width of about 25mm and a length of about 50mm. The strip is put on a steel plate to cover an area of about 25 mm x 25 mm at the edge of the steel plate. Immediately after preparation the steel plate is positioned vertically in a suitable device and stressed with loads between 1 N to 160 N. The shear value is the maximum stress (in Newton) at which the strip still sticks to the plate after 4 hours.

To determine the shear resistance after curing a specimen is prepared as described above. Before the shear resistance is measured as described above, the curable film is cured under the described conditions.

**Lap shear tests**

Grit blasted mild steel (GBMS) panels: The GBMS panels consist of grit blasted mild steel. The grit blasting must be done < 24h before the test. Blasting medium: Corundum, diameter 0.21-0.3 mm, blasting pressure 3 bar. The curable film is transferred to GBMS steel panels (25 mm width) to cover an area of 25 mm x 12, 5 mm (312,5 $mm^2$) at the edge of the first steel panel. A second steel panel is put on the first panel in such a way that a complete overlap of the covered area is achieved. Two clamps (load each of them 45-90N) are used to press the steel panels together. The resulting specimen is then stored under defined temperature and time conditions.

The lap shear strength was measured using a "Zwick" tensile testing machine Z010. Velocity: 2 mm/min; initial load: 5 N. The resulting value is the maximum force before specimen breaks.

To determine the lap shear strength after curing a specimen is prepared as described above. Before the lap shear strength is measured as described above, the curable film is cured under the described conditions

**Differential Scanning Calorimetry (DSC)**

For the DSC measurements a NETZSCH DSC204F1 instrument is used, wherein the measurement conditions are the following: Scanning temperature range from -80°C to 200°C with 10 K/ min, sample weight: 5 mg.

**Dynamic Mechanical Analysis (DMA)**

For the DMA measurements a METTLER TOLEDO DMA/SDTA861e instrument is used, wherein the measurement conditions are the following: harmonic shear load with 1 Hz, max. force 1.5 N, max. distance 10 μm, Scanning temperature range from -150°C to 200°C. The storage modulus G' was determined from the DMA results.

**Example 1**

The curable film of Tape 1 exhibits a high initial tackiness and shows good pressure sensitive adhesion properties at 23 °C. The curable film can be fully cured by exposing said film to a temperature of 65°C for 1 hour followed by a temperature of 23 °C for 24 hours. The glass transition temperature ($T_g$) of the curable film is -40 °C whereas the glass transition temperature ($T_g$) of the cured film is 15 °C. For the curable film a storage modulus G' of $3 \cdot 10^3$ Pa was observed.

In Table 1 several material properties of Tape 1 are given.

Table 1

| | **Substrate** | **Uncured state** | **Cured state** |
|---|---|---|---|
| **Loop-Tack** | Steel | 7 N | none |
| **Shear resistance** | Steel | < 10 N | > 160N |
| **Lap Shear strength** | GBMS | < 15 N / 312.5 $mm^2$<br>< 0.05 MPas | 1966 N / 312.5 $mm^2$<br>6.3 MPas |

The importance of the curing process is further shown in Table 2, where different curing conditions were used. High shear strengths were only observed for cases where the samples where exposed to conditions which could cause the curing of the curable film.

**Table 2**

| Curing conditions | F-max [N/312,5mm$^2$] | MPas |
|---|---|---|
| 23°C/30min | < 30 | < 0.1 |
| 23°C/1 hour | 150 | 0.48 |
| 23°C/ 3 hours | 590 | 1.89 |
| 23°C/ 10 hours | 930 | 2.98 |
| 23°C/ 24 hours | 1550 | 4.96 |
| 23°C / 72 hours | 1510 | 4.83 |
| 65°C / 5 minutes | < 30 | < 0.1 |
| 65°C / 30 minutes | 438 | 1 |
| 65°C / 1 hour | 935 | 3 |
| 65°C / 1 hour + 24h RT post curing | 2281 | 7.3 |

**Example 2**

The curable film of Tape 2 exhibits a very high initial tackiness and shows very good pressure sensitive adhesion properties at 2 3°C. The curable film can be fully cured by exposing said film to a temperature of 65°C for 1 hour followed by a temperature of 23°C for 24 hours.

In Table 3 several material properties of Tape 2 are given.

**Table 3**

| | Substrate | Uncured state | Cured state |
|---|---|---|---|
| **Loop-Tack** | Steel | 9 N | none |
| **Lap Shear strength** | GBMS | < 15 N / 312.5 mm$^2$<br>< 0.05 MPas | 525 N / 312.5 mm$^2$<br>1.68 MPas |

**Example 3 (comparative example)**

Curing of the curable film at a temperature of 65 °C for 1 hour followed by a temperature of 23 °C for 24 hours does not sufficiently increase the lap shear strength on GBMS, which means that this tape could be unsuitable for a variety of structural bonding applications.

In Table 4 several material properties of Comparative Tape 1 are given.

**Table 4**

| | Substrate | Uncured status | Cured status |
|---|---|---|---|
| **Loop-Tack** | Steel | 7 N | 8 N |
| **Shear resistance** | Steel | < 10 N | < 20 |
| **Lap Shear strength** | GBMS | < 15 N / 312.5 mm$^2$<br>< 0.05 MPas | 80 N / 312.5 mm$^2$<br>0.25 MPas |

**Example 4 (comparative example)**

**Example 4 (comparative example)**

The film of Comparative Tape 2 exhibits a high initial tackiness and shows pressure sensitive adhesion properties at 23 °C. However, exposing the film to different conditions (see Table 5) does not lead to a significant increase of the bonding strength on GBMS, which means that this tape is unsuitable for all structural bonding applications.

**Table 5**

| Temperature/Time | F-max [N/312,5mm$^2$] | MPas |
|---|---|---|
| 23°C/30min | < 15 | < 0,05 |
| 23°C/1 hour | 30 | 0.1 |
| 23°C/ 3 hours | 50 | 0.16 |
| 23°C/ 10 hours | 50 | 0.16 |
| 23°C/ 24 hours | 48 | 0.15 |

**Procedure for Determining (Co)Polymer Acid Number**

Check if sample is at room temperature by replacing the lid of the sample container by a lid with thermometer. Determine the temperature. If the temperature is between 20 and 30 °C, the analyses can start in the sequence specified. If the temperature is not within the above range, place the sample in a water bath at 25 °C and check the temperature regularly until it reaches a value between 20 and 30 °C. Some (co)polymers will contain volatile compounds, so it is recommended to start with the analyses of the most critical parameters.

Method:

1. Weigh in a sample bottle of 250 cc X g of the (co)polymer.
2. Add acetone. Prior to use, neutralize the acetone with 0.05 N KOH, using phenolphthalein.
3. Shake the sample bottle until the (co)polymer is dissolved.
4. Cool the sample bottle (0 - 5 °C) and titrate with 0.05 N KOH from clear to light pink. The change of colour has to stay for 30 seconds.
5. Where the (co)polymer has a low acid number (1.0 mg KOH/g dry resin max), a small 10 ml burette should be used.

The acid number of the (co)polymer is determined according to the following equation:

$$\text{acid number ( in mg KOH/g dry resin )} = \frac{\text{(ml of KOH) x (N of KOH) x 56 x 100}}{\text{(g sample) x (Total Solids in Sample)}}$$

Total solids in sample refers to the % dry polymer in the (co)polymer. Normally, (co)polymers are solvent based. The typical value of total solids in the sample is 30 - 60%.

**Textile assembly method**

Structural adhesive transfer tapes as described in the present invention are particularly useful in textile assembly.

**Textile substrates**

Textile specimen for lap shear experiments or peel experiments were prepared from commercially available nylon, cotton and cotton-polyester (33%/66%) by cutting 2.5 cm x 12.5 cm pieces.

Comparative experiments were performed using Henkel Technomelt PUR 7549, a polyurethane reactive hotmelt liquid adhesive. Prelaminated Technomelt PUR 7549 textile samples on nylon from China were used in washing experiments and peel measurements as received.

**Plastic lap shear specimen**

Plastic lap shear specimen were assembled according to STM 700, using clamps Wilton, model 365 and subjected to curing. Textile lap shear specimen were clamped between mild steel lap shears according to STM 700, using clamps Wilton, model 365 and subjected to curing.

**Heat shock press**

Heat shock press Fermant 400T was used for sealing experiments in stitch free applications. Impulse level 5 was used (8 sec.) to create a 2.5 cm x 0.2 cm cured surface. Then the bonded materials were subjected directly to the washing experiment or tensile strength testing respectively.

**Heat press**

For heat press experiments in tape applications 320 cm x 320 cm textile pieces were cut, the tape was transferred onto one textile piece and the open tape layer covered with another 320 cm x 320 cm textile piece.

For heat press experiments using competitor hotmelt adhesive 320 cm x 320 cm textile pieces were cut, one piece was put on a hot plate (100°C), the hot hotmelt was transferred onto the textile piece at 100°C by a 40 μm coating knife and the textile piece was finally covered with a second textile layer of the same size.

Heat press Fontune TP-400 was used for pressure and heat on a 320 cm x 320 cm curing surface for the adhesive article in question for 2 min on a fully covered surface with a force of 20 kN. Temperature during compression: 100°C.

**Washing experiments**

Specimen of dimensions of 2.5 cm x 12.5 cm were cut out of laminated textiles after heat press, transferred into a glass 1 L round bottomed flask, equipped with a mechanical stirrer bar, then 700 mL to 800 mL tap water and half a commercially available somat tablet was added. The mixture was stirred at 100 to 250 rpm and heated to 100°C, 60°C, 40°C or room temperature. After 2 hours (or 24 hrs for experiments carried out at room temperature) the textile specimen were removed, rinsed three times with clear tap water and transferred to an oven at 60°C or 70°C. Drying was carried out for 2 hours. The textile pieces were allowed to cool down to room temperature and left at ambient temperatures for 1 to 2 days before peel or tensile strength were determined.

**Tensile strength determination**

Lap shear strength was determined according to STM 700 on an Instron 5567 with 30kN, 1 kN, and 100N load cell, respectively, Zwick Tensile tester Z100 with 100kN and 1 kN load cell, Zwick Tensile tester type 144501 and Zwick Tensile tester KAF-Z with 1 kN load cell. Tests were repeated twice.

**Peel experiment**

Peel was determined according to a modified DIN EN 1939 on Zwick Tensile tester KAF-Z with 1 kN load cell:

- Cut the specimen to 2.5 cm x 12.5 cm
- Peel the sample with opening 5 - 6 cm and just make sure that the open ends can be clamped in the grip of the tension testing machine
- Set the tension testing machine:
    - Grip to Grip separation 60 mm
    - Pre-load 2 cN
    - Peak definition 0.1 N
    - Measurement path 100 mm
    - Pre-measurement path 2 mm
    - Max. extension 100 mm
    - Measurement speed 100 mm/min
- Reset force
- Clamp the sample (without tension) and start
- Return the grip when finished

- Print the graph
- Take the average from all peaks greater than 0.1 N
- Repeat it for all samples (2-3 times)

**Example 5**

The transfer tape, Tape 1, is applied to one of two pieces of textile, a second piece of the textile is laid over the tape and a neat joint is made through the application of a short heat shock. An 8 second heat shock results in a 2 mm broad neat seamless stitch with a total bonded area of 50 $mm^2$.

Substrate failure (SF) indicates that the bulk strength of the textile is far less than the adhesion strength of the bond. This type of failure indicates a successful treatment and adhesive of choice.

As is clear from Table 6 below, after hot washing and drying, the adhesion strength is maintained.

**Table 6**

| Initial Bond strength | 40 °C 2h wash + 2h 60°C drying | RT 60h wash + RT drying |
|---|---|---|
| 4.4 MPa | 4.95 MPa | Substrate failure |
| 22.4 kg | 25.2 kg | - |
| Substrate Failure | Substrate failure | Substrate failure |

**Textile lap shear experiments**

Tables 7 and 8 *vide infra,* display the results of lap shear experiments for various textiles. Different curing conditions are shown in addition to the effects of various washing and drying cycles.

**Table 7 - Lap shear experiments with Tape 1**

| **Tape 1** | | | | |
|---|---|---|---|---|
| **Lap shear** | | | | |
| | **24h @ RT, clamps, 322.6 mm2** | | **hot press Fermant 400T impulse level 5, 50 mm2** | |
| | **Load (N)** | **N/mm2** | **Load (N)** | **N/mm2** |
| **33% Cotton, 66% PES lap shear** | sub fail | - | 219.72 | 4.39 |
| | sub fail | - | 237.56 | 4.75 |
| | 294.81 | 0.91 | 204.34 | 4.09 |
| | **Average** | **0.91** | **Average** | **4.41** |
| | **Std dev** | **-** | **Std dev** | **0.33** |

**Table 8 - Lap shear experiments with Tape 1**

| Tape 1 | | | | | | | | | |
|---|---|---|---|---|---|---|---|---|---|
| **Lap shear** | | | | | | | | | |
| **Cure** | **hot press Fermant 400T impulse level 5, 50 mm2** | | | **hot press Fermant 400T impulse level 5, 50 mm2** | | | **hot press Fermant 400T impulse level 5, 50 mm2** | | |
| **Wash/ substrate** | **2 h @ 100°C + 2 h drying @ 60°C** | | | **2 h @ 40°C + 2 h drying @ 60°C** | | | **24h @ RT + 2 h drying @ 60°C** | | |
| | | **Load (N)** | **N/mm2** | | **Load (N)** | **N/mm2** | | **Load (N)** | **N/mm2** |
| **33% Cotton, 66% PES lap shear** | | sub fail | - | | 202.37 | 4.05 | | sub fail | - |
| | | sub fail | - | | 278.87 | 5.58 | | sub fail | - |
| | | 201.20 | 4.02 | | 260.59 | 5.21 | | sub fail | - |
| | **Average** | **201.20** | **4.02** | **Average** | **247.28** | **4.95** | **Average** | **-** | **-** |
| | **Std dev** | **-** | **-** | **Std dev** | **39.95** | **0.80** | **Std dev** | **-** | **-** |

Tables 9 and 10 display lap shear results for Tape 1 and comparative Hotmelt Technomelt PUR 7549 under different curing conditions.

**Table 9 - Lap shear experiments with Tape 1**

| Tape 1 | | | | | |
|---|---|---|---|---|---|
| **Lap shear** | | | | | |
| **Cure/ substrate** | **24h @ RT** | | **1h 70°C+ 24h RT** | | |
| | **Load (N)** | **N/mm2** | **Load (N)** | **N/mm2** | |
| **solid Nylon 6.6 lap shear** | 68.20 | 0.21 | 56.20 | 0.17 | |
| | 77.40 | 0.24 | 55.00 | 0.17 | |
| | 69.23 | 0.21 | 68.00 | 0.21 | |
| | **Average** | **0.22** | **Average** | **0.19** | |
| | **Std dev** | **0.02** | **Std dev** | **0.02** | |
| **Cotton textile lap shear** | 400.00 | 1.24 | 400.00 | 1.24 | Sub fail |
| | 365.00 | 1.13 | 330.00 | 1.02 | Sub fail |
| | 445.00 | 1.38 | 618.00 | 1.92 | Sub fail |
| | **Average** | **1.25** | **Average** | **1.39** | |
| | **Std dev** | **0.12** | **Std dev** | **0.47** | |
| **33% Cotton, 66% PES textile lap shear** | 197.00 | 0.61 | 334.00 | 1.04 | |
| | 256.00 | 0.79 | 365.00 | 1.13 | |
| | 197.00 | 0.61 | 454.00 | 1.41 | |
| | **Average** | **0.67** | **Average** | **1.19** | |
| | **Std dev** | **0.11** | **Std dev** | **0.19** | |

**Table 10 - comparative**

| Technomelt PUR 7549 | | | |
|---|---|---|---|
| lap shear | | | |
| Cure/ substrate | Technomelt PUR 7549-laminated Nylon sample | | |
| | Load (N) | N/mm2 | |
| Nylon textile lap shear | 120.20 | 0.37 | Sub fail |
| | 118.00 | 0.37 | Sub fail |
| | - | - | |
| | **Average** | **0.37** | |
| | **Std dev** | **0.00** | |

**Peel experiments**

Tables 11 and 12, illustrate the results of Peel experiments for a structural adhesive transfer tape as described in the present invention, Tape 1, and the commercially available Technomelt PUR 7549.

**Table 11 - Peel experiments**

| Tape 1 | | | | | | | | | |
|---|---|---|---|---|---|---|---|---|---|
| Peel | | | | | | | | | |
| Cure/ substrate | 24h @ RT | | | 1 h 70°C + 24h RT | | | Fontune 2 min 100°C/ 20 kN | | |
| | | F(av)/N | F(max)/N | | F(av)/N | F(max)/N | | F(av)/N | F(max)/N |
| Nylon textile | | 3.77 | 4.77 | | 3.50 | 5.60 | | 3.35 | 5.68 |
| | | 4.59 | 5.83 | | 4.43 | 6.13 | | 3.09 | 5.53 |
| | | 4.62 | 6.46 | | 3.05 | 4.74 | | 1.79 | 4.55 |
| | **Average** | **4.33** | **5.69** | **Average** | **3.66** | **5.49** | **Average** | **2.74** | **5.25** |
| | **Std dev** | **0.48** | **0.85** | **Std dev** | **0.70** | **0.70** | **Std dev** | **0.84** | **0.61** |
| Cotton textile | | 9.82 | 14.27 | | 16.48 | 21.76 | | 15.98 | 23.39 |
| | | 10.22 | 13.99 | | 16.87 | 22.33 | | 13.90 | 19.62 |
| | | 10.23 | 14.85 | | 17.20 | 23.22 | | 12.11 | 17.15 |
| | **Average** | **10.09** | **14.37** | **Average** | **16.85** | **22.44** | **Average** | **14.00** | **20.05** |
| | **Std dev** | **0.23** | **0.44** | **Std dev** | **0.36** | **0.74** | **Std dev** | **1.94** | **3.14** |
| 33% Cotton, 66% PES textile | | 5.35 | 8.59 | | 11.08 | 15.15 | | 10.35 | 15.57 |
| | | 4.75 | 7.36 | | 12.12 | 15.00 | | 13.64 | 17.33 |
| | | 4.78 | 7.24 | | 11.70 | 14.40 | | 12.93 | 15.76 |
| | **Average** | **4.96** | **7.73** | **Average** | **11.63** | **14.85** | **Average** | **12.31** | **16.22** |
| | **Std dev** | **0.34** | **0.75** | **Std dev** | **0.52** | **0.40** | **Std dev** | **1.73** | **0.97** |

**Table 12 - Comparative data**

| Technomelt PUR 7549 | | | | | |
|---|---|---|---|---|---|
| Peel | | | | | |
| Cure/ substrate | Technomelt PUR 7549-laminated Nylon sample | | | Fontune 2 min 100°C/ 20 kN | |
| | | F(av)/N | F(max)/N | F(av)/N | F(max)/N |
| Nylon textile | | 18.50 | 24.57 | 12.18 | 15.90 |
| | | 16.92 | 25.92 | 11.72 | 16.79 |
| | | 19.40 | 25.62 | 10.71 | 14.03 |
| | **Average** | **18.27** | **25.37** | **11.54** | **15.57** |
| | **Std dev** | **1.26** | **0.71** | **0.75** | **1.41** |
| Cotton textile | | | | 11.93 | 16.82 |
| | | | | 11.04 | 15.10 |
| | | | | 10.21 | 12.99 |
| | **Average** | | | **11.06** | **14.97** |
| | **Std dev** | | | **0.86** | **1.92** |
| 33% Cotton, 66% PES textile | | | | 5.77 | 10.23 |
| | | | | 5.70 | 9.60 |
| | | | | 2.47 | 5.76 |
| | **Average** | | | **4.65** | **8.53** |
| | **Std dev** | | | **1.89** | **2.42** |

Tape 1 outperformed the comparative sample on cotton and cotton- polyester substrates.

Table 13 outlines the results of peel experiments for Tape 1 on nylon, cotton, and cotton-polyester materials after a 2 hour wash cycle at 60 °C, followed by a 2 hour drying cycle; and after a 2 hour wash cycle at 40 °C, followed by a 2 hour drying cycle.

**Table 13 - Peel experiments**

| Tape 1 | | | | | | |
|---|---|---|---|---|---|---|
| Peel | | | | | | |
| Cure | Fontune 2 min 100°C/ 20 kN | | | Fontune 2 min 100°C/ 20 kN | | |
| Wash/ substrate | 2 h @ 60°C, 2 h drying @ 70°C | | | 2 h @ 40°C, 2 h drying @ 70°C | | |
| | | F(av)/N | F(max)/N | | F(av)/N | F(max)/N |
| Nylon textile | | 1.55 | 2.50 | | 3.71 | 6.28 |
| | | 0.86 | 1.48 | | 1.46 | 2.81 |
| | | 2.42 | 3.50 | | 2.06 | 3.41 |
| | **Average** | **1.61** | **2.49** | **Average** | **2.41** | **4.17** |
| | **Std dev** | **0.78** | **1.01** | **Std dev** | **1.17** | **1.85** |

(continued)

| Tape 1 | | | | | | |
|---|---|---|---|---|---|---|
| Peel | | | | | | |
| Cure | Fontune 2 min 100°C/ 20 kN | | | Fontune 2 min 100°C/ 20 kN | | |
| Wash/ substrate | 2 h @ 60°C, 2 h drying @ 70°C | | | 2 h @ 40°C, 2 h drying @ 70°C | | |
| | | F(av)/N | F(max)/N | | F(av)/N | F(max)/N |
| Cotton textile | | 18.56 | 27.87 | | 17.69 | 27.42 |
| | | 13.75 | 19.34 | | 22.91 | 35.83 |
| | | 16.14 | 27.45 | | 17.96 | 27.30 |
| | **Average** | **16.15** | **24.89** | **Average** | **19.52** | **30.18** |
| | **Std dev** | **2.41** | **4.81** | **Std dev** | **2.94** | **4.89** |
| 33% Cotton, 66% PES textile | | 12.12 | 15.33 | | 13.89 | 20.53 |
| | | 11.34 | 16.67 | | 8.96 | 13.39 |
| | | 9.93 | 13.49 | | 14.49 | 18.71 |
| | **Average** | **11.13** | **15.16** | **Average** | **12.45** | **17.54** |
| | **Std dev** | **1.11** | **1.60** | **Std dev** | **3.03** | **3.71** |

Table 14 and 15 display the results for Technomelt PUR 7549 when peel experiments are performed for the same washing and drying cycles.

**Table 14 - comparative**

| Technomelt PUR 7549 | | | | | | |
|---|---|---|---|---|---|---|
| Peel | | | | | | |
| Cure | Fontune 2 min 100°C/ 20 kN | | | Technomelt PUR 7549-laminated Nylon sample | | |
| Wash/ substrate | 2 h @ 60°C, 2 h drying @ 70°C | | | 2 h @ 60°C, 2 h drying @ 70°C | | |
| | | F(av)/N | F(max)/N | | F(av)/N | F(max)/N |
| Nylon textile | | 18.16 | 23.90 | | 18.03 | 25.44 |
| | | 15.67 | 20.54 | | 15.52 | 21.61 |
| | | 17.87 | 22.55 | | 16.31 | 19.67 |
| | **Average** | **17.23** | **22.33** | **Average** | **16.62** | **22.24** |
| | **Std dev** | **1.36** | **1.69** | **Std dev** | **1.28** | **2.94** |
| Cotton textile | | 13.05 | 20.66 | | | |
| | | 14.37 | 19.73 | | | |
| | | 14.77 | 22.29 | | | |
| | **Average** | **14.06** | **20.89** | | | |
| | **Std dev** | **0.90** | **1.30** | | | |

(continued)

| Technomelt PUR 7549 | | | | | | |
|---|---|---|---|---|---|---|
| Peel | | | | | | |
| Cure | Fontune 2 min 100°C/ 20 kN | | | Technomelt PUR 7549-laminated Nylon sample | | |
| Wash/ substrate | 2 h @ 60°C, 2 h drying @ 70°C | | | 2 h @ 60°C, 2 h drying @ 70°C | | |
| | | F(av)/N | F(max)/N | | F(av)/N | F(max)/N |
| 33% Cotton, 66% PES textile | | delamin. | delamin. | | | |
| | | delamin. | delamin. | | | |
| | | delamin. | delamin. | | | |
| | Average | - | - | | | |
| | Std dev | - | - | | | |

**Table 15 - comparative**

| Technomelt PUR 7549 | | | | | | |
|---|---|---|---|---|---|---|
| Peel | | | | | | |
| Cure | Fontune 2 min 100°C/ 20 kN | | | Technomelt PUR 7549-laminated Nylon sample | | |
| Wash/ | 2 h @ 40°C, 2 h drying @ 70°C | | | 2 h @ 40°C, 2 h drying @ 70°C | | |
| substrate | | F(av)/N | F(max)/N | - | F(av)/N | F(max)/N |
| Nylon textile | | 16.13 | 21.55 | - | 14.01 | 18.98 |
| | | 20.35 | 15.66 | - | 15.00 | 23.20 |
| | | 17.74 | 24.58 | - | 12.34 | 19.94 |
| | Average | **18.07** | **20.60** | Average | **13.78** | **20.71** |
| | Std dev | **2.13** | **4.54** | Std dev | **1.34** | **2.21** |
| Cotton textile | | 15.35 | 22.27 | | | |
| | | 15.70 | 26.47 | | | |
| | | 14.99 | 29.67 | | | |
| | Average | **15.35** | **26.14** | | | |
| | Std dev | **0.36** | **3.71** | | | |
| 33% Cotton, 66% PES textile | | 1.58 | 3.61 | | | |
| | | delamin. | delamin. | | | |
| | | delamin. | delamin. | | | |
| | Average | **1.58** | **3.61** | | | |
| | Std dev | - | - | | | |

**Example 6**

Structural adhesive transfer tapes as described in the present invention are particularly useful in high humidity environments.

**Materials**

**Substrates**

Wood specimen for lap shear experiments were cut from commercially available red beech wood in dimensions of ordinary lap shear panels. Ceramic tile specimen were cut from commercially available tiles bought at a DIY store in dimensions of ordinary lap shear panels. The plain surface of the ceramic tile was used for assembling bonds. Mild steel lap shear specimen were grit blasted prior to use, using silicon carbide from Gyson at 4 bar pressure according to STM 700 on a 1 ULA 1400 grit blasting machine. All tensile strength studies using lap shear specimen were carried out according to STM 700.

**Competitor samples**

"Nie wieder bohren (TEROSTAT MS 9380 WEISS DK310ML)", "Unibond No More Nails (original)", "Tesa Powerstrips", and "3M 467MP" were used for comparative tests. All competitor samples were applied as recommended by the suppliers. Preparation of lap shear specimen, application of the product and tensile strength tests were performed according to STM 700.

"Nie wieder bohren (TEROSTAT MS 9380 WEISS DK310ML)" is a 1K (one-part) silane modified polyether adhesive in the form of a white paste. It is suitable for application to smooth and rough surfaces. It is not an instant adhesive and it needs air and time (12 hours) to cure. A special dispensing adapter, which is sold separately, is also required. The smallest dispensing adapter available has a diameter of 35 mm and supports 5 kg weight permanently (0.5 MPa).

"Unibond No More Nails (original)" is a styrene acrylate copolymer available from Henkel.

"Tesa Powerstrips" large; double sided adhesive strips. Available from Tesa AG.

3M 467MP is a 200MP Adhesive, acrylic adhesive, double sided transfer tape.

**Tensile strength determination**

Tensile strength of the lap shear bond was determined according to STM 700 on an Instron 5567 with 30kN, 1kN, and 100N load cell, respectively, Zwick Tensile tester Z100 with 100kN and 1 kN load cell, Zwick Tensile tester type 144501 and Zwick Tensile tester KAF-Z with 1 kN load cell.

An adhesive transfer tape as described in the present invention was used to bond: ceramic to steel; ceramic to ceramic and rubber to steel.

Bond assemblies were exposed for 24 h to the following conditions:

- 20% RH, 20 °C - dry room conditions
- 85% RH, 30 °C - bathroom conditions
- 98% RH, 40 °C - bathroom conditions
- 98% RH, 65 °C - bathroom conditions

The bonding area was 0.5 $inch^2$ (322.6 $mm^2$)

The results are outlined in Table 16 below. Curing conditions: Performed according to STM 700 with clamping for 24 hours at conditions indicated. Bond strength was measured at RT.

**Table 16**

| | **ceramic-ceramic** | **ceramic - GBMS** | **GBMS - GBMS** |
|---|---|---|---|
| | **20% RH, 20°C** | | |
| average kg | 32.1 | 29.5 | 42.6 |
| average Mpa | 0.977 | 0.897 | 1.295 |
| failure type | CF | AF ceramic | CF |
| | **85% RH, 30°C** | | |
| average kg | 85.3 | 151.0 | 153.1 |
| average MPa | 2.594 | 4.592 | 4.655 |

(continued)

| | ceramic-ceramic | ceramic - GBMS | GBMS - GBMS |
|---|---|---|---|
| failure type | CF | AF ceramic | CF |
| | **98% RH, 40°C** | | |
| average kg | 137.7 | 90.5 | 181.0 |
| average MPa | 4.187 | 2.752 | 5.503 |
| failure type | Substrate failure | AF ceramic | CF |
| | **98% RH, 65°C** | | |
| average kg | 64.7 | 114.4 | 270.1 |
| average MPa | 1.966 | 3.505 | 8.212 |
| failure type | CF | AF ceramic | CF |
| | | | |
| **Note: CF = cohesive failure; AF = Adhesive failure; SF = Substrate failure** | | | |

Substrate failure indicates that the bulk strength of the material is by far less then the adhesive and the adhesion strength. This type of failure indicates a successful treatment and adhesive of choice.

In very high humidity environments (above 85% room humidity (RH) and above 30 °C), Tape 1, which has a bonded area of 0.5 inch$^2$ (12.7 mm$^2$) supports weight from about 65-270 Kg, depending on the substrate.

Substrate failure at 98% humidity and 40 °C indicates extreme strength of the bond.

The adhesive strength is better in high humidity environments compared to standard room conditions.

Results for Tape 1 bonding at different humidity levels for different substrates:

**Cure 85% RH, 30 °C:**

Ceramic to GBMS - Force applied until bond broke: 4.6 MPa (151 Kg) short term
Ceramic to ceramic - Force applied until bond broke: 2.6 MPa (85 Kg)
GBMS-GBMS - 4.6 MPa (153 Kg)

**Cure 98% RH, 40 °C:**

Ceramic to GBMS - Force applied until bond broke: 2.8 MPa (92 Kg) short term
Ceramic to ceramic - Force applied: 4.2 MPa (138 Kg) - substrate failure: adhesion stronger than the substrate
GBMS-GBMS - Force applied until bond broke: 5.5 MPa (181 Kg)

**Cure 98% RH, 65 °C:**

Ceramic to GBMS - Force applied until bond broke: 3.5 MPa (114 Kg) short term
Ceramic to ceramic - Force applied until bond broke: 1.9 MPa (65 Kg)
GBMS-GBMS - Force applied until bond broke: 8.2 MPa (270 Kg)

Desirably, the structural adhesive transfer tape is transparent, only a few microns thick and adheres to most surfaces.

Tables 17-21 compare the suitability of Tape 1 with alternative products. The comparative lap shear experiment results are displayed in Tables 17-21. Curing conditions were according to STM 700 with clamping for the curing conditions indicated. Direct exposure to the high temperature and humidity environment achieved curing. Bond strengths were measured at RT.

Table 17

| Tape 1 | | | |
|---|---|---|---|
| Lap shear results | | | |
| | ceramic-ceramic | ceramic - GBMS | GBMS - GBMS |
| | 20% RH, 20°C | | |
| average kg | 32.1 | 29.5 | 42.6 |
| average MPa | 0.977 | 0.897 | 1.295 |
| failure type | CF | AF ceramic | CF |
| | 85% RH, 30°C | | |
| average kg | 85.3 | 151.0 | 153.1 |
| average MPa | 2.594 | 4.592 | 4.655 |
| failure type | CF | AF ceramic | CF |
| | 98% RH, 40°C | | |
| average kg | 137.7 | 90.5 | 181.0 |
| average MPa | 4.187 | 2.752 | 5.503 |
| failure type | SF | AF ceramic | CF |
| | 98% RH, 65°C | | |
| average kg | 64.7 | 100.3 | 270.1 |
| average MPa | 1.966 | 3.050 | 8.212 |
| failure type | CF | AF ceramic | CF |
| Note: CF = cohesive failure; AF = Adhesive failure; SF = Substrate failure | | | |

Table 18 - comparative

| Nie wieder bohren (TEROSTAT MS 9380 WEISS DK310ML) | | | |
|---|---|---|---|
| Lap shear results | | | |
| | ceramic-ceramic | ceramic - GBMS | GBMS - GBMS |
| | 20% RH, 20°C | | |
| average kg | 33.4 | 48.1 | 40.8 |
| average MPa | 1.525 | 1.463 | 1.860 |
| failure type | CF | CF | CF |
| | 85% RH, 30°C | | |
| average kg | 36.8 | 45.8 | 56.5 |
| average MPa | 1.680 | 2.090 | 2.575 |
| failure type | CF | CF | CF |
| | 98% RH, 40°C | | |
| average kg | 35.4 | 41.0 | 66.9 |
| average MPa | 1.615 | 1.870 | 3.050 |
| failure type | CF | CF | CF |
| | 98% RH, 65°C | | |
| average kg | 42.3 | 58.3 | 69.5 |

(continued)

| Nie wieder bohren (TEROSTAT MS 9380 WEISS DK310ML) | | | |
|---|---|---|---|
| **Lap shear results** | | | |
| | **ceramic-ceramic** | **ceramic - GBMS** | **GBMS - GBMS** |
| **average MPa** | 1.930 | 2.660 | 3.170 |
| **failure type** | CF/SF | CF/SF | CF |
| **Note: CF = cohesive failure; AF = Adhesive failure; SF = Substrate failure** | | | |

**Table 19 - comparative data**

| Unibond No More Nails (original) | | | |
|---|---|---|---|
| **Lap shear results** | | | |
| | **ceramic-ceramic** | **ceramic - GBMS** | **GBMS - GBMS** |
| | **20% RH, 20°C** | | |
| **average kg** | 0.9 | 1.9 | 4.7 |
| **average MPa** | 0.040 | 0.085 | 0.215 |
| **failure type** | CF | CF | CF |
| | **85% RH, 30°C** | | |
| **average kg** | 0.8 | 3.3 | 66.4 |
| **average MPa** | 0.035 | 0.150 | 2.019 |
| **failure type** | CF | CF | CF |
| | **98% RH, 40°C** | | |
| **average kg** | 2.0 | 4.9 | 19.0 |
| **average MPa** | 0.090 | 0.225 | 0.865 |
| **failure type** | CF | CF | CF |
| | **98% RH, 65°C** | | |
| **average kg** | 2.0 | 8.7 | 14.9 |
| **average MPa** | 0.090 | 0.395 | 0.680 |
| **failure type** | CF | CF | CF |
| **Note: CF = cohesive failure; AF = Adhesive failure; SF = Substrate failure** | | | |

**Table 20 - comparative data**

| 3M 467MP | | | |
|---|---|---|---|
| **Lap shear results** | | | |
| | **ceramic-ceramic** | **ceramic - GBMS** | **GBMS - GBMS** |
| | **20% RH, 20°C** | | |
| **average kg** | 0.2 | 1.1 | 16.0 |
| **average MPa** | 0.020 | 0.100 | 0.487 |
| **failure type** | AF | CF | CF |
| | **85% RH, 30°C** | | |

(continued)

| 3M 467MP | | | |
|---|---|---|---|
| Lap shear results | | | |
| | ceramic-ceramic | ceramic - GBMS | GBMS - GBMS |
| average kg | 4.5 | 11.2 | 11.9 |
| average MPa | 0.205 | 0.510 | 0.545 |
| failure type | AF | CF | CF |
| | 98% RH, 40°C | | |
| average kg | 5.0 | 6.7 | 11.5 |
| average MPa | 0.230 | 0.305 | 0.525 |
| failure type | AF | CF | CF |
| | 98% RH, 65°C | | |
| average kg | 11.3 | 10.3 | 11.7 |
| average MPa | 0.515 | 0.470 | 0.535 |
| failure type | AF | CF | CF |
| Note: CF = cohesive failure; AF = Adhesive failure; SF = Substrate failure | | | |

**Table 21 - comparative data**

| Tesa Powerstrips | | | |
|---|---|---|---|
| lap shear results | | | |
| | ceramic-ceramic | ceramic - GBMS | GBMS - GBMS |
| | 20% RH, 20°C | | |
| average kg | 2.0 | 2.4 | 3.0 |
| average MPa | 0.18 | 0.22 | 0.27 |
| failure type | AF | AF | AF |
| | 85% RH, 30°C | | |
| average kg | 6.1 | 6.2 | 9.5 |
| average MPa | 0.280 | 0.285 | 0.435 |
| failure type | AF | **AF** | AF |
| | 98% RH, 40°C | | |
| average kg | 5.0 | 6.6 | 14.0 |
| average MPa | 0.230 | 0.300 | 0.640 |
| failure type | AF | AF | AF |
| | 98% RH, 65°C | | |
| average kg | 9.3 | 13.4 | 17.6 |
| average MPa | 0.425 | 0.610 | 0.805 |
| failure type | AF | AF | AF |
| Note: CF = cohesive failure; AF = Adhesive failure; SF = Substrate failure | | | |

The structural adhesive transfer tape as described in the present invention will support 30-270 kg, depending

on the material, humidity and temperature before it breaks.

**Table 22 - Lap shear experiments on GBMS**

| Lap shear results after curing on GBMS | | | | | | | | |
|---|---|---|---|---|---|---|---|---|
| | Tape 1 | | Nie wieder bohren (TEROSTAT MS 9380 WEISS DK310ML) | | Unibond No More Nails (original) | | 3M 467MP | |
| Curing | Load | N/mm2 | Load (N) | N/mm2 | Load (N) | N/mm2 | Load (N) | N/mm2 |
| 24 h@ RT | 1025.87 | 3.18 | 500.03 | 1.55 | 51.62 | 0.16 | 235.50 | 0.73 |
| | 983.93 | 3.05 | 571.00 | 1.77 | 87.10 | 0.27 | 209.69 | 0.65 |
| | 741.98 | 2.3 | 700.04 | 2.17 | - | - | 200.01 | 0.62 |
| | **Average** | **2.84** | **Average** | **1.83** | **Average** | **0.22** | **Average** | **0.67** |
| | **Std dev** | **0.48** | **Std dev** | **0.31** | **Std dev** | **0.08** | **Std dev** | **0.06** |
| 1 week @ RT | 1935.60 | 6.00 | 1080.71 | 3.35 | 883.92 | 2.74 | 206.46 | 0.64 |
| | 1342.02 | 4.16 | 1112.97 | 3.45 | 600.04 | 1.86 | 148.40 | 0.46 |
| | 2035.61 | 6.31 | 1248.46 | 3.87 | 541.97 | 1.68 | - | - |
| | **Average** | **5.49** | **Average** | **3.56** | **Average** | **2.09** | **Average** | **0.55** |
| | **Std dev** | **1.16** | **Std dev** | **0.28** | **Std dev** | **0.57** | **Std dev** | **0.13** |
| 1h @ 70°C + 24h RT | 1332.34 | 4.13 | 1035.55 | 3.21 | 274.21 | 0.85 | 190.33 | 0.59 |
| | 2529.18 | 7.84 | 832.31 | 2.58 | 145.17 | 0.45 | 209.69 | 0.65 |
| | 2216.26 | 6.87 | 1306.53 | 4.05 | 148.40 | 0.46 | 183.88 | 0.57 |
| | **Average** | **6.28** | **Average** | **3.28** | **Average** | **0.59** | **Average** | **0.60** |
| | **Std dev** | **1.92** | **Std dev** | **0.74** | **Std dev** | **0.23** | **Std dev** | **0.04** |
| 1h @ 120°C + 24h RT | 4255.09 | 13.19 | 1435.57 | 4.45 | 1067.81 | 3.31 | 329.05 | 1.02 |
| | 4306.71 | 13.35 | 664.56 | 2.06 | 971.03 | 3.01 | 193.56 | 0.60 |
| | 4538.98 | 14.07 | 980.70 | 3.04 | 925.86 | 2.87 | 306.47 | 0.95 |
| | **Average** | **13.54** | **Average** | **3.18** | **Average** | **3.06** | **Average** | **0.86** |
| | **Std dev** | **0.47** | **Std dev** | **1.20** | **Std dev** | **0.22** | **Std dev** | **0.23** |

Tape 1 outperformed the comparative samples in lap shear results after curing on GBMS, for all of the curing conditions shown in table 22.

**Table 23 - Lap shear experiments on wood**

| Lap shear results after curing on wood | | | | | | | | |
|---|---|---|---|---|---|---|---|---|
| | Tape 1 | | Nie wieder bohren (TEROSTAT MS 9380 WEISS DK310ML) | | Unibond No More Nails (original) | | 3M 467MP | |
| Curing | Load (N) | N/mm2 | Load (N) | N/mm2 | Load (N) | N/mm2 | Load (N) | N/mm2 |
| 24 h @ RT | 74.20 | 0.23 | 1058.13 | 3.28 | 1361.37 | 4.22 | 306.47 | 0.95 |
| | 783.92 | 2.43 | 893.60 | 2.77 | 1493.64 | 4.63 | 358.09 | 1.11 |
| | 903.28 | 2.80 | 1238.78 | 3.84 | 1274.27 | 3.95 | - | - |
| | **Average** | **1.82** | **Average** | **3.30** | **Average** | **4.27** | **Average** | **1.03** |
| | **Std dev** | **1.39** | **Std dev** | **0.54** | **Std dev** | **0.34** | **Std dev** | **0.11** |

(continued)

| Lap shear results after curing on wood | | | | | | | | |
|---|---|---|---|---|---|---|---|---|
| | Tape 1 | | Nie wieder bohren (TEROSTAT MS 9380 WEISS DK310ML) | | Unibond No More Nails (original) | | 3M 467MP | |
| Curing | Load (N) | N/mm2 | Load (N) | N/mm2 | Load (N) | N/mm2 | Load (N) | N/mm2 |
| 1 week @ RT | 1074.26 | 3.33 | 1277.50 | 3.96 | 1593.64 | 4.94 | 425.83 | 1.32 |
| | 861.34 | 2.67 | 1148.46 | 3.56 | 1467.83 | 4.55 | 416.15 | 1.29 |
| | 1003.29 | 3.11 | - | - | - | - | - | - |
| | **Average** | **3.04** | **Average** | **3.76** | **Average** | **4.75** | **Average** | **1.31** |
| | **Std dev** | **0.34** | **Std dev** | **0.28** | **Std dev** | **0.28** | **Std dev** | **0.02** |
| 1h @ 70°C + 24h RT | 1471.06 | 4.56 | 1125.87 | 3.49 | 1293,63 | 4.01 | 322.60 | 1.00 |
| | 787.14 | 2.44 | 1067.81 | 3.31 | 1145,23 | 3.55 | 419.38 | 1.30 |
| | 977.48 | 3.03 | 1222.65 | 3.79 | - | - | - | - |
| | **Average** | **3.34** | **Average** | **3.53** | **Average** | **3.78** | **Average** | **1.15** |
| | **Std dev** | **1.09** | **Std dev** | **0.24** | **Std dev** | **0.33** | **Std dev** | **0.21** |

**Table 24 - Lap shear experiments on glass**

| lap shear results after curing on glass | | | | | | | | |
|---|---|---|---|---|---|---|---|---|
| | Tape 1 | | Nie wieder bohren (TEROSTAT MS 9380 WEISS DK310ML) | | Unibond No More Nails (original) | | 3M 467MP | |
| Curing | Load (N) | N/mm2 | Load (N) | N/mm2 | Load (N) | N/mm2 | Load (N) | N/mm2 |
| 24 h @ RT | 293.57 | 0.91 | 954.90 | 2.96 | - | failed | 151.62 | 0.47 |
| | 48.39 | 0.15 | 1771.07 | 5.49 | - | failed | 187.11 | 0.58 |
| | 661.33 | 2.05 | 919.41 | 2.85 | - | failed | - | - |
| | **Average** | **1.04** | **Average** | **3.77** | **Average** | **-** | **Average** | **0.53** |
| | **Std dev** | **0.96** | **Std dev** | **1.49** | **Std dev** | **-** | **Std dev** | **0.08** |
| 1 week @ RT | 651.65 | 2.02 | 1012.96 | 3.14 | 64.52 | 0.20 | 283.89 | 0.88 |
| | 293.57 | 0.91 | 1351.69 | 4.19 | 74.20 | 0.23 | 222.59 | 0.69 |
| | 693.59 | 2.15 | - | - | - | - | 0.00 | - |
| | **Average** | **1.69** | **Average** | **3.67** | **Average** | **0.22** | **Average** | **0.79** |
| | **Std dev** | **0.68** | **Std dev** | **0.74** | **Std dev** | **0.02** | **Std dev** | **0.13** |
| 1h @ 70°c + 24h RT | 912.96 | 2.83 | 400.02 | 1.24 | 32.26 | 0.10 | 429.06 | 1.33 |
| | 1412.99 | 4.38 | 358.09 | 1.11 | 32.26 | 0.10 | 361.31 | 1.12 |
| | 551.65 | 1.71 | 1377.50 | 4.27 | 32.26 | 0.10 | - | - |
| | **Average** | **2.97** | **Average** | **2.21** | **Average** | **0.10** | **Average** | **1.23** |
| | **Std dev** | **1.34** | **Std dev** | **1.79** | **Std dev** | **0.00** | **Std dev** | **0.15** |
| **Failed = bond failed without applying force** | | | | | | | | |

Tables 25-27 display the lap shear results for Tape 1 adhesion of ceramic-ceramic; ceramic-GBMS; and GBMS-GBMS. Curing conditions: bonds were achieved ***without*** clamping and were directly exposed to the high temperature and humidity environment and tested according to STM 700. Bond strengths were measured at RT.

**Table 25**

| Tape 1 | | | | | | | | | | |
|---|---|---|---|---|---|---|---|---|---|---|
| lap shear results over time at 30°C and 85% relative humidity | | | | | | | | | | |
| Aging | 24h | | 48 h | | 100h | | 500 h | | 1000 h | |
| | Load (N) | N/mm2 | Load (N) | N/mm2 | Load (N) | N/mm2 | Load (N) | N/mm2 | Load (N) | N/mm2 |
| Ceramic-ceramic | 854.89 | 2.65 | 293.57 | 0.91 | 45.16 | 0.14 | 490.35 | 1.52 | 138.72 | 0.43 |
| | 6.13 | 0.02 | 309.70 | 0.96 | 332.28 | 1.03 | 283.89 | 0.88 | FAILED | |
| | 558.10 | 1.73 | FAILED | | FAILED | | 393.57 | 1.22 | FAILED | |
| | **Average** | **1.47** | **Average** | **0.94** | **Average** | **0.59** | **Average** | **1.21** | **Average** | **0.43** |
| | **Std dev** | **1.34** | **Std dev** | **0.04** | **Std dev** | **0.63** | **Std dev** | **0.32** | **Std dev** | **#DIV/0!** |
| Ceramic-GBMS | 603.26 | 1.87 | 393.57 | 1.22 | 1235.56 | 3.83 | 296.79 | 0.92 | 151.62 | 0.47 |
| | 880.70 | 2.73 | 41.94 | 0.13 | 406.48 | 1.26 | 248.40 | 0.77 | 283.89 | 0.88 |
| | 680.69 | 2.11 | 748.43 | 2.32 | 625.84 | 1.94 | 358.09 | 1.11 | 70.97 | 0.22 |
| | **Average** | **2.24** | **Average** | **1.22** | **Average** | **2.34** | **Average** | **0.93** | **Average** | **0.52** |
| | **Std dev** | **0.44** | **Std dev** | **1.10** | **Std dev** | **1.33** | **Std dev** | **0.17** | **Std dev** | **0.33** |
| GBMS-GBMS | 974.25 | 3.02 | 119.36 | 0.37 | 1132.33 | 3.51 | 1000.06 | 3.10 | 3064.70 | 9.50 |
| | 681.98 | 2.11 | 67.75 | 0.21 | 1290.40 | 4.00 | 129.04 | 0.40 | 1451.70 | 4.50 |
| | 893.60 | 2.77 | 106.46 | 0.33 | 1561.38 | 4.84 | 1258.14 | 3.90 | 2838.88 | 8.80 |
| | **Average** | **2.63** | **Average** | **0.30** | **Average** | **4.12** | **Average** | **2.47** | **Average** | **7.60** |
| | **Std dev** | **0.47** | **Std dev** | **0.08** | **Std dev** | **0.67** | **Std dev** | **1.83** | **Std dev** | **2.71** |
| Failed = bond failed without applying force | | | | | | | | | | |

**Table 26**

| Tape 1 | | | | | | | | | | |
|---|---|---|---|---|---|---|---|---|---|---|
| **lap shear results over time at 40°C and 98% relative humidity** | | | | | | | | | | |
| **Aging** | **24h** | | **48 h** | | **100h** | | **500 h** | | **1000 h** | |
| | **Load (N)** | **N/mm2** | **Load (N)** | **N/mm2** | **Load (N)** | **N/mm2** | **Load (N)** | **N/mm2** | **Load (N)** | **N/mm2** |
| **Ceramic ceramic** | Failed | | 389.06 | 1.21 | Failed | | 77.42 | 0.24 | 116.14 | 0.36 |
| | 96.78 | 0.30 | 145.17 | 0.45 | 16.13 | 0.05 | 103.23 | 0.32 | 222.59 | 0.69 |
| | 345.18 | 1.07 | 356.15 | 1.10 | 183.88 | 0.57 | 174.20 | 0.54 | 83.88 | 0.26 |
| | **Average** | **0.69** | **Average** | **0.92** | **Average** | **0.31** | **Average** | **0.37** | **Average** | **0.44** |
| | **Std dev** | **0.54** | **Std dev** | **0.41** | **Std dev** | **0.37** | **Std dev** | **0.16** | **Std dev** | **0.23** |
| **Ceramic GBMS** | 1422.67 | 4.41 | 3.23 | 0.01 | 212.92 | 0.66 | 67.75 | 0.21 | 35.49 | 0.11 |
| | 216.14 | 0.67 | 461.32 | 1.43 | 22.58 | 0.07 | 148.40 | 0.46 | 103.23 | 0.32 |
| | 467.77 | 1.45 | Failed | | Failed | | 132.27 | 0.41 | Failed | |
| | **Average** | **2.18** | **Average** | **0.72** | **Average** | **0.37** | **Average** | **0.36** | **Average** | **0.22** |
| | **Std dev** | **1.97** | **Std dev** | **1.00** | **Std dev** | **0.42** | **Std dev** | **0.13** | **Std dev** | **0.15** |
| **GBMS-GBMS** | 554.87 | 1.72 | 112.91 | 0.35 | 1332.34 | 4.13 | 1419.44 | 4.40 | 2129.16 | 6.60 |
| | 1264.59 | 3.92 | 109.68 | 0.34 | 1661.39 | 5.15 | 2161.42 | 6.70 | 1387.18 | 4.30 |
| | 1390.41 | 4.31 | 116.14 | 0.36 | 2077.54 | 6.44 | 1096.84 | 3.40 | 1903.34 | 5.90 |
| | **Average** | **3.32** | **Average** | **0.35** | **Average** | **5.24** | **Average** | **4.83** | **Average** | **5.60** |
| | **Std dev** | **1.40** | **Std dev** | **0.01** | **Std dev** | **1.16** | **Std dev** | **1.69** | **Std dev** | **1.18** |
| **Failed = bond failed without applying force** | | | | | | | | | | |

Tables 27-31 compare suitability of Tape 1 with alternative commercially available products. The comparative lap shear experiment results are displayed in Tables 25-31. Curing conditions: bonds were achieved ***without*** clamping and were directly exposed to the high temperature and humidity environment and tested according to STM 700. Bond strengths were measured at RT.

**Table 27**

| Tape 1 | | | | | | | | | | |
|---|---|---|---|---|---|---|---|---|---|---|
| **Lap shear results over time at room temperature and 30%-35% relative humidity** | | | | | | | | | | |
| **Aging** | **24h** | | **48 h** | | **100h** | | **500 h** | | **1000 h** | |
| | **Load (N)** | **N/mm2** | **Load (N)** | **N/mm2** | **Load (N)** | **N/mm2** | **Load (N)** | **N/mm2** | **Load (N)** | **N/mm2** |
| **Ceramic-ceramic** | 264.53 | 0.82 | 70.97 | 0.22 | 696.82 | 2.16 | 948.44 | 2.94 | 874.25 | 2.71 |
| | 441.96 | 1.37 | 361.31 | 1.12 | 419.38 | 1.30 | 696.82 | 2.16 | 877.47 | 2.72 |
| | 232.27 | 0.72 | 80.65 | 0.25 | 396.80 | 1.23 | 751.66 | 2.33 | 1035.55 | 3.21 |
| | **Average** | **0.97** | **Average** | **0.53** | **Average** | **1.56** | **Average** | **2.48** | **Average** | **2.88** |
| | **Std dev** | **0.35** | **Std dev** | **0.51** | **Std dev** | **0.52** | **Std dev** | **0.41** | **Std dev** | **0.29** |
| **Ceramic-GBMS** | 248.40 | 0.77 | 667.78 | 2.07 | 1000.06 | 3.10 | 1490.41 | 4.62 | 1235.56 | 3.83 |
| | 258.08 | 0.80 | 693.59 | 2.15 | 641.97 | 1.99 | 887.15 | 2.75 | 519.39 | 1.61 |
| | 245.18 | 0.76 | 432.28 | 1.34 | 280.66 | 0.87 | 1393.63 | 4.32 | 651.65 | 2.02 |
| | **Average** | **0.78** | **Average** | **1.85** | **Average** | **1.99** | **Average** | **3.90** | **Average** | **2.49** |
| | **Std dev** | **0.02** | **Std dev** | **0.45** | **Std dev** | **1.12** | **Std dev** | **1.00** | **Std dev** | **1.18** |
| **Ceramic-Aluminium** | 64.52 | 0.20 | 41.94 | 0.13 | 319.37 | 0.99 | 1087.16 | 3.37 | 1183.94 | 3.67 |
| | 67.75 | 0.21 | 232.27 | 0.72 | 264.53 | 0.82 | 780.69 | 2.42 | 1164.59 | 3.61 |
| | 70.97 | 0.22 | 138.72 | 0.43 | 290.34 | 0.90 | 974.25 | 3.02 | 1187.17 | 3.68 |
| | **Average** | **0.21** | **Average** | **0.43** | **Average** | **0.90** | **Average** | **2.94** | **Average** | **3.65** |
| | **Std dev** | **0.01** | **Std dev** | **0.30** | **Std dev** | **0.09** | **Std dev** | **0.48** | **Std dev** | **0.04** |
| **GBMS-GBMS** | 345.18 | 1.07 | 964.57 | 2.99 | 1003.29 | 3.11 | 1290.40 | 4.00 | 1129.10 | 3.50 |
| | 251.63 | 0.78 | 196.79 | 0.61 | 1380.73 | 4.28 | 1000.06 | 3.10 | 1129.10 | 3.50 |
| | 200.01 | 0.62 | 358.09 | 1.11 | 706.49 | 2.19 | 1322.66 | 4.10 | 2645.32 | 8.20 |
| | **Average** | **0.82** | **Average** | **1.57** | **Average** | **3.19** | **Average** | **3.73** | **Average** | **5.07** |
| | **Std dev** | **0.23** | **Std dev** | **1.25** | **Std dev** | **1.05** | **Std dev** | **0.55** | **Std dev** | **2.71** |

Table 28

| Nie wieder bohren (TEROSTAT MS 9380 WEISS DK310ML) | | | | | | | | |
|---|---|---|---|---|---|---|---|---|
| **Lap shear results over time at room temperature and 30%-35% relative humidity** | | | | | | | | |
| **Aging** | **24h** | | **48 h** | | **100h** | | **500 h** | |
| | **Load (N)** | **N/mm2** | **Load (N)** | **N/mm2** | **Load (N)** | **N/mm2** | **Load (N)** | **N/mm2** |
| **Ceramic-ceramic** | 574.23 | 1.78 | 664.56 | 2.06 | 893.60 | 2.77 | 1090.39 | 3.38 |
| | 409.70 | 1.27 | 716.17 | 2.22 | 745.21 | 2.31 | 732.30 | 2.27 |
| | 464.54 | 1.44 | 709.72 | 2.20 | 822.63 | 2.55 | 548.42 | 1.70 |
| | **Average** | **1.50** | **Average** | **2.16** | **Average** | **2.54** | **Average** | **2.45** |
| | **Std dev** | **0.26** | **Std dev** | **0.09** | **Std dev** | **0.23** | **Std dev** | **0.85** |
| **Ceramic-GBMS** | 161.30 | 0.50 | 403.25 | 1.25 | 687.14 | 2.13 | 819.40 | 2.54 |
| | 558.10 | 1.73 | 612.94 | 1.90 | 1058.13 | 3.28 | 1109.74 | 3.44 |
| | 696.82 | 2.16 | 745.21 | 2.31 | 877.47 | 2.72 | 932.31 | 2.89 |
| | **Average** | **1.46** | **Average** | **1.82** | **Average** | **2.71** | **Average** | **2.96** |
| | **Std dev** | **0.86** | **Std dev** | **0.53** | **Std dev** | **0.58** | **Std dev** | **0.45** |
| **Ceramic-Aluminium** | 200.01 | 0.62 | 300.02 | 0.93 | 400.02 | 1.24 | 541.97 | 1.68 |
| | 174.20 | 0.54 | 261.31 | 0.81 | 393.57 | 1.22 | 435.51 | 1.35 |
| | 193.56 | 0.60 | 258.08 | 0.80 | 393.57 | 1.22 | 464.54 | 1.44 |
| | **Average** | **0.59** | **Average** | **0.85** | **Average** | **1.23** | **Average** | **1.49** |
| | **Std dev** | **0.04** | **Std dev** | **0.07** | **Std dev** | **0.01** | **Std dev** | **0.17** |
| **GBMS-GBMS** | 500.03 | 1.55 | 803.27 | 2.49 | 980.70 | 3.04 | 941.99 | 2.92 |
| | 571.00 | 1.77 | 841.99 | 2.61 | 458.09 | 1.42 | 1019.42 | 3.16 |
| | 700.04 | 2.17 | 806.50 | 2.50 | 722.62 | 2.24 | 967.80 | 3.00 |
| | **Average** | **1.83** | **Average** | **2.53** | **Average** | **2.23** | **Average** | **3.03** |
| | **Std dev** | **0.31** | **Std dev** | **0.07** | **Std dev** | **0.81** | **Std dev** | **0.12** |

Table 29

| Unibond No More Nails (original) | | | | | | | | |
|---|---|---|---|---|---|---|---|---|
| **lap shear results over time at room temperature and 30%-35% relative humidity** | | | | | | | | |
| **Aging** | **24h** | | **48 h** | | **100 h** | | **500 h** | |
| | **Load (N)** | **N/mm2** | **Load (N)** | **N/mm2** | **Load (N)** | **N/mm2** | **Load (N)** | **N/mm2** |
| **Ceramic-ceramic** | 16.13 | 0.05 | 19.36 | 0.06 | 51.62 | 0.16 | 58.07 | 0.18 |
| | 9.68 | 0.03 | 19.36 | 0.06 | 54.84 | 0.17 | 96.78 | 0.30 |
| | **Average** | **0.04** | **Average** | **0.06** | **Average** | **0.17** | **Average** | **0.24** |
| | **Std dev** | **0.01** | **Std dev** | **0.00** | **Std dev** | **0.01** | **Std dev** | **0.08** |
| **Ceramic-GBMS** | 41.94 | 0.13 | 22.58 | 0.07 | 135.49 | 0.42 | 406.48 | 1.26 |
| | 12.90 | 0.04 | 25.81 | 0.08 | 116.14 | 0.36 | 429.06 | 1.33 |
| | **Average** | **0.09** | **Average** | **0.08** | **Average** | **0.39** | **Average** | **1.30** |
| | **Std dev** | **0.06** | **Std dev** | **0.01** | **Std dev** | **0.04** | **Std dev** | **0.05** |

(continued)

| Unibond No More Nails (original) | | | | | | | | |
|---|---|---|---|---|---|---|---|---|
| lap shear results over time at room temperature and 30%-35% relative humidity | | | | | | | | |
| Aging | 24h | | 48 h | | 100 h | | 500 h | |
| | Load (N) | N/mm2 | Load (N) | N/mm2 | Load (N) | N/mm2 | Load (N) | N/mm2 |
| Ceramic-Aluminium | 22.58 | 0.07 | 19.36 | 0.06 | 61.29 | 0.19 | 106.46 | 0.33 |
| | 19.36 | 0.06 | 22.58 | 0.07 | 51.62 | 0.16 | 187.11 | 0.58 |
| | **Average** | **0.07** | **Average** | **0.07** | **Average** | **0.18** | **Average** | **0.46** |
| | **Std dev** | **0.01** | **Std dev** | **0.01** | **Std dev** | **0.02** | **Std dev** | **0.18** |
| GBMS-GBMS | 51.62 | 0.16 | 100.01 | 0.31 | 80.65 | 0.25 | 554.87 | 1.72 |
| | 87.10 | 0.27 | 80.65 | 0.25 | 212.92 | 0.66 | 509.71 | 1.58 |
| | **Average** | **0.22** | **Average** | **0.28** | **Average** | **0.46** | **Average** | **1.65** |
| | **Std dev** | **0.08** | **Std dev** | **0.04** | **Std dev** | **0.29** | **Std dev** | **0.10** |

**Table 30**

| 3M 467MP | | | | | | | | |
|---|---|---|---|---|---|---|---|---|
| lap shear results over time at room temperature and 30%-35% relative humidity | | | | | | | | |
| Aging | 24h | | 48 h | | 100h | | 500 h | |
| | Load (N) | N/mm2 | Load (N) | N/mm2 | Load (N) | N/mm2 | Load (N) | N/mm2 |
| Ceramic-ceramic | 6.45 | 0.02 | 6.45 | 0.02 | 32.26 | 0.10 | 16.13 | 0.05 |
| | **Average** | **0.02** | **Average** | **0.02** | **Average** | **0.10** | **Average** | **0.05** |
| Ceramic-GBMS | 32.26 | 0.10 | 19.36 | 0.06 | 51.62 | 0.16 | 251.63 | 0.78 |
| | **Average** | **0.10** | **Average** | **0.06** | **Average** | **0.16** | **Average** | **0.78** |
| Ceramic-Aluminium | 48.39 | 0.15 | 22.58 | 0.07 | 16.13 | 0.05 | 29.03 | 0.09 |
| | **Average** | **0.15** | **Average** | **0.07** | **Average** | **0.05** | **Average** | **0.09** |
| GBMS-GBMS | 235.50 | 0.73 | 129.04 | 0.40 | 12.90 | 0.04 | 19.36 | 0.06 |
| | 209.69 | 0.65 | - | - | - | - | - | - |
| | 200.01 | 0.62 | - | - | - | - | - | - |
| | **Average** | **0.67** | **Average** | **0.40** | **Average** | **0.04** | **Average** | **0.06** |
| | **Std dev** | **0.06** | **Std dev** | | **Std dev** | | **Std dev** | |

**Table 31**

| Tesa Powerstrips | | | | | | | | |
|---|---|---|---|---|---|---|---|---|
| lap shear results over time at room temperature and 30%-35% relative humidity | | | | | | | | |
| Aging | 24 h | | 48 h | | 100 h | | 500 h | |
| | Load (N) | N/mm2 | Load (N) | N/mm2 | Load (N) | N/mm2 | Load (N) | N/mm2 |
| Ceramic-ceramic | 87.10 | 0.27 | 83.88 | 0.26 | 209.69 | 0.65 | 87.10 | 0.27 |
| | **Average** | **0.27** | **Average** | **0.26** | **Average** | **0.65** | **Average** | **0.27** |

(continued)

| Tesa Powerstrips | | | | | | | | |
|---|---|---|---|---|---|---|---|---|
| lap shear results over time at room temperature and 30%-35% relative humidity | | | | | | | | |
| Aging | 24 h | | 48 h | | 100 h | | 500 h | |
| | Load (N) | N/mm2 | Load (N) | N/mm2 | Load (N) | N/mm2 | Load (N) | N/mm2 |
| Ceramic-GBMS | 70.97 | 0.22 | 45.16 | 0.14 | 77.42 | 0.24 | 58.07 | 0.18 |
| | **Average** | **0.22** | **Average** | **0.14** | **Average** | **0.24** | **Average** | **0.18** |
| Ceramic-Aluminium | 96.78 | 0.30 | 45.16 | 0.14 | 103.23 | 0.32 | 106.46 | 0.33 |
| | **Average** | **0.30** | **Average** | **0.14** | **Average** | **0.32** | **Average** | **0.33** |
| GBMS-GBMS | 58.07 | 0.18 | 58.07 | 0.18 | 61.29 | 0.19 | 77.42 | 0.24 |
| | **Average** | **0.18** | **Average** | **0.18** | **Average** | **0.19** | **Average** | **0.24** |

Tables 32 and 33, display the suitability of Tape 1 and 3M 467MP in lap shear experiments after curing and aging at room temperature. Curing conditions: Performed according to STM 700 on GBMS with clamping for the curing conditions indicated. Clamps were removed after the curing time and the specimen were stored at ambient temperatures for the time indicated. Bond strength was measured at RT.

## Table 32

| Tape 1 | | | | | | | | | | |
|---|---|---|---|---|---|---|---|---|---|---|
| lap shear results after curing and aging at room temperature | | | | | | | | | | |
| Aging | 24h | | 48 h | | 100h | | 500 h | | 1000 h | |
| Curing | Load (N) | N/mm2 | Load (N) | N/mm2 | Load (N) | N/mm2 | Load (N) | N/mm2 | Load (N) | N/mm2 |
| 24h @ RT | 1561.38 | 4.84 | 1867.85 | 5.79 | 1754.94 | 5.44 | 2158.19 | 6.69 | 2451.76 | 7.60 |
| | 1777.53 | 5.51 | 1983.99 | 6.15 | 2125.93 | 6.59 | 2116.26 | 6.56 | 1361.37 | 4.22 |
| | 1958.18 | 6.07 | 1477.51 | 4.58 | 2071.09 | 6.42 | 2835.65 | 8.79 | 1967.86 | 6.10 |
| | **Average** | **5.47** | **Average** | **5.51** | **Average** | **6.15** | **Average** | **7.35** | **Average** | **5.97** |
| | **Std dev** | **0.62** | **Std dev** | **0.82** | **Std dev** | **0.62** | **Std dev** | **1.25** | **Std dev** | **1.69** |
| 1week @ RT | 3080.83 | 9.55 | 1871.08 | 5.80 | 1438.80 | 4.46 | 996.83 | 3.09 | 3332.46 | 10.33 |
| | 1919.47 | 5.95 | 1761.40 | 5.46 | 1445.25 | 4.48 | 1606.55 | 4.98 | 2900.17 | 8.99 |
| | 1342.02 | 4.16 | 1638.81 | 5.08 | 1732.36 | 5.37 | 1754.94 | 5.44 | 2300.14 | 7.13 |
| | **Average** | **6.55** | **Average** | **5.45** | **Average** | **4.77** | **Average** | **4.50** | **Average** | **8.82** |
| | **Std dev** | **2.75** | **Std dev** | **0.36** | **Std dev** | **0.52** | **Std dev** | **1.25** | **Std dev** | **1.61** |
| 1h @ 120°C +24h RT | 4122.83 | 12.78 | 2813.07 | 8.72 | 4693.83 | 14.55 | 5313.22 | 16.47 | 4029.27 | 12.49 |
| | 2574.35 | 7.98 | 3603.44 | 11.17 | 4848.68 | 15.03 | 5326.13 | 16.51 | 3713.13 | 11.51 |
| | 3971.21 | 12.31 | 4042.18 | 12.53 | 3938.95 | 12.21 | 4222.83 | 13.09 | 3797.00 | 11.77 |
| | **Average** | **11.02** | **Average** | **10.81** | **Average** | **13.93** | **Average** | **15.36** | **Average** | **11.92** |
| | **Std dev** | **2.65** | **Std dev** | **1.93** | **Std dev** | **1.51** | **Std dev** | **1.96** | **Std dev** | **0.51** |

**Table 33**

| 3M 467MP | | | | | | | | |
|---|---|---|---|---|---|---|---|---|
| **Lap shear results after curing and aging at room temperature** | | | | | | | | |
| **Aging** | **24h** | | **48 h** | | **100h** | | **500 h** | |
| **Curing** | **Load (N)** | **N/mm2** | **Load (N)** | **N/mm2** | **Load (N)** | **N/mm2** | **Load (N)** | **N/mm2** |
| **24h @ RT** | 190.33 | 0.59 | 238.72 | 0.74 | 222.59 | 0.69 | 183.88 | 0.57 |
| | 141.94 | 0.44 | 335.50 | 1.04 | 87.10 | 0.27 | 319.37 | 0.99 |
| | **Average** | **0.52** | **Average** | **0.89** | **Average** | **0.48** | **Average** | **0.78** |
| | **Std dev** | **0.11** | **Std dev** | **0.21** | **Std dev** | **0.30** | **Std dev** | **0.30** |
| **1h @ 120°C +24h RT** | 216.14 | 0.67 | 322.60 | 1.00 | 287.11 | 0.89 | 148.40 | 0.46 |
| | 183.88 | 0.57 | 280.66 | 0.87 | 193.56 | 0.60 | 367.76 | 1.14 |
| | **Average** | **0.62** | **Average** | **0.94** | **Average** | **0.75** | **Average** | **0.80** |
| | **Std dev** | **0.07** | **Std dev** | **0.09** | **Std dev** | **0.21** | **Std dev** | **0.48** |

Tables 34 and 35 display the suitability of Tape 1 and 3M 467MP in lap shear experiments over time at different temperatures. Curing conditions: Performed according to STM 700 with clamping for the curing conditions indicated on GBMS. Clamps were removed after the curing time and the specimen were stored at different temperatures for the time indicated. Bond strength was measured at RT.

**Table 34**

| **Tape 1** | | | | | | | | | | | |
|---|---|---|---|---|---|---|---|---|---|---|---|
| **Lap shear results over time at different temperatures** | | | | | | | | | | | |
| **Cure** | **24 h @ RT** | | | | | | | | | | |
| **Aging temperature** | **initial values N/mm$^2$** | **24 h N/mm$^2$** | | **48 h N/mm$^2$** | | **100 h N/mm$^2$** | | **500 h N/mm$^2$** | | **1000 h N/mm$^2$** | |
| **35°C** | 2.84 | 7.13 | | 6.33 | | 6.59 | | 7.74 | | 7.01 | |
| **60°C** | | 13.49 | | 12.49 | | 8.98 | | 13.53 | | 13.22 | |
| **80°C** | | 12.9 | | 13.01 | | 12.12 | | 13.11 | | 11.92 | |
| **100°C** | | 13.62 | | 13.84 | | 13.23 | | 12.77 | | Not perf | |
| **Cure** | **1 week @ RT** | | | | | | | | | | |
| **Aging temperature** | **initial values N/mm$^2$** | **24 h N/mm$^2$** | | **48 h N/mm$^2$** | | **100 h N/mm$^2$** | | **500 h N/mm$^2$** | | **1000 h N/mm$^2$** | |
| **35°C** | 5.49 | 7.62 | | 7.12 | | 7.22 | | 9.54 | | 10.76 | |
| **60°c** | | 10.77 | | 10.64 | | 7.03 | | 8.49 | | 13.82 | |
| **80°C** | | 9.86 | | 11.67 | | 11.55 | | 13.24 | | 13.56 | |
| **100°C** | | 10.36 | | 11.92 | | 11.82 | | 14.48 | | 11.7 | |
| | | | | | | | | | | | |

(continued)

| **Cure** | **1h@120°C+24 h@ RT** | | | | | | | | | | |
|---|---|---|---|---|---|---|---|---|---|---|---|
| **Aging temperature** | **initial values N/mm²** | **24h N/mm²** | | **48 h N/mm²** | | **100 h N/mm²** | | **500 h N/mm²** | | **1000 h N/mm²** | |
| **35°C** | 8.48 | 10.1 | | 9.47 | | 9.95 | | 8.97 | | 11.4 | |
| **60°c** | | 11.11 | | 11.3 | | 11.39 | | 8.32 | | 3.8 | |
| **80°C** | | 10.86 | | 13.55 | | 15.41 | | 11.13 | | 12.3 | |
| **100°C** | | 14.1 | | 7.92 | | 5.42 | | 0.2 | | 12.6 | |

**Table 35 - comparative data**

| **3M 467MP** | | | | | | | | | |
|---|---|---|---|---|---|---|---|---|---|
| **Lap shear results over time at different temperatures** | | | | | | | | | |
| **Cure** | **24 h @ RT** | | | | | | | | |
| **Aging temperature** | **initial values N/mm²** | **24 h N/mm²** | | **48 h N/mm²** | | **100 h N/mm²** | | **500 h N/mm²** | |
| **60°C** | 0.67 | 0.67 | | 0.90 | | 0.59 | | 0.74 | |
| **100°C** | | 0.41 | | 0.41 | | 0.47 | | 1.45 | |
| | | | | | | | | | |
| **Cure** | **1h @ 120°C+24h RT** | | | | | | | | |
| **Aging temperature** | **initial values N/mm²** | **24 h N/mm²** | | **48 h N/mm²** | | **100 h N/mm²** | | **500 h N/mm²** | |
| **60°C** | 0.86 | 0.80 | | 0.86 | | 0.76 | | 0.48 | |
| **100°C** | | 0.41 | | 0.70 | | 0.56 | | 1.68 | |

In Table 36 the results of Tape 1 and 3M 467MP in lap shear experiments after curing at high temperature are displayed. Curing conditions: Performed according to STM 700 with clamping for the curing conditions indicated.

**Table 36**

| **Lap shear results after curing** | | | | |
|---|---|---|---|---|
| | **Tape 1** | | **3M 467MP** | |
| **Curing** | **Load (N)** | **N/mm2** | **Load (N)** | **N/mm2** |
| **1 h @150°C + 24h RT** | 4159.41 | 12.89 | 412.93 | 1.28 |
| | 4366.95 | 13.54 | 461.32 | 1.43 |
| | 4266.02 | 13.22 | 77.42 | 0.24 |
| | **Average** | **13.22** | **Average** | **0.98** |
| | **Std dev** | **0.33** | **Std dev** | **0.65** |
| **1h @175°C + 24h RT** | 4384.77 | 13.59 | 280.66 | 0.87 |
| | 4625.14 | 14.34 | 529.06 | 1.64 |
| | 4566.57 | 14.16 | 438.74 | 1.36 |
| | **Average** | **14.03** | **Average** | **1.29** |
| | **Std dev** | **0.39** | **Std dev** | **0.39** |

(continued)

| Lap shear results after curing | | | | |
|---|---|---|---|---|
| | Tape 1 | | 3M 467MP | |
| **Curing** | **Load (N)** | **N/mm2** | **Load (N)** | **N/mm2** |
| **1h @ 200°C + 24h RT** | 1777.48 | 5.51 | 835.53 | 2.59 |
| | 2335.62 | 7.24 | 1106.52 | 3.43 |
| | 2016.07 | 6.25 | 729.08 | 2.26 |
| | **Average** | **6.33** | **Average** | **2.76** |
| | **Std dev** | **0.87** | **Std dev** | **0.60** |

As is evident from the results in Table 36: Tape 1 outperformed the comparative sample under all high curing temperature conditions tested.

**Solvent resistance**

GBMS test specimen were cured and clamped according to STM 700. Clamps were removed (initial tensile strength was then determined) and the bonded lap shear specimen immersed in the solvent indicated or left under the environmental conditions indicated. After 24h, 48h, 100h and 500h lap shears were removed from the solvent/ environmental conditions, allowed to dry at ambient temperatures and subjected to tensile strength determination at room temperature.

**Table 37 - Lap shear results after curing for 24h @ RT**

| Tape 1 | | | | |
|---|---|---|---|---|
| **Solvent resistance test** | | | | |
| **Initial lap shear strength: 0.93 Mpa** | | | | |
| **solvent** | **temp.** | **% of the initial lap shear strength retained at** | | |
| | | **24h** | **100h** | **500h** |
| **motor oil** | **40** | **789** | **608** | **726** |
| **Unleaded gasoline** | **22** | **354** | **694** | **589** |
| **Ethanol** | **22** | **308** | **506** | **61** |
| **iso-propanol** | **22** | **281** | **503** | **404** |
| **Water** | **22** | **471** | **725** | **444** |
| **98% humidity** | **40** | **946** | **1044** | **708** |
| **Air** | **22** | **377** | **665** | **641** |

**Table 38 - Lap shear results after curing for 1h @ 120°C + 24 h RT**

| Tape 1 | | | | |
|---|---|---|---|---|
| **Solvent resistance test** | | | | |
| **initial lap shear strenght: 12.2 Mpa** | | | | |
| **solvent** | **temp.** | **% of the initial lap shear strength retained at** | | |
| | | **24h** | **100h** | **500h** |
| **motor oil** | **40** | **105** | **89** | **92** |
| **Unleaded gasoline** | **22** | **99** | **93** | **86** |
| **Ethanol** | **22** | **69** | **28** | **fail** |
| **iso-propanol** | **22** | **67** | **65** | **25** |

(continued)

| Tape 1 | | | | |
|---|---|---|---|---|
| Solvent resistance test | | | | |
| initial lap shear strenght: 12.2 Mpa | | | | |
| solvent | temp. | % of the initial lap shear strength retained at | | |
| | | 24h | 100h | 500h |
| Water | 22 | 71 | 89 | 60 |
| 98% humidity | 40 | 72 | 49 | 32 |
| Air | 22 | 114 | 123 | 61 |

**Table 39 - Lap shear results after curing for 24h @ RT**

| 3M 467MP | | | | |
|---|---|---|---|---|
| Solvent resistance test | | | | |
| initial lap shear strength: 0.67 Mpa | | | | |
| solvent | temp. | % of the initial lap shear strength retained at | | |
| | | 24h | 100h | 500h |
| Unleaded gasoline | 22 | 40 | 13 | fail |
| Ethanol | 22 | 16 | fail | fail |
| iso-propanol | 22 | 18 | fail | fail |
| Water | 22 | 90 | 107 | 72 |
| Air | 22 | 78 | 72 | 116 |

**Table 40 - Lap shear results after curing for 1h @ 120°C + 24h RT**

| 3M 467MP | | | | |
|---|---|---|---|---|
| Solvent resistance test | | | | |
| initial lap shear strength: 0.86 Mpa | | | | |
| solvent | temp. | % of the initial lap shear strenght retained at | | |
| | | 24h | 100h | 500h |
| Unleaded gasoline | 22 | 34 | 26 | fail |
| Ethanol | 22 | 27 | fail | fail |
| iso-propanol | 22 | 40 | fail | fail |
| Water | 22 | 55 | 55 | 50 |
| Air | 22 | 72 | 87 | 93 |

## Example 7

Adhesive articles as described in the present invention, such as Tape 1, support weight of up to 15 kg after 9 hours cure on a surface of 322.6 $mm^2$ thus outperforming the comparative sample by threefold.

High humidity and temperature accelerate cure and develop bond strengths. Hence, when applied in humid areas, the bond will become even stronger with time.

**Optoelectronics**

Structural adhesive transfer tapes as described in the present invention are particularly useful in the manufacture of optoelectronic and optical devices.
The following examples illustrate the suitability of adhesive articles as described in the present invention, for applicability in the optical and electronics industries.

**Materials**

**Substrates**

Wood specimen for lap shear experiments were cut from commercially available red beech wood in dimensions of ordinary lap shear panels. Nitrile Butadiene Rubber lap shear specimen were cut out of large mats in dimensions of ordinary lap shear panels in width but half the length. Mild steel lap shear specimen and aluminium lap shear specimen (as indicated) were grit blasted prior to use, using silicon carbide from Gyson at 4 bar pressure according to STM 700 on a 1ULA 1400 grit blasting machine. All other lap shear specimen were used as received. All tensile strength studies using lap shear specimen were carried out according to STM 700.

**Competitor samples**

3M 467MP double-sided transfer tape was used as a comparative sample. All competitor samples were applied as recommended by the suppliers. Preparation of lap shear specimen, application of the product and tensile strength tests were performed according to STM 700.

**Additives**

All additives were purchased from Sigma Aldrich and used as received without further purification.

**Storing**

Tapes were stored at 5°C or at room temperature in sealed aluminium pouches.

**Tensile strength determination**

Tensile strength of the lap shear bond was determined according to STM 700 on an Instron 5567 with 30kN, 1kN, and 100N load cell, respectively (Dublin), Zwick Tensile tester Z100 with 100kN and 1kN load cell (Dublin) and Zwick Tensile tester type 144501 (Duesseldorf).

**Refractive index**

Refractive indices were measured on a Bellingham + Stanley 44-501 Abbe refractometer at 22°C - 23°C.

**Example 8 - Tape 3**

The tape used here is based on a coatable mixture of a solid cyanoacrylate (50%, e.g. neopentyl CA, 2-phenyl ethyl CA), toughening agents such as Levamelt (50%) and additives like dyes, colourants and pigments (several weight%) in an appropriate solvent (chloroform, ethyl acetate). The mixture must be adequately liquid for coating and must show adequate stability.
A high refractive index (RI) and transparency are desired. Coating is carried out from solution onto a carrier liner to form a transferable film after drying.
The RI can be determined directly from the tape using an Abbey refractometer.
The tape is covered with a release liner with higher release properties than the one mentioned above. The tape is stored in a sealed pouch for later use or transferred from the liner to a part for immediate or subsequent bonding of (or fixation of) optical devices. It may also be used as an encapsulant and in packaging.
The curable composition in Tape 3 comprises a mixture of Levamelt (4 g, 36.08% total solid, 11.08 g solution in ethyl acetate), 2-phenyl ethyl cyanoacrylate (4 g), CSA (48 μg, 0.2 g stock solution in ethyl acetate), hydroquinone (6.4 mg, 0.8 g stock solution in ethyl acetate), beta carotene (0.04 g) is solved in ethyl acetate (0.47 g). The coating solution is transferred to a siliconized polyethylene carrier liner by an automatic coating device. The solvent is removed

at elevated temperatures. A coherent uniform film is left on the liner. The film is then covered by a release liner and stored in a heat-sealed aluminium pouch at lower temperatures.
The bond strength is determined by STM-700.

**Table 41 - Lap shear experiments on GBMS**

| Lap shear results on GBMS | | | | |
|---|---|---|---|---|
| | **Tape 3** | | **3M 467MP** | |
| **Curing** | **Load (N)** | **N/mm2** | **Load (N)** | **N/mm2** |
| **24 h @ RT** | 1025.87 | 3.18 | 235.50 | 0.73 |
| | 983.93 | 3.05 | 209.69 | 0.65 |
| | 741.98 | 2.3 | 200.01 | 0.62 |
| | **Average** | **2.84** | **Average** | **0.67** |
| | **Std dev** | **0.48** | **Std dev** | **0.06** |
| **1 week @ RT** | 1935.60 | 6.00 | 206.46 | 0.64 |
| | 1342.02 | 4.16 | 148.40 | 0.46 |
| | 2035.61 | 6.31 | - | |
| | **Average** | **5.49** | **Average** | **0.55** |
| | **Std dev** | **1.16** | **Std dev** | **0.13** |
| **1h @ 70°C + 24h RT** | 1332.34 | 4.13 | 190.33 | 0.59 |
| | 2529.18 | 7.84 | 209.69 | 0.65 |
| | 2216.26 | 6.87 | 183.88 | 0.57 |
| | **Average** | **6.28** | **Average** | **0.60** |
| | **Std dev** | **1.92** | **Std dev** | **0.04** |
| **1h @ 120°C + 24h RT** | 4255.09 | 13.19 | 329.05 | 1.02 |
| | 4306.71 | 13.35 | 193.56 | 0.60 |
| | 4538.98 | 14.07 | 306.47 | 0.95 |
| | **Average** | **13.54** | **Average** | **0.86** |
| | **Std dev** | **0.47** | **Std dev** | **0.23** |

As can be seen in Table 41, Tape 3 outperformed the comparative sample in lap shear experiments on GBMS for each of the curing conditions tested.

**Table 42 - Lap shear experiments on Wood**

| Lap shear results on wood | | | | |
|---|---|---|---|---|
| | **Tape 3** | | **3M 467MP** | |
| **Curing** | **Load (N)** | **$N/mm^2$** | **Load (N)** | **$N/mm^2$** |
| **24 h @ RT** | 74.20 | 0.23 | 306.47 | 0.95 |
| | 783.92 | 2.43 | 358.09 | 1.11 |
| | 903.28 | 2.80 | - | - |
| | **Average** | **1.82** | **Average** | **1.03** |
| | **Std dev** | **1.39** | **Std dev** | **0.11** |

(continued)

| Lap shear results on wood | | | | |
|---|---|---|---|---|
| | Tape 3 | | 3M 467MP | |
| Curing | Load (N) | $N/mm^2$ | Load (N) | $N/mm^2$ |
| 1 week @ RT | 1074.26 | 3.33 | 425.83 | 1.32 |
| | 861.34 | 2.67 | 416.15 | 1.29 |
| | 1003.29 | 3.11 | - | - |
| | **Average** | **3.04** | **Average** | **1.31** |
| | **Std dev** | **0.34** | **Std dev** | **0.02** |
| 1h @ 70°C + 24h RT | 1471.06 | 4.56 | 322.60 | 1.00 |
| | 787.14 | 2.44 | 419.38 | 1.30 |
| | 977.48 | 3.03 | - | - |
| | **Average** | **3.34** | **Average** | **1.15** |
| | **Std dev** | **1.09** | **Std dev** | **0.21** |

As can be seen in Table 42, Tape 3 outperformed the comparative sample in lap shear experiments on wood for each of the curing conditions.

**Table 44 - Lap shear experiments on glass**

| Lap shear results on glass | | | | |
|---|---|---|---|---|
| | Tape 3 | | 3M 467MP | |
| Curing | Load (N) | N/mm2 | Load (N) | N/mm2 |
| 24 h @ RT | 293.57 | 0.91 | 151.62 | 0.47 |
| | 48.39 | 0.15 | 187.11 | 0.58 |
| | 661.33 | 2.05 | - | |
| | **Average** | **1.04** | **Average** | **0.53** |
| | **Std dev** | **0.96** | **Std dev** | **0.08** |
| 1 week @ RT | 680.69 | 2.11 | 283.89 | 0.88 |
| | 383.89 | 1.19 | 222.59 | 0.69 |
| | 822.63 | 2.55 | - | |
| | **Average** | **1.95** | **Average** | **0.79** |
| | **Std dev** | **0.69** | **Std dev** | **0.13** |
| 1 h @ 70°C + 24h RT | 912.96 | 2.83 | 429.06 | 1.33 |
| | 1412.99 | 4.38 | 361.31 | 1.12 |
| | 551.65 | 1.71 | - | |
| | **Average** | **2.97** | **Average** | **1.23** |
| | **Std dev** | **1.34** | **Std dev** | **0.15** |

As can be seen in Table 44, Tape 3 outperformed the comparative sample in lap shear experiments on glass for each of the curing conditions.

**Table 45 - Lap shear experiments on Polycarbonate**

| lap shear results on Polycarbonate | Tape 3 | | 3M 467MP | |
|---|---|---|---|---|
| **Curing** | **Load (N)** | **N/mm2** | **Load (N)** | **N/mm2** |
| **24 h @ RT** | 32.26 | 0.10 | 258.08 | 0.80 |
| | 25.81 | 0.08 | 245.18 | 0.76 |
| | 19.36 | 0.06 | - | |
| | **Average** | **0.08** | **Average** | **0.78** |
| | **Std dev** | **0.02** | **Std dev** | **0.03** |
| **1 week @ RT** | 77.42 | 0.24 | 193.56 | 0.60 |
| | 64.52 | 0.20 | 216.14 | 0.67 |
| | 67.75 | 0.21 | - | |
| | **Average** | **0.22** | **Average** | **0.64** |
| | **Std dev** | **0.02** | **Std dev** | **0.05** |
| **1 h @ 70°C + 24h RT** | 200.01 | 0.62 | 200.01 | 0.62 |
| | 112.91 | 0.35 | 116.14 | 0.36 |
| | 216.14 | 0.67 | - | |
| | **Average** | **0.55** | **Average** | **0.49** |
| | **Std dev** | **0.17** | **Std dev** | **0.18** |

**Table 46 - Lap shear experiments on ABS**

| Lap shear results on ABS | Tape 3 | | 3M 467MP | |
|---|---|---|---|---|
| **Curing** | **Load (N)** | **N/mm2** | **Load (N)** | **N/mm2** |
| **24 h @ RT** | 451.64 | 1.40 | 148.40 | 0.46 |
| | 387.12 | 1.20 | 161.30 | 0.50 |
| | 148.40 | 0.46 | - | - |
| | **Average** | **1.02** | **Average** | **0.48** |
| | **Std dev** | **0.50** | **Std dev** | **0.03** |
| **1 week @ RT** | 1196.85 | 3.71 | 132.27 | 0.41 |
| | 1425.89 | 4.42 | 258.08 | 0.80 |
| | 1671.07 | 5.18 | - | - |
| | **Average** | **4.44** | **Average** | **0.61** |
| | **Std dev** | **0.74** | **Std dev** | **0.28** |
| **1 h @ 70°C + 24h** | 790.37 | 2.45 | 225.82 | 0.70 |
| **RT** | 696.82 | 2.16 | 254.85 | 0.79 |
| | 735.53 | 2.28 | - | - |
| | **Average** | **2.30** | **Average** | **0.75** |
| | **Std dev** | **0.15** | **Std dev** | **0.06** |

As can be seen in Table 46, Tape 3 outperformed the comparative sample in lap shear experiments on ABS for each of the curing conditions.

**Table 47 - Lap shear experiments on PC/ABS 6600**

| Lap shear results on PC/ABS blend | | | | |
|---|---|---|---|---|
| | **Tape 3** | | **3M 467MP** | |
| **Curing** | **Load (N)** | **N/mm2** | **Load (N)** | **N/mm2** |
| **24 h @ RT** | 438.74 | 1.36 | 90.33 | 0.28 |
| | 574.23 | 1.78 | 87.10 | 0.27 |
| | 258.08 | 0.80 | 87.10 | 0.27 |
| | - | | 70.97 | 0.22 |
| | **Average** | **1.31** | **Average** | **0.26** |
| | **Std dev** | **0.49** | **Std dev** | **0.03** |
| | 480.67 | 1.49 | 106.46 | 0.33 |
| **1 week @ RT** | 1245.24 | 3.86 | 129.04 | 0.40 |
| | 877.47 | 2.72 | 119.36 | 0.37 |
| | 512.93 | 1.59 | 109.68 | 0.34 |
| | **Average** | **2.42** | **Average** | **0.36** |
| | **Std dev** | **1.11** | **Std dev** | **0.03** |
| | 248.40 | 0.77 | 158.07 | 0.49 |
| **1 h @ 70°C + 24h RT** | 312.92 | 0.97 | 106.46 | 0.33 |
| | 571.00 | 1.77 | 145.17 | 0.45 |
| | 674.23 | 2.09 | 109.68 | 0.34 |
| | **Average** | **1.40** | **Average** | **0.40** |
| | **Std dev** | **0.63** | **Std dev** | **0.08** |

As can be seen in Table 47, Tape 3 outperformed the comparative sample in lap shear experiments on PC/ABS (polycarbonate/acrylonitrile butadiene styrene) for each of the curing conditions.

**Table 48 -Lap shear experiments on IXEF (acrylamide compounds)**

| Lap shear results on IXEF | | | | |
|---|---|---|---|---|
| | **Tape 3** | | **3M 467MP** | |
| **Curing** | **Load (N)** | **N/mm2** | **Load (N)** | **N/mm2** |
| | 64.52 | 0.20 | 61.29 | 0.19 |
| **24 h @ RT** | 32.26 | 0.10 | 112.91 | 0.35 |
| | 116.14 | 0.36 | 132.27 | 0.41 |
| | 58.07 | 0.18 | - | - |
| | **Average** | **0,21** | **Average** | **0.32** |
| | **Std dev** | **0,11** | **Std dev** | **0.11** |
| | 109.68 | 0.34 | 125.81 | 0.39 |

(continued)

| Lap shear results on IXEF | | | | |
|---|---|---|---|---|
| | Tape 3 | | 3M 467MP | |
| Curing | Load (N) | N/mm2 | Load (N) | N/mm2 |
| 1 week @ RT | 100.01 | 0.31 | 148.40 | 0.46 |
| | 132.27 | 0.41 | 132.27 | 0.41 |
| | 122.59 | 0.38 | 80.65 | 0.25 |
| | **Average** | **0.36** | **Average** | **0.38** |
| | **Std dev** | **0.04** | **Std dev** | **0.09** |
| | 1167.81 | 3.62 | 103.23 | 0.32 |
| 1 h @ 70°C + 24h RT | 1222.65 | 3.79 | 209.69 | 0.65 |
| | 951.67 | 2.95 | 109.68 | 0.34 |
| | 1132.33 | 3.51 | - | - |
| | **Average** | **3.47** | **Average** | **0.44** |
| | **Std dev** | **0.36** | **Std dev** | **0.19** |

Ixef® (arylamide) compounds typically contain 50-60% glass fiber reinforcement, giving them remarkable strength and rigidity. What makes them unique is that even with high glass loadings, the smooth, resin-rich surface delivers a high-gloss finish that is ideal for painting, metallization or for producing a naturally reflective shell.

As can be seen in Table 48, Tape 3 showed comparable performance to the comparative sample in lap shear experiments when curing was performed at RT. However, when curing was performed for 1 hour at 70 °C and 24 hours at RT, Tape 3 outperformed the comparative sample by almost a factor of 10.

**Table 49 - Lap shear experiments on Zinc Bichromate**

| Lap shear results on Zinc Bichromate | | | | |
|---|---|---|---|---|
| | Tape 3 | | 3M 467MP | |
| Curing | Load (N) | $N/mm^2$ | Load (N) | $N/mm^2$ |
| 24 h @ RT | 35.49 | 0.11 | 58.07 | 0.18 |
| | 58.07 | 0.18 | 141.94 | 0.44 |
| | 58.07 | 0.18 | - | - |
| | **Average** | **0.16** | **Average** | **0.31** |
| | **Std dev** | **0.04** | **Std dev** | **0.18** |
| 1 week @ RT | 1145.23 | 3.55 | 290.34 | 0.90 |
| | 1632.36 | 5.06 | 264.53 | 0.82 |
| | 1996.89 | 6.19 | - | - |
| | **Average** | **4.93** | **Average** | **0.86** |
| | **Std dev** | **1.32** | **Std dev** | **0.06** |
| 1h @ 70°C + 24h RT | 200.01 | 0.62 | 300.02 | 0.93 |
| | 264.53 | 0.82 | 170.98 | 0.53 |
| | 206.46 | 0.64 | - | - |
| | **Average** | **0.69** | **Average** | **0.73** |
| | **Std dev** | **0.11** | **Std dev** | **0.28** |

As can be seen in Table 49, Tape 3 outperformed the comparative sample in lap shear experiments on zinc bichromate after curing at RT for 1 week.

**Table 50 - Lap shear experiments on Anodized Aluminium**

| Lap shear results on Anodized Aluminium | | | | |
|---|---|---|---|---|
| **Tape** | **Tape 3** | | **3M 467MP** | |
| **Curing** | **Load (N)** | **N/mm2** | **Load (N)** | **N/mm2** |
| | 448.41 | 1.39 | 600.04 | 1.86 |
| | 716.17 | 2.22 | 287.11 | 0.89 |
| **24 h @ RT** | 900.05 | 2.79 | 493.58 | 1.53 |
| | 183.88 | 0.57 | 319.37 | 0.99 |
| | 535.52 | 1.66 | - | - |
| | **Average** | **1.73** | **Average** | **1.32** |
| | **Std dev** | **0.84** | **Std dev** | **0.46** |
| | 1303.30 | 4.04 | 516.16 | 1.60 |
| **1 week @ RT** | 2429.18 | 7.53 | 680.69 | 2.11 |
| | 2577.57 | 7.99 | 264.53 | 0.82 |
| | 1887.21 | 5.85 | 467.77 | 1.45 |
| | **Average** | **6.35** | **Average** | **1.50** |
| | **Std dev** | **1.80** | **Std dev** | **0.53** |
| | 1916.24 | 5.94 | 38.71 | 0.12 |
| **1h @ 70°C + 24h RT** | 2345.30 | 7.27 | 554.87 | 1.72 |
| | 1893.66 | 5.87 | 712.95 | 2.21 |
| | 1732.36 | 5.37 | 74.20 | 0.23 |
| | **Average** | **6.11** | **Average** | **1.07** |
| | **Std dev** | **0.81** | **Std dev** | **1.05** |

As can be seen in Table 50 Tape 3 outperformed the comparative sample in lap shear experiments on Anodized Aluminium at all curing conditions.

**Table 51 - Lap shear experiments on Magnesium Alloy.**

| lap shear results on Magnesium Alloy | | | | |
|---|---|---|---|---|
| | **Tape 3** | | **3M 467MP** | |
| **Curing** | **Load (N)** | **N/mm2** | **Load (N)** | **N/mm2** |
| | 477.45 | 1.48 | 203.24 | 0.63 |
| | 458.09 | 1.42 | 132.27 | 0.41 |
| **24 h @ RT** | 729.08 | 2.26 | 132.27 | 0.41 |
| | 403.25 | 1.25 | 238.72 | 0.74 |
| | 716.17 | 2.22 | - | - |
| | **Average** | **1.73** | **Average** | **0.55** |
| | **Std dev** | **0.48** | **Std dev** | **0.17** |
| | 964.57 | 2.99 | 180.66 | 0.56 |

(continued)

| lap shear results on Magnesium Alloy | | | | |
|---|---|---|---|---|
| | **Tape 3** | | **3M 467MP** | |
| **Curing** | **Load (N)** | **N/mm2** | **Load (N)** | **N/mm2** |
| **1 week @ RT** | 1506.54 | 4.67 | 116.14 | 0.36 |
| | 1216.20 | 3.77 | 212.92 | 0.66 |
| | 1858.18 | 5.76 | 132.27 | 0.41 |
| | **Average** | **4.30** | **Average** | **0.50** |
| | **Std dev** | **1.19** | **Std dev** | **0.14** |
| | 1532.35 | 4.75 | 306.47 | 0.95 |
| **1h @ 70°C + 24h RT** | 1377.50 | 4.27 | 322.60 | 1.00 |
| | 1338.79 | 4.15 | 122.59 | 0.38 |
| | 1203.30 | 3.73 | 93.55 | 0.29 |
| | **Average** | **4.23** | **Average** | **0.66** |
| | **Std dev** | **0.42** | **Std dev** | **0.37** |

As can be seen in Table 51 Tape 3 outperformed the comparative sample in lap shear experiments on magnesium alloy at all curing conditions.

**Table 52 - Lap shear experiments on Lacquer**

| Lap shear results on Lacquer | | | | |
|---|---|---|---|---|
| | **Tape 3** | | **3M 467MP** | |
| **Curing** | **Load (N)** | **N/mm2** | **Load (N)** | **N/mm2** |
| | 61.29 | 0.19 | 74.20 | 0.23 |
| | 167.75 | 0.52 | 58.07 | 0.18 |
| **24 h @ RT** | 164.53 | 0.51 | 58.07 | 0.18 |
| | 183.88 | 0.57 | 125.81 | 0.39 |
| | 661.33 | 2.05 | 83.88 | 0.26 |
| | **Average** | **0.77** | **Average** | **0.25** |
| | **Std dev** | **0.73** | **Std dev** | **0.09** |
| | 422.61 | 1.31 | 135.49 | 0.42 |
| **1 week @ RT** | 267.76 | 0.83 | 106.46 | 0.33 |
| | 235.50 | 0.73 | 158.07 | 0.49 |
| | 377.44 | 1.17 | 106.46 | 0.33 |
| | **Average** | **1.01** | **Average** | **0.39** |
| | **Std dev** | **0.27** | **Std dev** | **0.08** |
| | 496.80 | 1.54 | 67.75 | 0.21 |

(continued)

| Lap shear results on Lacquer | | | | |
|---|---|---|---|---|
| | **Tape 3** | | **3M 467MP** | |
| **Curing** | **Load (N)** | **N/mm2** | **Load (N)** | **N/mm2** |
| **1h @ 70°C + 24h RT** | 319.37 | 0.99 | 83.88 | 0.26 |
| | 248.40 | 0.77 | 74.20 | 0.23 |
| | 212.92 | 0.66 | 167.75 | 0.52 |
| | **Average** | **0.99** | **Average** | **0.31** |
| | **Std dev** | **0.39** | **Std dev** | **0.14** |

As can be seen in Table 52, Tape 3 outperformed the comparative sample in lap shear experiments on lacquer 0754 in each of the curing conditions tested.

**Table 53 - Lap shear experiments on Aluminium**

| Lap shear results on Aluminium | | | | |
|---|---|---|---|---|
| | **Tape 3** | | **3M 467MP** | |
| **Curing** | **Load (N)** | **N/mm2** | **Load (N)** | **N/mm2** |
| **24 h @ RT** | 380.67 | 1.18 | 58.07 | 0.18 |
| | 322.60 | 1.00 | 32.26 | 0.10 |
| | 306.47 | 0.95 | - | - |
| | **Average** | **1.04** | **Average** | **0.14** |
| | **Std dev** | **0.12** | **Std dev** | **0.06** |
| **1 week @ RT** | 1919.47 | 5.95 | 248.40 | 0.77 |
| | 1845.27 | 5.72 | 222.59 | 0.69 |
| | 1583.97 | 4.91 | - | - |
| | **Average** | **5.53** | **Average** | **0.73** |
| | **Std dev** | **0.55** | **Std dev** | **0.06** |
| **1h @ 70°C + 24h RT** | 1735.59 | 5.38 | - | Fail |
| | 858.12 | 2.66 | 180.66 | 0.56 |
| | 874.25 | 2.71 | - | - |
| | **Average** | **3.58** | **Average** | **0.56** |
| | **Std dev** | **1.56** | **Std dev** | **-** |

As can be seen in Table 53, Tape 3 outperformed the comparative sample in lap shear experiments on aluminium at each of the curing conditions tested.

**Table 54 - Lap shear experiments on grit blasted Aluminium**

| Lap shear results on grit blasted Aluminium | | | | |
|---|---|---|---|---|
| | Tape 3 | | 3M 467MP | |
| **Curing** | **Load (N)** | **N/mm2** | **Load (N)** | **N/mm2** |
| **24 h @ RT** | 274.21 | 0.85 | 261.31 | 0.81 |
| | 238.72 | 0.74 | 206.46 | 0.64 |
| | 293.57 | 0.91 | - | - |
| | **Average** | **0.83** | **Average** | **0.73** |
| | **Std dev** | **0.09** | **Std dev** | **0.12** |
| **1 week @ RT** | 1254.91 | 3.89 | 200.01 | 0.62 |
| | 1335.56 | 4.14 | 358.09 | 1.11 |
| | 1464.60 | 4.54 | - | - |
| | **Average** | **4.19** | **Average** | **0.87** |
| | **Std dev** | **0.33** | **Std dev** | **0.35** |
| **1h @ 70°C + 24h RT** | 1303.30 | 4.04 | 345.18 | 1.07 |
| | 867.79 | 2.69 | 322.60 | 1.00 |
| | 1961.41 | 6.08 | - | - |
| | **Average** | **4.27** | **Average** | **1.04** |
| | **Std dev** | **1.71** | **Std dev** | **0.05** |

As can be seen in Table 54, Tape 3 outperformed the comparative sample in lap shear experiments on grit blasted aluminium in each of the curing conditions tested.

**Table 55 - Lap shear experiments on nitrile butadiene rubber**

| lap shear results on Nitrile Butadiene Rubber | | | | |
|---|---|---|---|---|
| | Tape 3 | | 3M 467MP | |
| **Curing** | **Load (N)** | **N/mm2** | **Load (N)** | **N/mm2** |
| **24 h @ RT** | 58.07 | 0.18 | 45.16 | 0.14 |
| | 41.94 | 0.13 | 29.03 | 0.09 |
| | 51.62 | 0.16 | - | - |
| | **Average** | **0.16** | **Average** | **0.12** |
| | **Std dev** | **0.03** | **Std dev** | **0.04** |
| **1 week @ RT** | 70.97 | 0.22 | 41.94 | 0.13 |
| | 67.75 | 0.21 | 38.71 | 0.12 |
| | 80.65 | 0.25 | - | - |
| | **Average** | **0.23** | **Average** | **0.13** |
| | **Std dev** | **0.02** | **Std dev** | **0.01** |

(continued)

| lap shear results on Nitrile Butadiene Rubber | | | | |
|---|---|---|---|---|
| | Tape 3 | | 3M 467MP | |
| Curing | Load (N) | N/mm2 | Load (N) | N/mm2 |
| 1h @ 70°C + 24h RT | 48.39 | 0.15 | 38.71 | 0.12 |
| | 61.29 | 0.19 | 48.39 | 0.15 |
| | 70.97 | 0.22 | - | - |
| | **Average** | **0.19** | **Average** | **0.14** |
| | **Std dev** | **0.04** | **Std dev** | **0.02** |

As can be seen in Table 55, Tape 3 equalled or outperformed the comparative sample in lap shear experiments on nitrile butadiene rubber at each of the curing conditions tested.

Tables 56-68 show the results of bond performance experiments for variations in the curable film formulation of structural adhesive transfer tapes (SATT) as described by the present invention.

**Table 56 - Variation in curable film formulation for SATT; tensile strength on GBMS over time, tape stored at 5 °C.**

| SATT | | | | | | | | | |
|---|---|---|---|---|---|---|---|---|---|
| | | | cure: 1h 60°C + 24h RT | | | | | | |
| tape stored @ 5°C | initial MPa | MPa | | | | | | | |
| formulation/ weeks | 0 | 1 | 2 | 3 | 4 | 5 | 6 | 7 | 8 |
| 50% Levamelt, 50%PhEtCA | 6.28 | 7.80 | 5.91 | 10.27 | 9.60 | | | | |
| 50% Levamelt, 50%PhEtCA + 0.5 w% Cu(II)phthalocyanine | 7.91 | 8.52 | 3.48 | 9.10 | 8.22 | | | | |
| 50% Levamelt, 50%PhEtCA + 0.5 w% m-Cresol purple | 4.68 | 6.04 | 5.19 | 5.93 | 6.81 | | | | |
| 50% Levamelt, 50% PhEtCA + 0.5 w% beta Caroten | 6.45 | 6.17 | 6.52 | 9.00 | 7.14 | | | | |
| 50% Levamelt, 50%PhEtCA + 0.5 w% Coumarin | 7.74 | 8.46 | 5.73 | 10.94 | 7.29 | | | | |
| 50% Levamelt, 50%PhEtCA + 0.5 w% Naphtol Green | 6.77 | 7.79 | 6.12 | 10.95 | 7.78 | | | | |
| 50% Levamelt, 50%PhEtCA + 1 w% beta phenyl ethyl CA | 8.49 | 7.78 | 8.80 | 8.53 | 8.37 | | | | |
| 50% Levamelt, 50%PhEtCA + 1 w% Ferrocenium BF4 | 7.13 | 4.9 | 3.69 | 2.08 | 2.91 | 4.65 | 5.26 | 2.85 | 5.08 |
| 50% Levamelt, 50%PhEtCA + 1 w% Gallium(III) perchlorate | 4.93 | 2.84 | 5.31 | 3.39 | 3.19 | 3.90 | 7.91 | 3.84 | 9.19 |
| 50% Levamelt, 50%PhEtCA + 1 w% quantum dot sol. | 4.22 | 8.45 | | | | | | | |
| | | | | | | | | | |

(continued)

| | | | cure: 24 h RT | | | | | | |
|---|---|---|---|---|---|---|---|---|---|
| **tape stored @ 5°C** | **initial MPa** | **MPa** | | | | | | | |
| **formulation/ weeks** | **0** | **1** | **2** | **3** | **4** | **5** | **6** | **7** | **8** |
| 50% Levamelt, 50%PhEtCA | 2.20 | 2.23 | 2.30 | 2.91 | 2.26 | | | | |
| 50% Levamelt, 50%PhEtCA + 0.5 w% Cu(II)phthalocyanine | 1.88 | 2.00 | 2.01 | 3.16 | 2.44 | | | | |
| 50% Levamelt, 50%PhEtCA + 0.5 w% m-Cresol purple | 1.05 | 0.99 | 1.02 | 1.13 | 1.63 | | | | |
| 50% Levamelt, 50% PhEtCA + 0.5 w% beta Caroten | 0.98 | 1.12 | 1.96 | 0.76 | 1.84 | | | | |
| 50% Levamelt, 50%PhEtCA + 0.5 w% Coumarin | 2.70 | 2.63 | 2.88 | 2.48 | 3.28 | | | | |
| 50% Levamelt, 50%PhEtCA + 0.5 w% Naphtol Green | 3.00 | 2.63 | 2.85 | 1.99 | 3.56 | | | | |
| 50% Levamelt, 50%PhEtCA + 1 w% beta phenyl ethyl CA | 2.02 | 1.99 | 2.55 | 1.63 | 2.87 | | | | |
| 50% Levamelt, 50%PhEtCA + 1 w% Ferrocenium BF4 | 1.09 | 0.18 | 0.29 | 0.11 | 0.22 | 0.39 | 1.39 | 0.28 | 0.61 |
| 50% Levamelt, 50%PhEtCA + 1 w% Gallium(III) perchlorate | 0.49 | 0.23 | 0.62 | 0.06 | 0.36 | 0.94 | 1.83 | 0.67 | 0.77 |
| 50% Levamelt, 50%PhEtCA + 1 w% quantum dot sol. | 2.08 | 2.79 | | | | | | | |

**Table 57 - variation in formulation used for SATT, percentage of the initial tensile strength over time, tape stored at 5 °C.**

| SATT | | | | | | | | | |
|---|---|---|---|---|---|---|---|---|---|
| | | | **cure: 1h 60°C + 24h RT** | | | | | | |
| **tape stored @ 5°C** | **initial MPa** | **% of initial tensile strength** | | | | | | | |
| **formulation/ week** | 0 | 1 | 2 | 3 | 4 | 5 | 6 | 7 | 8 |
| 50% Levamelt, 50%PhEtCA | 100 | 124 | 94 | 164 | 153 | | | | |
| 50% Levamelt, 50%PhEtCA + 0.5 w% Cu(II)phthalocyanine | 100 | 108 | 44 | 115 | 104 | | | | |
| 50% Levamelt, 50%PhEtCA + 0.5 w% m-Cresol purple | 100 | 129 | 111 | 127 | 146 | | | | |
| 50% Levamelt, 50% PhEtCA + 0.5 w% beta Caroten | 100 | 96 | 101 | 140 | 111 | | | | |
| 50% Levamelt, 50%PhEtCA + 0.5 w% Coumarin | 100 | 109 | 74 | 141 | 94 | | | | |
| 50% Levamelt, 50%PhEtCA + 0.5 w% Naphtol Green | 100 | 115 | 90 | 162 | 115 | | | | |

(continued)

| SATT | | | | | | | | | |
|---|---|---|---|---|---|---|---|---|---|
| | | | cure: 1h 60°C + 24h RT | | | | | | |
| **tape stored @ 5°C** | **initial MPa** | **% of initial tensile strength** | | | | | | | |
| **formulation/ week** | 0 | 1 | 2 | 3 | 4 | 5 | 6 | 7 | 8 |
| 50% Levamelt, 50%PhEtCA + 1 w% beta phenyl ethyl CA | 100 | 92 | 104 | 100 | 99 | | | | |
| 50% Levamelt, 50%PhEtCA + 1 w% Ferrocenium BF4 | 100 | 69 | 52 | 29 | 41 | 65 | 74 | 40 | 71 |
| 50% Levamelt, 50%PhEtCA + 1 w% Gallium(III) perchlorate | 100 | 58 | 108 | 69 | 65 | 79 | 160 | 78 | 186 |
| 50% Levamelt, 50%PhEtCA + 1 w% quantum dot sol. | 100 | 200 | | | | | | | |
| | | | | | | | | | |
| | | | **cure: 24h RT** | | | | | | |
| **tape stored @ 5°C** | **initial MPa** | **% of initial tensile strength** | | | | | | | |
| **formulation/ week** | **0** | **1** | **2** | **3** | **4** | **5** | **6** | **7** | **8** |
| 50% Levamelt, 50%PhEtCA | 100 | 101 | 105 | 132 | 103 | | | | |
| 50% Levamelt, 50%PhEtCA + 0.5 w% Cu(II)phthalocyanine | 100 | 106 | 107 | 168 | 130 | | | | |
| 50% Levamelt, 50%PhEtCA + 0.5 w% m-Cresol purple | 100 | 94 | 97 | 108 | 155 | | | | |
| 50% Levamelt, 50% PhEtCA + 0.5 w% beta Caroten | 100 | 114 | 200 | 78 | 188 | | | | |
| 50% Levamelt, 50%PhEtCA + 0.5 w% Coumarin | 100 | 97 | 107 | 92 | 121 | | | | |
| 50% Levamelt, 50%PhEtCA + 0.5 w% Naphtol Green | 100 | 88 | 95 | 66 | 119 | | | | |
| 50% Levamelt, 50%PhEtCA + 1 w% beta phenyl ethyl CA | 100 | 99 | 126 | 81 | 142 | | | | |
| 50% Levamelt, 50%PhEtCA + 1 w% Ferrocenium BF4 | 100 | 17 | 27 | 10 | 20 | 36 | 127 | 26 | 56 |
| 50% Levamelt, 50%PhEtCA + 1 w% Gallium(III) perchlorate | 100 | 47 | 127 | 12 | 73 | 193 | 373 | 137 | 157 |
| 50% Levamelt, 50%PhEtCA + 1 w% quantum dot sol. | 100 | 134 | | | | | | | |

**Table 58 - Variation in formulation of SATT; tensile strength on GBMS over time, tape stored at RT.**

| SATT | | | | | |
|---|---|---|---|---|---|
| | | | cure: 1h 60°C + 24h RT | | |
| **tape stored @ RT** | **initial MPa** | **Mpa** | | | |
| **formulation/weeks** | **0** | **1** | **2** | **3** | **4** |
| 50% Levamelt, 50%PhEtCA | 5.42 | 6.71 | 7.90 | 7.10 | 4.46 |
| 50% Levamelt, 50%PhEtCA + 0.5 w% Cu(II)phthalocyanine | 4.03 | 6.64 | 5.12 | 8.77 | 4.90 |
| 50% Levamelt, 50%PhEtCA + 0.5 w% m-Cresol purple | 3.98 | 4.45 | 4.23 | 5.17 | 4.40 |
| 50% Levamelt, 50% PhEtCA + 0.5 w% beta Caroten | 3.52 | 6.59 | 4.62 | 5.90 | 3.07 |
| 50% Levamelt, 50%PhEtCA + 0.5 w% Coumarin | 4.73 | 6.07 | 4.76 | 7.67 | 5.19 |
| 50% Levamelt, 50%PhEtCA + 0.5 w% Naphtol Green | 4.62 | 7.17 | 6.18 | 6.00 | 4.26 |
| 50% Levamelt, 50%PhEtCA + 1 w% beta phenyl ethyl CA | 4.96 | 4.14 | 6.82 | 7.36 | 4.25 |
| | | | | | |
| | | | cure: 24h RT | | |
| **tape stored @ RT** | **initial MPa** | **Mpa** | | | |
| **formulation/ weeks** | **0** | **1** | **2** | **3** | **4** |
| 50% Levamelt, 50%PhEtCA | 1.45 | 0.66 | 1.13 | 2.91 | 0.62 |
| 50% Levamelt, 50%PhEtCA + 0.5 w% Cu(II)phthalocyanine | 1.96 | 1.10 | 1.18 | 3.16 | 0.69 |
| 50% Levamelt, 50%PhEtCA + 0.5 w% m-Cresol purple | 0.87 | 0.61 | 0.82 | 1.13 | 0.87 |
| 50% Levamelt, 50% PhEtCA + 0.5 w% beta Caroten | 1.38 | 0.63 | 0.96 | 0.76 | 0.97 |
| 50% Levamelt, 50%PhEtCA + 0.5 w% Coumarin | 2.00 | 1.08 | 1.42 | 2.48 | 0.93 |
| 50% Levamelt, 50%PhEtCA + 0.5 w% Naphtol Green | 0.61 | 1.06 | 1.31 | 1.99 | 0.80 |
| 50% Levamelt, 50%PhEtCA + 1 w% beta phenyl ethyl CA | 0.10 | 0.53 | 0.52 | 1.63 | 0.40 |

**Table 59 - Variation in formulation of SATT; percentage of the initial tensile strength on GBMS over time, tape stored at RT.**

| SATT | | | | | |
|---|---|---|---|---|---|
| | | | cure: 1h 60°C + 24h RT | | |
| **tape stored @ RT** | **initial MPa** | **% of initial tensile strength** | | | |
| **formulation/ week** | **0** | **1** | **2** | **3** | **4** |
| 50% Levamelt, 50%PhEtCA | 100 | 124 | 146 | 131 | 82 |

(continued)

| SATT | | | | | |
|---|---|---|---|---|---|
| | | | cure: 1h 60°C + 24h RT | | |
| **tape stored @ RT** | **initial MPa** | **% of initial tensile strength** | | | |
| **formulation/ week** | **0** | **1** | **2** | **3** | **4** |
| 50% Levamelt, 50%PhEtCA + 0.5 w% Cu(II)phthalocyanine | 100 | 165 | 127 | 218 | 122 |
| 50% Levamelt, 50%PhEtCA + 0.5 w% m-Cresol purple | 100 | 112 | 106 | 130 | 111 |
| 50% Levamelt, 50% PhEtCA + 0.5 w% beta Caroten | 100 | 187 | 131 | 168 | 87 |
| 50% Levamelt, 50%PhEtCA + 0.5 w% Coumarin | 100 | 128 | 101 | 162 | 110 |
| 50% Levamelt, 50%PhEtCA + 0.5 w% Naphtol Green | 100 | 155 | 134 | 130 | 92 |
| 50% Levamelt, 50%PhEtCA + 1 w% beta phenyl ethyl CA | 100 | 83 | 138 | 148 | 86 |
| | | | | | |
| | | | cure: 24h RT | | |
| **tape stored @ RT** | **initial MPa** | **% of initial tensile strength** | | | |
| **formulation/ week** | **0** | **1** | **2** | **3** | **4** |
| 50% Levamelt, 50%PhEtCA | 100 | 46 | 78 | 201 | 43 |
| 50% Levamelt, 50%PhEtCA + 0.5 w% Cu(II)phthalocyanine | 100 | 56 | 60 | 161 | 35 |
| 50% Levamelt, 50%PhEtCA + 0.5 w% m-Cresol purple | 100 | 70 | 94 | 130 | 100 |
| 50% Levamelt, 50% PhEtCA + 0.5 w% beta Caroten | 100 | 46 | 70 | 55 | 70 |
| 50% Levamelt, 50%PhEtCA + 0.5 w% Coumarin | 100 | 54 | 71 | 124 | 46 |
| 50% Levamelt, 50%PhEtCA + 0.5 w% Naphtol Green | 100 | 174 | 215 | 326 | 132 |
| 50% Levamelt, 50%PhEtCA + 1 w% beta phenyl ethyl CA | 100 | 530 | 520 | 1630 | 403 |

**Table 60 - variation in formulation used for tape, tensile strength on glass over time, tape stored at 5 °C.**

| SATT | | | | | |
|---|---|---|---|---|---|
| | | | cure: 24h RT | | |
| **tape stored @ 5°C** | **initial MPa** | **Mpa** | | | |
| **formulation/ weeks** | **0** | **1** | | | |
| 50% Levamelt, 50%PhEtCA | 3.18 | 2.67 | | | |
| 50% Levamelt, 50%PhEtCA + 0.5 w% Cu(II)phthalocyanine | 1.24 | 1.08 | | | |

(continued)

| SATT | | | | | |
|---|---|---|---|---|---|
| | | | cure: 24h RT | | |
| tape stored @ 5°C | initial MPa | Mpa | | | |
| formulation/ weeks | 0 | 1 | | | |
| 50% Levamelt, 50%PhEtCA + 0.5 w% m-Cresol purple | 2.00 | 4.09 | | | |
| 50% Levamelt, 50% PhEtCA + 0.5 w% beta Caroten | 3.65 | 2.64 | | | |
| 50% Levamelt, 50%PhEtCA + 0.5 w% Coumarin | 2.57 | 2.66 | | | |
| 50% Levamelt, 50%PhEtCA + 0.5 w% Naphtol Green | 3.88 | 1.68 | | | |
| 50% Levamelt, 50%PhEtCA + 1 w% beta phenyl ethyl CA | 3.11 | 3.18 | | | |
| 50% Levamelt, 50%PhEtCA + 1 w% quantum dot sol. | 0.44 | | | | |

**Table 61 - variation in formulation used for tape, percentage of the initial tensile strength on glass over time, tape stored at 5°C.**

| SATT | | | | | |
|---|---|---|---|---|---|
| | | | cure: 24h RT | | |
| tape stored @ 5°C | initial MPa | % of initial tensile strength | | | |
| formulation/ week | 0 | 1 | | | |
| 50% Levamelt, 50%PhEtCA | 100 | 84 | | | |
| 50% Levamelt, 50%PhEtCA + 0.5 w% Cu(II)phthalocyanine | 100 | 87 | | | |
| 50% Levamelt, 50%PhEtCA + 0.5 w% m-Cresol purple | 100 | 205 | | | |
| 50% Levamelt, 50% PhEtCA + 0.5 w% beta Caroten | 100 | 72 | | | |
| 50% Levamelt, 50%PhEtCA + 0.5 w% Coumarin | 100 | 104 | | | |
| 50% Levamelt, 50%PhEtCA + 0.5 w% Naphtol Green | 100 | 43 | | | |
| 50% Levamelt, 50%PhEtCA + 1 w% beta phenyl ethyl CA | 100 | 102 | | | |

**Table 62 - variation in formulation used for tape, tensile strength on glass over time, tape stored at RT**

| SATT | | | | |
|---|---|---|---|---|
| | | | cure: 24h RT | |
| tape stored @ RT | initial MPa | Mpa | | |
| formulation/ weeks | 0 | 1 | | |
| 50% Levamelt, 50%PhEtCA | 2.75 | 1.88 | | |
| 50% Levamelt, 50%PhEtCA + 0.5 w% Cu(II)phthalocyanine | 3.09 | 1.11 | | |
| 50% Levamelt, 50%PhEtCA + 0.5 w% m-Cresol purple | 0.96 | 2.32 | | |

(continued)

| SATT | | | | |
|---|---|---|---|---|
| | | | cure: 24h RT | |
| tape stored @ RT | initial MPa | Mpa | | |
| formulation/ weeks | 0 | 1 | | |
| 50% Levamelt, 50% PhEtCA + 0.5 w% beta Caroten | 1.92 | 2.68 | | |
| 50% Levamelt, 50%PhEtCA + 0.5 w% Coumarin | 2.78 | 3.75 | | |
| 50% Levamelt, 50%PhEtCA + 0.5 w% Naphtol Green | 2.31 | 1.00 | | |
| 50% Levamelt, 50%PhEtCA + 1 w% beta phenyl ethyl CA | 1.92 | 1.69 | | |

**Table 63 - variation in formulation used for tape, percentage of the initial tensile strength on glass over time, tape stored at RT**

| SATT | | | | | |
|---|---|---|---|---|---|
| | | | cure: 24h RT | | |
| tape stored @ RT | initial MPa | % of initial tensile strength | | | |
| formulation/ week | 0 | 1 | | | |
| 50% Levamelt, 50%PhEtCA | 100 | 68 | | | |
| 50% Levamelt, 50%PhEtCA + 0.5 w% Cu(II)phthalocyanine | 100 | 36 | | | |
| 50% Levamelt, 50%PhEtCA + 0.5 w% m-Cresol purple | 100 | 242 | | | |
| 50% Levamelt, 50% PhEtCA + 0.5 w% beta Caroten | 100 | 140 | | | |
| 50% Levamelt, 50%PhEtCA + 0.5 w% Coumarin | 100 | 135 | | | |
| 50% Levamelt, 50%PhEtCA + 0.5 w% Naphtol Green | 100 | 43 | | | |
| 50% Levamelt, 50%PhEtCA + 1 w% beta phenyl ethyl CA | 100 | 88 | | | |

**Refractive index**

Refractive index was measured at 22°C - 23°C on a Bellingham + Stanley 44-501 Abbey refractometer.

**Table 64 - variation in formulation used for tape, refractive index of some selected tapes.**

| Formulation used for tape | RI |
|---|---|
| 50% Levamelt, 50%PhEtCA | 1.498 |
| 17% low Mw styrene PhEtCA copolymer 33% Levamelt, 50% PhEtCA | 1.503 |
| 17% high Mw styrene PhEtCA copolymer 33% Levamelt, 50% PhEtCA | 1.517 |
| 33% high Mw styrene PhEtCA copolymer 17% Levamelt, 50% PhEtCA | 1.505 |
| 50% Vinnol 40/50, 50% PhEtCA | 1.519 |
| 50% Vinnol 40/55, 50% PhEtCA | 1.521 |
| 50% Vinnol 40/60, 50% PhEtCA | 1.540 |

Curing conditions: performed according to STM 700 with clamping for the curing conditions indicated.

Vinnol® surface coating resins represent a broad range of vinyl chloride-derived copolymers and terpolymers for use in different industrial applications. The main constituents of these polymers are different compositions of vinyl chloride and vinyl acetate. Vinyl chloride copolymers do not contain any other functional groups. The terpolymers of our Vinnol® product line additionally contain carboxyl or hydroxyl groups.

**Table 65 - variation in formulation used for tape, tensile strength on GBMS over time.**

| | | | cure: 1h 60°C + 24h RT | | | | |
|---|---|---|---|---|---|---|---|
| tape stored @ 5°C | initial MPa | MPa | | | | | |
| formulation/ weeks | 0 | 1 | 2 | 3 | 4 | 5 | 6 |
| 50% Levamelt, 50%PhEtCA | 7.32 | 6.9 | 7.71 | 9.49 | 6.5 | 10.92 | 10.11 |
| 17% low Mw styrene PhEtCA copolymer 33% Levamelt, 50% PhEtCA | 5.65 | 4.58 | 7.09 | 9.33 | 4.87 | 6.87 | 10.14 |
| 17% high Mw styrene PhEtCA copolymer 33% Levamelt, 50% PhEtCA | 8.1 | 4.32 | 7.9 | 9.43 | 6.71 | 8.15 | 9.84 |
| 33% high Mw styrene PhEtCA copolymer 17% Levamelt, 50% PhEtCA | 4.87 | 2.62 | 5.25 | 5.18 | 4.8 | 3.39 | 4.6 |
| 50% Vinnol 40/50, 50% PhEtCA | 12.13 | 11.79 | 11.49 | 12.83 | | | |
| 50% Vinnol 40/55, 50% PhEtCA | 11.6 | 12.29 | 9.69 | 10.25 | | | |
| 50% Vinnol 40/60, 50% PhEtCA | 12.27 | 11.03 | 10.29 | 12.72 | | | |

**Table 66 - variation in formulation used for tape, percentage of the initial tensile strength on GBMS over time**

| | | | cure: 1h 60°C + 24h RT | | | | |
|---|---|---|---|---|---|---|---|
| tape stored @ 5°C | initial MPa | % of initial tensile strength | | | | | |
| formulation/ weeks | 0 | 1 | 2 | 3 | 4 | 5 | 6 |
| 50% Levamelt, 50%PhEtCA | 100 | 94 | 105 | 130 | 89 | 149 | 138 |
| 17% low Mw styrene PhEtCA copolymer 33% Levamelt, 50% PhEtCA | 100 | 81 | 125 | 165 | 86 | 122 | 179 |
| 17% high Mw styrene PhEtCA copolymer 33% Levamelt, 50% PhEtCA | 100 | 53 | 98 | 116 | 83 | 101 | 121 |
| 33% high Mw styrene PhEtCA copolymer 17% Levamelt, 50% PhEtCA | 100 | 54 | 108 | 106 | 99 | 70 | 94 |
| 50% Vinnol 40/50, 50% PhEtCA | 100 | 97 | 95 | 106 | | | |
| 50% Vinnol 40/55, 50% PhEtCA | 100 | 106 | 84 | 88 | | | |
| 50% Vinnol 40/60, 50% PhEtCA | 100 | 90 | 84 | 104 | | | |

**Table 67 - variation in formulation used for tape, tensile strength on GBMS over time**

| | | | cure: 24h @ RT | | | | |
|---|---|---|---|---|---|---|---|
| **tape stored @ 5°C** | **initial MPa** | **MPa** | | | | | |
| **formulation/ weeks** | **0** | **1** | **2** | **3** | **4** | **5** | **6** |
| 50% Levamelt, 50%PhEtCA | 1.71 | 1.28 | 2.04 | 1.16 | 1.63 | 2.88 | 4.24 |
| 17% low Mw styrene PhEtCA copolymer 33% Levamelt, 50% PhEtCA | 2.96 | 1.54 | 1.62 | 0.65 | 2.44 | 3.09 | 4.58 |
| 17% high Mw styrene PhEtCA copolymer 33% Levamelt, 50% PhEtCA | 3.82 | 1.02 | 1.11 | 0.68 | 1.84 | 3.07 | 4.95 |
| 33% high Mw styrene PhEtCA copolymer 17% Levamelt, 50% PhEtCA | 2.17 | 0.71 | 0.7 | 1.15 | 1.18 | 0.76 | 0.86 |
| 50% Vinnol 40/50, 50% PhEtCA | 6.48 | 3.96 | 1.11 | 0.56 | | | |
| 50% Vinnol 40/55, 50% PhEtCA | 6.86 | 3.61 | 1.62 | 0.97 | | | |
| 50% Vinnol 40/60, 50% PhEtCA | 8.16 | 3.96 | 2.41 | 0.4 | | | |

**Table 68 variation in formulation used for tape, percentage of the initial tensile strength on GBMS over time**

| | | | cure: 24h @ RT | | | | |
|---|---|---|---|---|---|---|---|
| **tape stored @ 5°C** | **initial MPa** | **% of initial tensile strength** | | | | | |
| **formulation/ weeks** | **0** | **1** | **2** | **3** | **4** | **5** | **6** |
| 50% Levamelt, 50%PhEtCA | 100 | 75 | 119 | 68 | 95 | 168 | 248 |
| 17% low Mw styrene PhEtCA copolymer 33% Levamelt, 50% PhEtCA | 100 | 52 | 55 | 22 | 82 | 104 | 155 |
| 17% high Mw styrene PhEtCA copolymer 33% Levamelt, 50% PhEtCA | 100 | 27 | 29 | 18 | 48 | 80 | 130 |
| 33% high Mw styrene PhEtCA copolymer 17% Levamelt, 50% PhEtCA | 100 | 33 | 32 | 53 | 54 | 35 | 40 |
| 50% Vinnol 40/50, 50% PhEtCA | 100 | 61 | 17 | 9 | | | |
| 50% Vinnol 40/55, 50% PhEtCA | 100 | 53 | 24 | 14 | | | |
| 50% Vinnol 40/60, 50% PhEtCA | 100 | 49 | 30 | 5 | | | |

The words "comprises/comprising" and the words "having/including" when used herein with reference to the present invention are used to specify the presence of stated features, integers, steps or components but do not preclude the presence or addition of one or more other features, integers, steps, components or groups thereof.

It is appreciated that certain features of the invention, which are, for clarity, described in the context of separate embodiments, may also be provided in combination in a single embodiment. Conversely, various features of the invention, which are, for brevity, described in the context of a single embodiment, may also be provided separately or in any suitable sub-combination.

## Claims

**1.** An article, comprising a curable film on a release substrate and/or carrier substrate, wherein the curable film comprises:

(a) at least one cyanoacrylate monomer selected from compounds of formula (I)

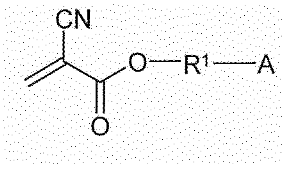

formula (I)

wherein $R^1$ is a divalent linking group comprising 1 to 10 carbon atoms, and A represents an $C_5$-$C_{50}$ aryl residue or a $C_2$-$C_{50}$ heteroaryl residue; and
(b) at least one film forming (co)polymer.

2. The article according to claim 1, wherein the cyanoacrylate monomer is selected from compounds of formula (II),

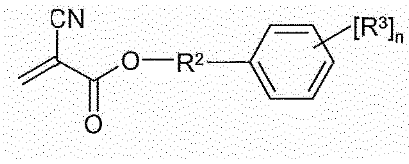

formula (II)

wherein n is 0 to 5, $R^2$ is a $C_{1-5}$ alkylene group, and each $R^3$, if present, is independently selected from $C_1$-$C_{10}$ alkyl, $C_1$-$C_{10}$ alkoxy, fluorine, chlorine, bromine, cyano and nitro.

3. The article according to any preceding claim, wherein the cyanoacrylate monomer is (2-phenylethyl) 2-cyanoacrylate.

4. The article according to any preceding claim, wherein the cyanoacrylate monomer is present in an amount of at least about 15 wt.%, based on the total weight of the curable film, preferably the cyanoacrylate monomer is present in an amount from 20 wt.% to 80 wt.%, based on the total weight of the curable film.

5. The article according to any preceding claim, wherein the film forming (co)polymer is selected from poly(meth)acrylate (co)polymers, polyvinyl ethers, natural rubbers, polyisoprenes, polybutadienes, polyisobutylenes, polychloroprenes; butadiene-acrylonitrile polymers, thermoplastic elastomers, styrene-isoprene copolymers, styrene-isoprene-styrene block copolymers, ethylene-propylene-diene polymers, styrene-butadiene polymers, poly-alpha-olefins, silicones, ethylene vinyl acetate copolymers and/or combinations thereof.

6. The article according to any one of claims 1 to 5, wherein the film forming (co)polymer is an ethylene vinyl acetate copolymer, preferably the ethylene vinyl acetate copolymer has a vinyl acetate content of 50 wt.% to 98 wt.%, based on the total weight of the ethylene vinyl acetate copolymer.

7. The article according to any preceding claim, wherein the film forming (co)polymer is present in an amount from 20 wt.% to 85 wt.%, based on the total weight of the curable film.

8. The article according to any preceding claim, wherein the weight ratio of the total amount of cyanoacrylate monomers to the total amount of film forming (co)polymers in the curable film is from 1:8 to 8:1.

9. The article according to any preceding claim, wherein the curable film further comprises a stabilizer, which is present in an amount from up to 1 wt. % based on the total weight of the curable film, preferably the stabilizer is optionally one of a hydroquinone, sulfonic acids, $BF_3$ or $SO_2$, boric acids, zinc salts, phosphoric acids, carboxylic acids, or combinations thereof

10. The article according to any preceding claim, wherein the curable film further comprises an acid such as camphor sulfonic acid.

11. The article according to any preceding claim, wherein an acid is present in an amount from up to 1 wt. % based on the total weight of the curable film.

12. The article according to any preceding claim, wherein the carrier substrate is selected from polymeric films, foams, metal foils, cloths, and combinations thereof.

**13.** The article according to any preceding claim, wherein the release substrate is a paper or plastic-based material, which is optionally coated with a release agent.

**14.** The article according to any preceding claim, wherein the article is a label, a single-sided tape, a transfer tape or a double-sided tape.

**15.** The article according to any preceding claim, wherein the cure product of the curable film is translucent, for example transparent.

**16.** The cure product of the curable film as defined in any of claims 1 to 15.

**17.** The article according to any of the claims from 1 to 15 wherein the curable film is curable by exposure to optionally one of the following conditions: exposure to heat, to moisture or to radiation.

**18.** The article according to claims 1 to 17 wherein the curable film is curable by exposure to temperatures in a range from about 0 to 200 °C for between 2 and 360 seconds.

**19.** The article according to claims 1 to 17 wherein the curable film is curable by exposure to humidity in a range from about 10 to 100% for between 1 and 24 hours.

**20.** A method of attaching a film to a curable surface, comprising the steps of:

(a) providing an article according to any one of claims 1 to 15;
(b) attaching the curable film of the article to at least one surface to form an assembly,
(c) exposing the assembly to conditions sufficient to cure the curable film of the article,

wherein the release substrate of the article, if present, is removed before and/or after step (b).

**21.** Use of an article as described in any of claims 1-15 in the manufacture of optoelectronic devices.

**22.** A method of adhering a first substrate to a second substrate, said method comprising:

(i) providing an article according to any one of claims 1 to 15;
(ii) attaching the curable film of the article to at least one of the substrates;
(iii) mating the substrates; and
(iv) curing the adhesive film between the components to be adhered together,

wherein the release substrate of the article, if present, is removed before and/or after step (ii).

**23.** A method according to claim 22, wherein at least one of the substrates comprises a flexible material, preferably the flexible material is at least one of textiles, fabrics, cloths, sheet materials, plastics and combinations thereof.

## Patentansprüche

**1.** Erzeugnis, umfassend einen härtbaren Film auf einem Trennsubstrat und/oder Trägersubstrat, wobei der härtbare Film umfasst:

(a) mindestens ein Cyanacrylatmonomer, ausgewählt aus Verbindungen mit der Formel (I):

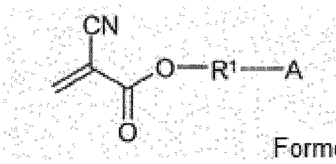

Formel (I)

wobei $R^1$ eine zweiwertige, verbindende Gruppe ist, die 1 bis 10 Kohlenstoffatome umfasst, und A einen

$C_5$-$C_{50}$-Arylrest oder einen $C_2$-$C_{50}$-Heteroarylrest darstellt; und
(b) mindestens ein filmbildendes (Co)polymer.

**2.** Erzeugnis nach Anspruch 1, wobei das Cyanacrylatmonomer ausgewählt ist aus Verbindungen mit der Formel (II),

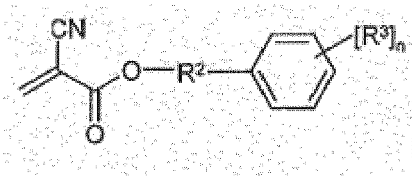

Formel (II)

wobei n 0 bis 5 ist, $R^2$ eine $C_{1-5}$-Alkylengruppe ist und jeder $R^3$, falls vorhanden, unabhängig ausgewählt ist aus $C_1$-$C_{10}$-Alkyl, $C_1$-$C_{10}$-Alkoxy, Fluor, Chlor, Brom, Cyano und Nitro.

**3.** Erzeugnis nach einem der vorhergehenden Ansprüche, wobei das Cyanacrylatmonomer (2-Phenylethyl)-2-cyanacrylat ist.

**4.** Erzeugnis nach einem der vorhergehenden Ansprüche, wobei das Cyanacrylatmonomer in einer Menge von mindestens etwa 15 Gew.-% bezogen auf das Gesamtgewicht des härtbaren Films vorliegt, das Cyanacrylatmonomer vorzugsweise in einer Menge von 20 Gew.-% bis 80 Gew.-% bezogen auf das Gesamtgewicht des härtbaren Films vorliegt.

**5.** Erzeugnis nach einem der vorhergehenden Ansprüche, wobei das filmbildende (Co)polymer ausgewählt ist aus Poly(meth)acrylat(co)polymeren, Polyvinylethern, Naturkautschuken, Polyisoprenen, Polybutadienen, Polyisobutylenen, Polychloroprenen; Butadienacrylnitrilpolymeren, thermoplastischen Elastomeren, Styrol-Isopren-Copolymeren, Styrol-Isopren-Styrol-Blockcopolymeren, Ethylenpropylendienpolymeren, Styrolbutadienpolymeren, Polyalphaolefinen, Silikonen, Ethylen-Vinylacetat-Copolymeren und/oder Kombinationen daraus.

**6.** Erzeugnis nach einem der Ansprüche 1 bis 5, wobei das filmbildende (Co)polymer ein Ethylen-Vinylacetat-Copolymer ist, das Ethylen-Vinylacetat-Copolymer vorzugsweise einen Vinylacetatgehalt von 50 Gew.-% bis 98 Gew.-% bezogen auf das Gesamtgewicht des Ethylen-Vinylacetat-Copolymers aufweist.

**7.** Erzeugnis nach einem der vorhergehenden Ansprüche, wobei das filmbildende (Co)polymer in einer Menge von 20 Gew.-% bis 85 Gew.-% bezogen auf das Gesamtgewicht des härtbaren Films vorliegt.

**8.** Erzeugnis nach einem der vorhergehenden Ansprüche, wobei das Gewichtsverhältnis der Gesamtmenge von Cyanacrylatmonomeren zur Gesamtmenge von filmbildenden (Co)polymeren in dem härtbaren Film von 1:8 bis 8:1 beträgt.

**9.** Erzeugnis nach einem der vorhergehenden Ansprüche, wobei der härtbare Film ferner einen Stabilisator umfasst, der in einer Menge von bis zu 1 Gew.-% bezogen auf das Gesamtgewicht des härtbaren Films vorliegt, vorzugsweise der Stabilisator optional einer aus Hydrochinon, Sulfonsäuren, $BF_3$ oder $SO_2$, Borsäuren, Zinksalzen, Phosphorsäuren, Carbonsäuren oder Kombinationen daraus ist.

**10.** Erzeugnis nach einem der vorhergehenden Ansprüche, wobei der härtbare Film ferner eine Säure, wie etwa Camphersulfonsäure, umfasst.

**11.** Erzeugnis nach einem der vorhergehenden Ansprüche, wobei eine Säure in einer Menge von bis zu 1 Gew.-% bezogen auf das Gesamtgewicht des härtbaren Films vorliegt.

**12.** Erzeugnis nach einem der vorhergehenden Ansprüche, wobei das Trägersubstrat aus polymeren Filmen, Schäumen, Metallfolien, Stoffen und Kombinationen daraus ausgewählt ist.

**13.** Erzeugnis nach einem der vorhergehenden Ansprüche, wobei das Trennsubstrat ein Material auf Papier- oder Kunststoffbasis ist, das optional mit einem Trennmittel beschichtet ist.

**14.** Erzeugnis nach einem der vorhergehenden Ansprüche, wobei das Erzeugnis ein Etikett, ein einseitiges Klebeband,

ein Transferband oder ein doppelseitiges Klebeband ist.

**15.** Erzeugnis nach einem der vorhergehenden Ansprüche, wobei das Härtungsprodukt des härtbaren Films durchsichtig, beispielsweise transparent ist.

**16.** Härtungsprodukt des härtbaren Films nach einem der Ansprüche 1 bis 15.

**17.** Erzeugnis nach einem der Ansprüche 1 bis 15, wobei der härtbare Film durch Aussetzen optional einer der folgenden Bedingungen härtbar ist: Einwirkung von Wärme, Nässe oder Strahlung.

**18.** Erzeugnis nach einem der Ansprüche 1 bis 17, wobei der härtbare Film durch Einwirkung von Temperaturen in einem Bereich von etwa 0 bis 200 °C zwischen 2 und 360 Sekunden lang härtbar ist.

**19.** Erzeugnis nach Anspruch 1 bis 17, wobei der härtbare Film durch Einwirkung von Feuchtigkeit in einem Bereich von etwa 10 bis 100 % zwischen 1 und 24 Stunden lang härtbar ist.

**20.** Verfahren zum Anbringen eines Films auf eine härtbare Oberfläche, die folgenden Schritte umfassend:

(a) Bereitstellen eines Erzeugnisses nach einem der Ansprüche 1 bis 15;
(b) Anbringen des härtbaren Films des Erzeugnisses auf mindestens eine Oberfläche, um eine Anordnung auszubilden,
(c) Aussetzen der Anordnung Bedingungen, die ausreichen, um den härtbaren Film des Erzeugnisses zu härten,

wobei das Trennsubstrat des Erzeugnisses, falls vorhanden, vor und/oder nach Schritt b) entfernt wird.

**21.** Verwenden eines Erzeugnisses nach einem der Ansprüche 1-15 beim Herstellen von optoelektronischen Vorrichtungen.

**22.** Verfahren zum Haften eines ersten Substrats an einem zweiten Substrat, wobei das Verfahren Folgendes umfasst:

(i) Bereitstellen eines Erzeugnisses nach einem der Ansprüche 1 bis 15;
(ii) Befestigen des härtbaren Films des Erzeugnisses an mindestens eines der Substrate;
(iii) Verbinden der Substrate; und
(iv) Härten des Klebstofffilms zwischen den Komponenten, um aneinander zu haften, wobei das Trennsubstrat des Erzeugnisses, falls vorhanden, vor und/oder nach Schritt (ii) entfernt wird.

**23.** Verfahren nach Anspruch 22, wobei mindestens eines der Substrate ein biegsames Material umfasst, vorzugsweise wobei es sich bei dem biegsamen Material um Textilien, Gewebe, Stoffe, bahnförmige Materialien, Kunststoffe und/oder Kombinationen daraus handelt.

## Revendications

**1.** Article comprenant un film durcissable sur un substrat décollable et/ou un substrat de support, dans lequel le film durcissable comprend :

(a) au moins un monomère de cyanoacrylate sélectionné parmi des composés de formule (I)

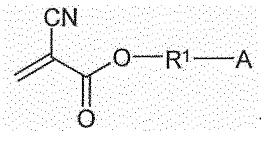
formule (I)

dans laquelle $R^1$ est un groupe de liaison bivalent comprenant 1 à 10 atomes de carbone, et A représente un résidu aryle en $C_5$-$C_{50}$ ou un résidu hétéroaryle en $C_2$-$C_{50}$ ; et
(b) au moins un (co)polymère filmogène.

**2.** Article selon la revendication 1 dans lequel le monomère de cyanoacrylate est sélectionné parmi des composés de formule (II),

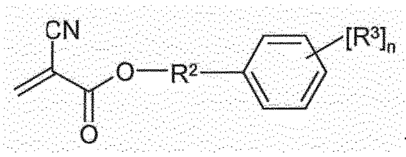
formule (II)

dans laquelle n va de 0 à 5, $R^2$ est un groupe alkylène en $C_{1-5}$, et chaque $R^3$, s'il est présent, est sélectionné, de manière indépendante, entre un alkyle en $C_1$-$C_{10}$, un alkoxy en $C_1$-$C_{10}$, le fluor, le chlore, le brome, un radical cyano et un radical nitro.

**3.** Article selon une quelconque revendication précédente dans lequel le monomère de cyanoacrylate est le (2-phényléthyl) 2-cyanoacrylate.

**4.** Article selon une quelconque revendication précédente dans lequel le monomère de cyanoacrylate est présent dans une proportion d'au moins 15 % en poids environ, par rapport au poids total du film durcissable, et de préférence le monomère de cyanoacrylate est présent dans une proportion de 20 % en poids à 80 % en poids, par rapport au poids total du film durcissable.

**5.** Article selon une quelconque revendication précédente dans lequel le (co)polymère filmogène est sélectionné parmi les (co)polymères de poly(méth)acrylate, éthers polyvinyliques, caoutchoucs naturels, polyisoprènes, polybutadiènes, polyisobutylènes, polychloroprènes ; les polymères butadiène-acrylonitrile, élastomères thermoplastiques, copolymères styrène-isoprène, copolymères à blocs styrène-isoprène-styrène, polymères éthylène-propylène-diène, polymères styrène-butadiène, poly-alpha-oléfines, silicones, copolymères éthylène-acétate de vinyle et/ou des combinaisons de ceux-ci.

**6.** Article selon l'une quelconque des revendications 1 à 5 dans lequel le (co)polymère filmogène est un copolymère éthylène-acétate de vinyle, et de préférence le copolymère éthylène-acétate de vinyle a une teneur en acétate de vinyle de 50 % en poids à 98 % en poids, par rapport au poids total du copolymère éthylène-acétate de vinyle.

**7.** Article selon une quelconque revendication précédente, dans lequel le (co)polymère filmogène est présent dans une proportion de 20 % en poids à 85 % en poids, par rapport au poids total du film durcissable.

**8.** Article selon une quelconque revendication précédente, dans lequel le rapport pondéral entre la quantité totale de monomères de cyanoacrylate et la quantité totale de (co)polymères filmogènes dans le film durcissable est de 1 :8 à 8 :1.

**9.** Article selon une quelconque revendication précédente, dans lequel le film durcissable comprend en outre un stabilisant, qui est présent dans une proportion de 1 % en poids maximum par rapport au poids total du film durcissable, et de préférence le stabilisant est en option un élément parmi une hydroquinone, des acides sulfoniques, $BF_3$ ou $SO_2$ des acides boriques, des sels de zinc, des acides phosphoriques, des acides carboxyliques ou des combinaisons de ceux-ci.

**10.** Article selon une quelconque revendication précédente, dans lequel le film durcissable comprend en outre un acide tel qu'un acide camphresulfonique.

**11.** Article selon une quelconque revendication précédente, dans lequel un acide est présent dans une proportion de 1 % en poids maximum par rapport au poids total du film durcissable.

**12.** Article selon une quelconque revendication précédente, dans lequel le substrat de support est sélectionné parmi des films polymères, mousses, feuilles métalliques, tissus, et des combinaisons de ceux-ci.

**13.** Article selon une quelconque revendication précédente, dans lequel le substrat décollable est un matériau à base de papier ou de plastique, qui est enduit en option d'agent anti-adhérent.

**14.** Article selon une quelconque revendication précédente, dans lequel l'article est une étiquette, un ruban simple face, un ruban de transfert ou un ruban double face.

**15.** Article selon une quelconque revendication précédente, dans lequel le produit durci du film durcissable est translucide, par exemple transparent.

**16.** Produit durci du film durcissable selon l'une quelconque des revendications 1 à 15.

**17.** Article selon l'une quelconque des revendications 1 à 15, dans lequel le film durcissable peut être durci par exposition à l'une des conditions suivantes en option : exposition à la chaleur, à l'humidité ou à des radiations.

**18.** Article selon les revendications 1 à 17 dans lequel le film durcissable peut être durci par exposition à des températures comprises dans une plage allant d'environ 0 à 200 °C pendant 2 à 360 secondes.

**19.** Article selon les revendications 1 à 17 dans lequel le film durcissable peut être durci par exposition à une humidité comprise dans une plage allant d'environ 10 à 100 % pendant 1 à 24 heures.

**20.** Procédé de fixation d'un film à une surface durcissable, comprenant les étapes de :

(a) réalisation d'un article selon l'une quelconque des revendications 1 à 15 ;
(b) fixation du film durcissable de l'article à au moins une surface pour former un ensemble,
(c) exposition de l'ensemble à des conditions suffisantes pour durcir le film durcissable de l'article,

dans lequel le substrat décollable de l'article, s'il est présent, est enlevé avant et/ou après l'étape (b).

**21.** Utilisation d'un article selon l'une quelconque des revendications 1 à 15 dans la fabrication de dispositifs optoélectroniques.

**22.** Procédé permettant de coller un premier substrat à un deuxième substrat, ledit procédé comprenant :

(i) la réalisation d'un article selon l'une quelconque des revendications 1 à 15 ;
(ii) la fixation du film durcissable de l'article à au moins un des substrats ;
(iii) l'accouplement des substrats ; et
(iv) le durcissement du film adhésif entre les composants à coller l'un à l'autre,

dans lequel le substrat décollable de l'article, s'il est présent, est enlevé avant et/ou après l'étape (ii).

**23.** Procédé selon la revendication 22 dans lequel au moins un des substrats comprend un matériau flexible, et de préférence le matériau flexible est au moins un élément parmi des textiles, des toiles, des tissus, des matériaux laminés, des plastiques et des combinaisons de ceux-ci.

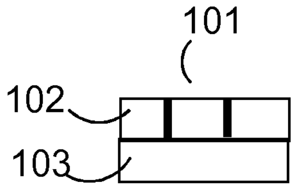


Figure 1

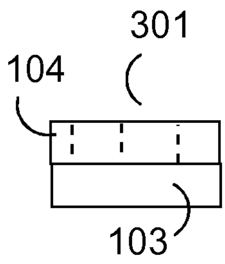


Figure 3

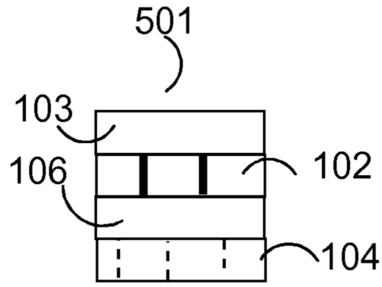


Figure 5

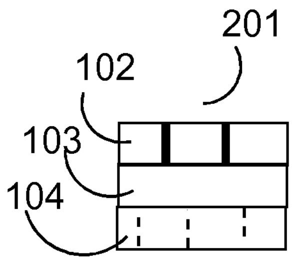


Figure 2

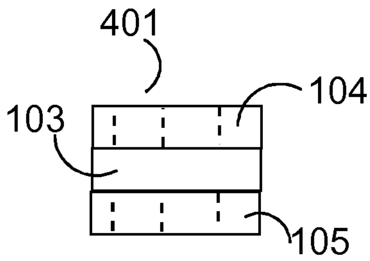


Figure 4

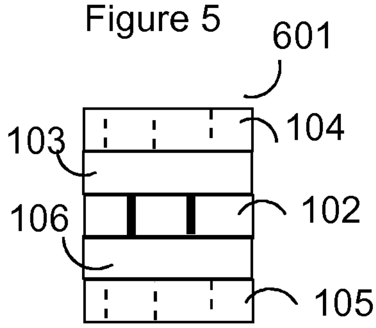


Figure 6

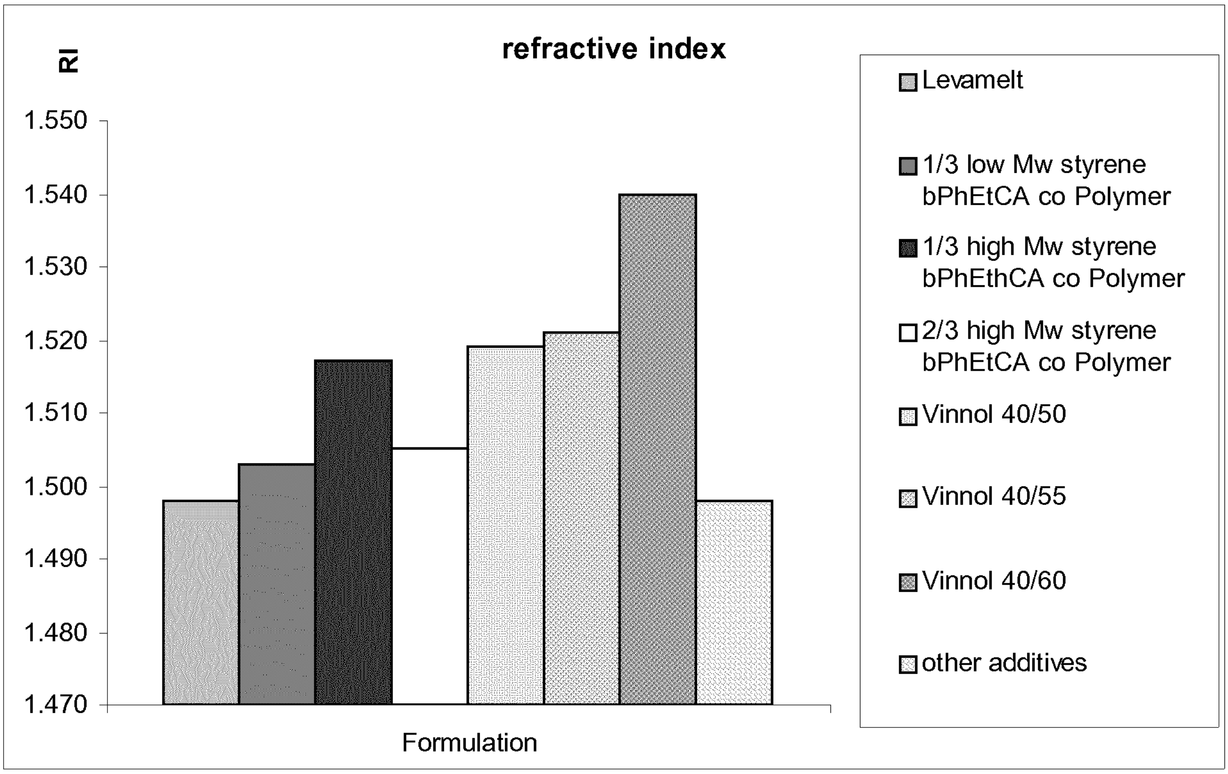


Figure 7: Refractive index of the curable film for SATT applications.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- US 20120082818 A
- US 20120115405 A
- WO 2010069800 A, Tesa Se
- EP 2283100 B1, Tesa Se
- WO 2010023229 A
- EP 0470722 A
- JP 06192202 A


### Non-patent literature cited in the description


- **GUSEVA et al.** *Russian Chemical Bulletin,* vol. 43 (4), 595-598
- **KHRUSTALEV et al.** *Russian Chemical Bulletin,* vol. 45 (9), 2172-2176
- **VAN NOTSTRAND.** Handbook of Pressure Sensitive Adhesive Technology. Donata Satas, 1989